(19) Europäisches Patentamt
European Patent Office
Office européen des brevets

(11) EP 1 856 188 B1

(12) **EUROPÄISCHE PATENTSCHRIFT**

(45) Veröffentlichungstag und Bekanntmachung des Hinweises auf die Patenterteilung:
**28.12.2022 Patentblatt 2022/52**

(21) Anmeldenummer: **06742514.0**

(22) Anmeldetag: **07.03.2006**

(51) Internationale Patentklassifikation (IPC):
***C08G 75/20*** *(2016.01)* ***C08L 81/06*** *(2006.01)*
***C08J 5/22*** *(2006.01)*

(52) Gemeinsame Patentklassifikation (CPC):
(C-Sets verfügbar)
**C08J 5/2256; C08L 81/06;** C08J 2381/06;
Y02E 60/50 (Forts.)

(86) Internationale Anmeldenummer:
**PCT/EP2006/002087**

(87) Internationale Veröffentlichungsnummer:
**WO 2006/094767 (14.09.2006 Gazette 2006/37)**

(54) **SULFONIERTE POLY(ARYLENE) ALS HYDROLYTISCH UND THERMO-OXIDATIV STABILE POLYMERE**

SULFONATED POLY(ARYLENES) AS HYDROLYTICALLY AND THERMO-OXIDATIVELY STABLE POLYMERS

POLY(ARYLENES) SULFONES UTILISES COMME POLYMERES STABLES A L'HYDROLYSE ET PAR THERMO-OXYDATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.03.2005 DE 102005010411**

(43) Veröffentlichungstag der Anmeldung:
**21.11.2007 Patentblatt 2007/47**

(73) Patentinhaber: **Max-Planck-Gesellschaft zur Förderung der Wissenschaften e.V.**
**80539 München (DE)**

(72) Erfinder:
- **SCHUSTER, Michael**
  **66299 Friedrichsthal (DE)**
- **KREUER, Klaus-Dieter**
  **71034 Böblingen (DE)**
- **THALBITZER, Andersen, Henrik**
  **2300 Copenhagen S (DK)**
- **MAIER, Joachim**
  **75446 Wiernsheim (DE)**

(74) Vertreter: **v. Bezold & Partner Patentanwälte - PartG mbB**
**Ridlerstraße 57**
**80339 München (DE)**

(56) Entgegenhaltungen:
**EP-A- 1 479 714 DE-A1- 1 938 806**

- **DANG T D ET AL: "SYNTHESIS AND CHARACTERIZATION OF HIGHLY SUFLONATED POLYARYLENETHIOETHERSULFONES FOR FUEL CELLS APPLICATIONS" PAPERS PRESENTED AT THE MEETING - AMERICAN CHEMICAL SOCIETY. DIVISION OF POLYMER CHEMISTRY, Bd. 45, Nr. 1, 2004, Seiten 22-23, XP009044095 ISSN: 0032-3934**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 81/06, C08L 2666/02**

## Beschreibung

### Hintergrund der Erfindung

Die Anwendbarkeit von ionenleitenden Materialien für elektrochemische Anwendungen, wie z.B. Brennstoffzellen, Dialysezellen, Elektrolysezellen und elektrochemische Trennverfahren, wird durch deren hydrolytische und thermo-oxidative Stabilitätsbereiche begrenzt, welche häufig in einem Bereich unter 100 °C liegen. Für eine Reihe von Anwendungen, wie z.B. im Falle der Brennstoffzelle, ist es jedoch vorteilhaft, zu höheren Arbeitstemperaturen (ca. 100 - 200 °C) zu gelangen. Zum einen ist eine geringere Kühlung der Brennstoffzelle erforderlich, zum anderen erhöht sich die elektrische Leistung der Zelle bei höheren Temperaturen als Folge beschleunigter Elektrodenreaktionen und der geringeren Elektrodenvergiftung (z.B. durch CO aus einem Reformer).

Höhere Temperaturen, insbesondere in einer Wasser- und Sauerstoffenthaltenden Umgebung, erfordern chemisch, thermisch, thermo-oxidativ und hydrolytisch stabile Materialien.

Derzeit werden z.B. im Bereich der Brennstoffzellen-Technologie im Wesentlichen perfluorierte sulfonierte Polymere (z.B. Nafion®) eingesetzt, welche im Allgemeinen eine hohe chemische, thermische und thermo-oxidative Stabilität besitzen, jedoch teuer und aufwendig herzustellen und zu entsorgen sind. Eine kostengünstige Alternative zu perfluorierten Polymeren bieten Membranmaterialien auf Basis von sulfonierten Poly(arylenen), wie z.B. Poly(aryleneetherketonen), Poly(arylenethersulfonen) und Poly(arylenthioether sulfonen), welche derzeit für Brennstoffzellen getestet werden. (Allgemeine Referenzen zum Stand der Technik von Brennstoffzellen und Membranmaterialien dafür sowie zur Synthese der oben genannten und weiterer Poly(arylene) sind in der Literaturübersicht auf Seite 78-81 des Anmeldungstexts angegeben).

Strukturell ist Poly(arylenetherketonen), Poly(arylenethersulfonen) und Poly(arylenthioethersulfonen) gemeinsam, dass an den sulfonierten aromatischen Ring mindestens eine Elektronen-Donor-Brückengruppe (z.B. Ether -0- oder Thio -S-) gebunden ist. Da die hydrolytische Stabilität der Sulfonsäuregruppe am aromatischen Ring durch Elektronen-Donor-Substituenten (z.B. Ether -0- oder Thio -S-) verschlechtert wird, neigen diese Polymere zu Abbaureaktionen der Sulfonsäuregruppe bei höheren Temperaturen. Darüber hinaus sind insbesondere Etherbrücken gegenüber oxidativen Angriffen (z.B. Peroxid-Radikale, Fentons-Test) nicht ausreichend resistent.

Der vorliegenden Erfindung liegt daher die Aufgabe zu Grunde, neue hydrolytisch und thermo-oxidativ stabile Polymere bereitzustellen, welche insbesondere auf den Gebieten der Membran- und Brennstoffzellen-Technologien vorteilhaft einsetzbar sind und kostengünstig hergestellt werden können. Eine damit verbundene Aufgabe ist die Bereitstellung eines neuen Verfahrens zur Herstellung solcher Polymere.

Diese Aufgaben werden erfindungsgemäß gelöst durch die Bereitstellung der sulfonierten Poly(arylene) nach Anspruch 1 und das Verfahren zur Herstellung dieser Poly(arylene) nach Anspruch 13. Spezielle und bevorzugte Ausführungsformen der Erfindung sind Gegenstand der weiteren Ansprüche.

### Beschreibung der Erfindung

Die vorliegende Erfindung betrifft neue sulfonierte Poly(arylene) wie in Anspruch 1 definiert, welche das Strukturelement $-X-Ar(SO_3M)_n-Y-$ aufweisen, worin der aromatische Ring, der die Sulfonsäure-Gruppe trägt, ausschließlich von Elektronen-Akzeptor-Brückengruppen (stark deaktivierenden Gruppen, z.B. Sulfonen $-SO_2-$ oder Ketonen -CO-) X und Y sowie gegebenenfalls weiteren Nicht-Elektronen-Donor-Substituenten substituiert ist, sowie deren Synthese und Verwendung.

Im Vergleich zu mit Elektronen-Donor-Gruppen (aktivierenden Gruppen, z.B. Sulfid -S- oder Ether -O-) substituierten oder Elektronen-Donor- und Elektronen-Akzeptor-substituierten Aromaten sollte die hydrolytische Stabilität der Sulfonsäure an einem Elektronen-Akzeptor-substituierten Aromaten, der keinen Elektronen-Donor-Substituenten aufweist, deutlich erhöht sein. Dies ergibt sich aus theoretischen Überlegungen zum Mechanismus der Hydrolyse von sulfonierten Aromaten, bzw. der umgekehrten Reaktion, der elektrophilen aromatischen Sulfonierung. Diese Reaktion ist im Allgemeinen reversibel, wobei der geschwindigkeitsbestimmende Schritt die Bildung des $\sigma$-Komplexes als Zwischenstufe der elektrophilen aromatischen Substitution ist. Bei erhöhter Temperatur und hoher Wasseraktivität wird die Sulfonsäuregruppe relativ einfach vom Aromaten wieder abgespalten (Umkehrung der Sulfonierung), welches die Anwendbarkeit sulfonierter Poly(arylene) auf niedrige Temperaturen begrenzt. Alle Substituenten, welche die Zwischenstufe der elektrophilen aromatischen Substitution ($\sigma$-Komplex) destabilisieren, wie z.B. deaktivierende Elektronen-Akzeptor-Substituenten in ortho- oder para-Position zur Sulfonsäure, erschweren die Rückreaktion (Hydrolyse) und stabilisieren damit die Sulfonsäuregruppe am Aromat. Damit wird jedoch auch die elektrophile Sulfonierung von Elektronen-Akzeptor substituierten Aromaten ohne zusätzlichen Elektronen-Donor-Substituenten äußerst erschwert, bzw. praktisch unmöglich.

Die Lösung dieses Problems gelang erfindungsgemäß mit einem Verfahren, wobei zunächst ein sulfoniertes Polymer hergestellt wird, bei welchem der mit einer Sulfonsäuregruppe substituierte aromatische Ring noch mindestens

einen Elektronen-Donor-Substituenten trägt. Erst im Anschluss wird der Elektronen-Donor-Substituent chemisch in einen Elektronen-Akzeptor-Substituenten umgewandelt. Diese Umwandlung kann z.B. durch Oxidation einer Sulfidgruppe -S- (Elektronen-Donor) zu einer Sulfongruppe $-SO_2-$(Elektronen-Akzeptor) geschehen.

Elektronen-Akzeptor-Gruppen, wie hier verwendet, sind elektronenziehende Gruppen, welche als Substituenten die Elektronendichte an einem aromatischen Ring erniedrigen (auch als deaktivierende Gruppen bezeichnet). Elektronenziehende Gruppen besitzen einen -M und/oder einen -I-Effekt.

Der Resonanz-Effekt (M-Effekt, Mesomerieeffekt) wirkt im Allgemeinen nur, wenn die Gruppe direkt an ein ungesättigtes (z.B. aromatisches) System gebunden ist. Er wirkt über $\pi$-Elektronen, im Gegensatz zum Feld-Effekt (I-Effekt, induktiver Effekt), welcher über den Raum, über Solvenz-Moleküle, oder vorzugsweise über $\sigma$-Bindungen eines Systems wirkt.

-M-Effekt (negativer Resonanz-Effekt): Eine Gruppe besitzt einen - M-Effekt, wenn die Elektronendichte auf dieser Gruppe größer als erwartet ist, und die Elektronendichte auf dem ungesättigten System kleiner als erwartet ist. Einige, nicht-beschränkende Beispiele für Brückengruppen mit -M-Effekt sind $-SO_2-$, $-SO_2O-$, -CO-, -COO-, -CONH-, -CONR- und -POR-. Solche Gruppen sind erfindungsgemäß bevorzugt.

Elektronen-Donor-Gruppen, wie hier verwendet, sind demgemäß Gruppen, welche als Substituenten die Elektronendichte an einem aromatischen Ring erhöhen (auch als aktivierende Gruppen bezeichnet). Elektronen-Donor-Gruppen besitzen einen +M- und/oder +I-Effekt. Beispiele für solche Brückengruppen sind Ether -0- und Sulfide (Thioether) -S-.

Die erfindungsgemäßen sulfonierten Poly(arylene) enthalten ein oder mehrere Strukturelement(e) der allgemeinen Formel $-X-Ar(SO_3M)_n-Y-$ , wobei X und Y, gleich oder verschieden voneinander, jeweils eine Elektronen-Akzeptor-Gruppe bedeuten, Ar ein aromatisches oder heteroaromatisches Ringsystem mit 5-18 Ringatomen darstellt, wobei das aromatische oder heteroaromatische Ringsystem neben der Sulfonsäuregruppe und den Substituenten X und Y noch weitere Substituenten aufweisen kann, die keine Elektronen-Donor-Gruppen sind, M ein einwertiges Kation darstellt und n eine ganze Zahl von 1 bis 4 bedeutet, und wobei X, Y, Ar, M und n, unabhängig voneinander, in verschiedenen Strukturelementen gleich oder verschieden sein können,

und sind dadurch gekennzeichnet, dass sie aus wiederkehrenden Einheiten der Formeln $-[-Ar_1(SO_3M)_n-X-]-$ und $-[-Ar_2(SO_3M)_n-Y-]-$, wobei X und Y, gleich oder verschieden voneinander, jeweils eine Elektronen-Akzeptor-Gruppe bedeuten, $Ar_1$ und $Ar_2$, gleich oder verschieden voneinander, ein aromatisches oder hetero-aromatisches Ringsystem Ar mit 5-18 Ringatomen wie oben definiert darstellen, M und n wie oben definiert sind, und wobei X, Y, $Ar_1$, $Ar_2$, M und n, unabhängig voneinander, in verschiedenen Strukturelementen gleich oder verschieden sein können, und einer oder mehreren Einheiten der Formel $-[-Ar_3-Z-]-$ bestehen, wobei Z eine Elektronen-Donor- oder Elektronen-Akzeptor-Gruppe oder keines von beiden sein kann, $Ar_3$ ein aromatisches oder heteroaromatisches Ringsystem mit 5-18 Ringatomen ohne $SO_3M$-Substituenten darstellt und die Gruppen $Ar_3$ und Z in verschiedenen Einheiten $-[-Ar_3-Z-]-$ gleich oder verschieden sein können, mit der Maßgabe, dass die Gruppe Z nur dann an ein sulfoniertes aromatisches oder heteroaromatisches Ringsystem der Formel $Ar(SO_3M)_n$ gebunden sein kann, wenn Z keinen Elektronen-Donor darstellt, und dadurch, dass das sulfonierte Poly(arylen) ein Molekulargewicht im Bereich von 10.000 bis 1.000.000 aufweist.

Die Einheiten $-[-Ar_1(SO_3M)_n-X-]-$ bzw. $-[-Ar_2(SO_3M)_n-Y-]-$ können gleich sein oder sich in der Art des aromatischen Rings und/oder im Substitutionsgrad und/oder in den Substitutionspositionen unterscheiden.

Die Brückengruppen X und Y können an einem aromatischen Ring in para-, meta- und ortho-Stellung vorliegen, wobei die para-Stellung in der Regel bevorzugt ist. Geeignete, nicht-beschränkende Beispiele für die Elektronen-Akzeptor-Brücken-gruppen X und Y sind $-SO_2-$, -SO-, $-SO_2O-$, -CO-, -COO-, -CONH-, -CONR- und -POR-, wobei $-SO_2-$ und -CO- bevorzugt sind und $-SO_2-$ ganz besonders bevorzugt ist.

Spezielle, nicht beschränkende Beispiele für geeignete aromatische bzw. heteroaromatische Ringsysteme sind Phenylen, Naphthylen, Anthracen, Phenanthren, Biphenylen, Furan, Thiophen, Pyrrol, Thiazol, Triazol, Pyridin, Imidazol und Benzimidazol.

Der aromatische bzw. heteroaromatische Ring kann mit ein bis vier Sulfonsäuregruppierungen $-SO_3M$ substituiert sein, d.h. in den obigen Formeln ist n = 1-4, wobei für Ar = Phenylen n vorzugsweise 1 oder 2 ist. Das Gegenion M der Sulfonatgruppe ist entweder ein Proton, d.h. es liegt die Sulfonsäure vor, oder ein übliches einwertiges Kation. Typische Beispiele für ein solches Kation sind Metallionen wie $Li^+$, $Na^+$, $K^+$, sowie $NR_4^+$, $PR_4^+$, wobei R einen organischen Rest, vorzugsweise Alkyl, darstellt.

Die aromatischen bzw. heteroaromatischen Ringe können neben der Sulfonsäuregruppe und den Brückensubstituenten X und Y auch noch weitere Nicht-Elektronendonor-Substituenten enthalten. Einige spezielle, nicht-beschränkende Beispiele solcher Substituenten sind Halogen, z.B. F, Cl, Br, oder unsubstituierte oder substituierte Alkylgruppen, z.B. $-CH_3$ oder $-CF_3$.

In einer bevorzugten Ausführungsform ist Ar Phenylen und das sulfonierte Poly(arylen) enthält eines oder

mehrere der folgenden Strukturelemente I, II oder III

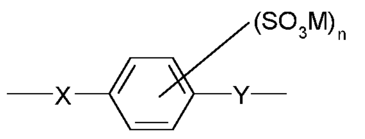

I

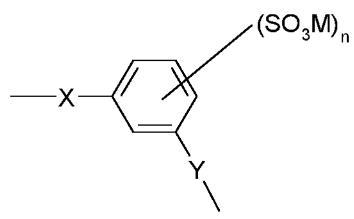

II

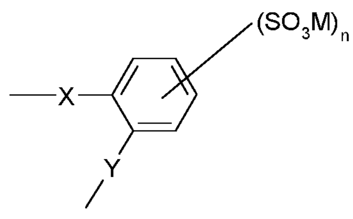

III

worin X und Y, wie oben definiert, gleich oder verschieden sind.

Einige geeignete, nicht-beschränkende Beispiele für die Brückengruppe Z sind $-SO_2-$, -SO-, $SO_2O-$, -CO-, -COO-, -CONH-, -CONR-, -POR-, -S-, -0- und Alkylen. Weitere geeignete Gruppen sind für den Fachmann auf dem Gebiet der Polymerchemie unschwer ersichtlich.

Spezielle, nicht beschränkende Beispiele für geeignete aromatische bzw. heteroaromatische Ringsysteme $Ar_3$ sind Phenylen, Naphthylen, Anthracen, Phenanthren, Biphenylen, Furan, Thiophen, Pyrrol, Thiazol, Triazol, Pyridin, Imidazol, Benzimidazol etc. Diese Ringsysteme können neben den Brückensubstituenten gewünschtenfalls noch weitere Substituenten enthalten.

Die erfindungsgemäßen reinen sulfonierten Poly(arylene) können auch mit einem oder mehreren herkömmlichen Polymeren in bekannter Weise gemischt werden, um eine Polymermischung zu erhalten, die günstige Eigenschaften ihrer Einzelkomponenten in sich vereinigt. Beispielsweise können die erfindungsgemäßen Polymere auf Basis eines sulfonierten Poly(arylens) mit "Weichmacherkomponenten" gemischt werden, um dem resultierenden Mischpolymer eine größere Flexibilität und/oder Formbarkeit zu verleihen. Geeignete Polymere sind dem Fachmann bekannt und können beispielsweise aus der Gruppe aus PBI (Polybenzimidazol), PTFE (Polytetrafluorethylen), PVDF (Polyvinylidenfluorid), PSU (Polysulfonen), PES (Polyethersulfonen), PEK (Polyetherketonen), PPO (Polyphenylenoxiden), PPS (Polyphenylensulfiden), PA (Polyimiden), PC (Polycarbonaten), PMMA (Polymethylmethacrylaten), Polyphosphazenen ausgewählt sein.

In einer speziellen Ausführungsform können die erfindungsgemäßen reinen sulfonierten Poly(arylene) oder Polymermischungen in eine inerte poröse Matrix, z.B. eine organische (poröses PE, PP, PVDF, PTFE, u.a.) oder anorganische Matrix (poröses Bornitrid, Siliciumdioxid u.a.), eingebunden werden.

In einer weiteren Ausführungsform können die erfindungsgemäßen reinen sulfonierten Poly(arylene) oder Polymermischungen mit Fasermaterialien, z.B. Glasfasern, keramischen Fasern, Textilfasern, Kohlenstofffasern, mikroporösem Polypropylen oder Polytetrafluorethylen u.a., verstärkt werden.

Darüber hinaus können die erfindungsgemäßen reinen sulfonierten Poly(arylene) oder die obigen Polymermischungen mit aktiven oder inaktiven Füllstoffen, einschließlich, jedoch nicht beschränkt auf, $TiO_2$-, $ZrO_2$- oder $SiO_2$-Partikel, Zirkonphosphate und -phosphonate, Wolfram- oder Molybdänsäure, u.a. kombiniert werden, um entsprechende Composit-Materialien zu bilden. Auch die Kombination mit anderen herkömmlichen Additiven ist ohne weiteres möglich.

Die erfindungsgemäßen sulfonierten Poly(arylene) haben Molekulargewichte im Bereich von 10000 bis 1000000, bevorzugter im Bereich von 10000 bis 100000.

Die Synthese der erfindungsgemäßen sulfonierten Poly(arylene) erfolgt über eine mehrstufige Reaktion, wobei zunächst ein sulfoniertes Polymer hergestellt wird, welches noch mindestens einen Elektronen-Donor-Substituenten am sulfonierten aromatischen Ring trägt, der anschließend in einen Elektronenakzeptor-Substituenten überführt wird.

In einer speziellen Ausführungsform wird im ersten Schritt ein bereits vorliegendes, Elektronen-Donor-substituiertes Polyarylen, das nach herkömmlichen Verfahren hergestellt oder im Handel erhältlich ist, in an sich bekannter Weise, z.B. Umsetzung mit $SO_3$ und/oder $H_2SO_4$, sulfoniert (analog zu Referenzbeispiel 2).

Häufiger beinhaltet die Herstellung des sulfonierten Polymers jedoch eine Polykondensation von bereits sulfonierten Monomeren. Auf diese Weise lassen sich Zusammensetzung und Eigenschaften des resultierenden sulfonierten Polyarylens nach Wunsch einstellen.

Allgemein umfasst ein solches Herstellungsverfahren die Schritte

a) Herstellung eines sulfonierten Arylmonomers $F_1$-AS-$F_2$, wobei AS ein Arylsystem aus einem oder mehreren aromatischen Ringen bedeutet, wobei mindestens ein aromatischer Ring mit einer Sulfonsäuregruppe substituiert ist, und welches Arylsystem funktionelle Gruppen $F_1$ und $F_2$ aufweist, die gleich oder verschieden voneinander sein können und eine Kondensationsreaktion eingehen können, oder mehrerer verschiedener solcher Arylmonomere;

b) Polykondensation des sulfonierten Arylmonomers bzw. der sulfonierten Arylmonomere von Schritt a) unter Bildung eines sulfonierten Poly(arylens), welches mindestens einen Elektronen- Donor-Substituenten an den sulfonierten aromatischen Ringen aufweist;

c) Überführung des mindestens einen Elektronen-Donor-Substituenten in einen Elektronen-Akzeptor-Substituenten unter Bildung eines sulfonierten Poly(arylens), das ausschließlich Elektronen Akzeptor-Substituenten an den sulfonierten aromatischen Ringen aufweist.

Bei einer Variante dieses Verfahrens sind an der Polykondensation neben einem oder mehreren sulfonierten Arylmonomeren $F_1$-AS-$F_2$ wie oben definiert noch ein oder mehrere Arylmonomere $F_1$-ANS-$F_2$, wobei ANS ein Arylsystem aus einem oder mehreren aromatischen Ringen, die nicht mit einer Sulfonsäuregruppe substituiert sind, bedeutet, und welches Arylsystem funktionelle Gruppen $F_1$ und $F_2$ wie oben definiert aufweist, die gleich oder verschieden voneinander sein können, beteiligt. Dabei wird ein teilweise sulfoniertes Poly(arylen) gebildet, welches mindestens einen Elektronen-Donor-Substituenten an den sulfonierten aromatischen Ringen aufweist, und der mindestens eine Elektronen-Donor-Substituent wird anschließend in einen Elektronen-Akzeptor-Substituenten überführt, wobei ein teilweise sulfoniertes Poly(arylen) gebildet wird, das ausschließlich Elektronen Akzeptor-Substituenten an den sulfonierten aromatischen Ringen aufweist.

In einer spezielleren Ausführungsform beinhaltet die Herstellung eines sulfonierten Poly(arylensulfons) die folgenden Schritte:

a) Herstellung eines sulfonierten Arylmonomers $F_1$-AS-$F_2$, welches funktionelle Gruppen $F_1$ und $F_2$ aufweist, die gleich oder verschieden voneinander sein können und in einer Kondensationsreaktion mit einer Sulfidgruppierung reagieren können, oder mehrere solcher Arylmonomere wie oben definiert;

b) Polykondensation des sulfonierten Arylmonomers bzw. der sulfonierten Arylmonomere von Schritt a) mit einem Aryldisulfid oder Alkalisulfid unter Bildung eines sulfonierten Poly(arylensulfidsulfons);

c) Oxidation des sulfonierten Poly(arylensulfidsulfons) von Schritt b) zu einem sulfonierten Poly(arylensulfon).

Vorzugsweise sind die funktionellen Gruppen $F_1$ und $F_2$ der Arylmonomere, gleich oder verschieden, wieder aus der Gruppe, bestehend aus Fluor, Chlor, Brom oder Iod, ausgewählt

In einer Ausführungsform des erfindungsgemäßen Verfahrens weisen die sulfonierten Arylmonomere die Strukturformel $F_1$-$Ar_1$-$SO_2$-$Ar_2$-$F_2$ auf, d.h. AS = $Ar_1$-$SO_2$-$Ar_2$-, wobei $Ar_1$ und $Ar_2$ gleich oder verschieden sein können und jeweils ein aromatisches oder heteroaromatisches Ringsystem mit 5-18 Ringatomen darstellen, mit der Maßgabe, dass bei mindestens einem eingesetzten Arylmonomer $Ar_1$ und/oder $Ar_2$ durch mindestens eine $SO_3M$-Gruppe, wobei M wie oben definiert ist, substituiert ist bzw. sind.

Das folgende Reaktionsschema I zeigt die prinzipiellen Schritte eines Verfahrens zur Herstellung des homopolymeren Poly(sulfonsäure-1,4-phenylensulfons), welches kein sulfoniertes Poly(arylen) gemäß der vorliegenden Erfindung darstellt (detaillierte Beschreibung in Beispiel 1 und den Referenzbeispielen 1 und 2).

Reaktionsschema I

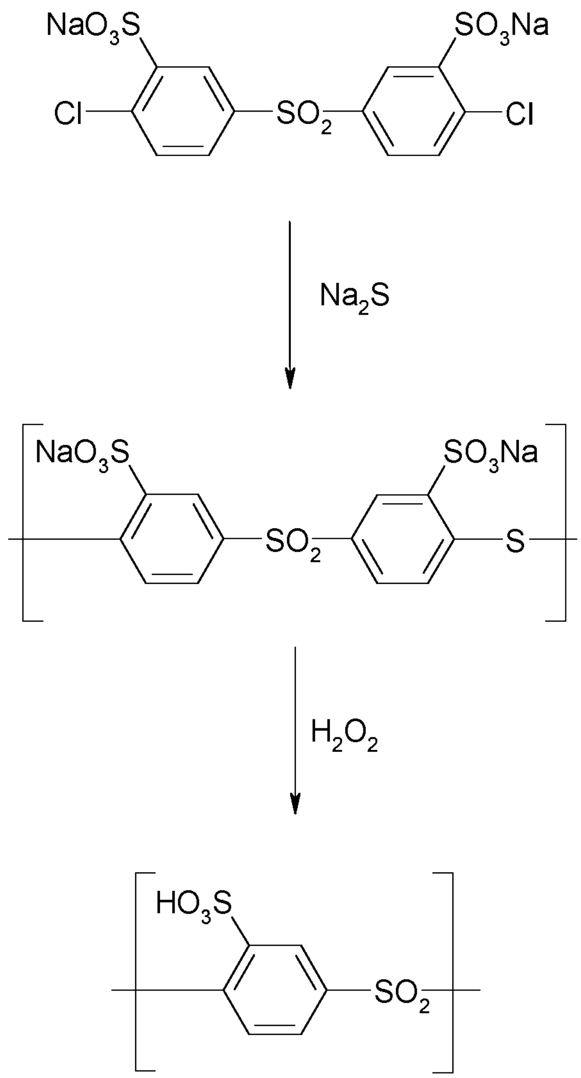


Wie bereits oben ausgeführt, können beim erfindungsgemäßen Verfahren zwei oder mehr verschiedene Aryl(co)monomere hergestellt und einer Co-Polykondensation und anschließenden Oxidation unterworfen werden. Das erfindungsgemäße Verfahren ist dadurch gekennzeichnet, dass bei mindestens einem der Aryl(co)monomere die Reste $Ar_1$ und/oder $Ar_2$ durch mindestens eine $SO_3M$-Gruppe, wobei M wie oben definiert ist, substituiert sind und bei mindestens einem anderen Arylmonomer die aromatischen Reste $Ar_3$ nicht mit einer $SO_3M$-Gruppe substituiert sind.

Vorzugsweise sind die funktionellen Gruppen $F_1$ und $F_2$ der Arylmonomere, gleich oder verschieden, wieder aus der Gruppe, bestehend aus Fluor, Chlor, Brom oder lod, ausgewählt.

Das folgende Reaktionsschema II zeigt die prinzipiellen Schritte zur Herstellung eines copolymeren sulfonierten Poly(arylensulfons) unter Verwendung der Ausgangsmonomere Dinatrium-3,3'-disulfonat-4,4'-difluorodiphenylsulfon und 4,4'-Difluorodiphenylsulfon (Beispiel 2). Durch Vorgabe des Verhältnisses der beiden Ausgangsmonomeren lässt sich die Zusammensetzung des resultierenden Polymers einstellen. Im genannten Reaktionsschema II und in den Schemata der Beispiele 2-7 ist das Reaktionsprodukt der Polykondensation aus Gründen der Übersichtlichkeit als BlockCopolymer der beiden verschiedenen Ausgangsmonomere dargestellt. Die vorliegende Erfindung umfasst jedoch gleichermaßen oder sogar bevorzugt auch die entsprechenden statistischen Copolymere, welche auf die in Beispiel 2 beschriebene Weise herstellbar sind. Weitere erfindungsgemäße statistische oder Block-Copolymere lassen sich unschwer in analoger Weise herstellen (siehe Beispiele 3-7).

Bevorzugte Lösungsmittel für die Polymerisationsreaktion bzw. Copolymerisationsreaktion sind aprotische, polare, hochsiedende Lösungsmittel, wie 1-Methyl-2-pyrrolidon(NMP), Dimethylsulfoxid (DMSO), Dimethylformamid (DMF), Dimethylacetamid (DMAc), Sulfolan, Diphenylsulfon, 1,3-Dimethyl-2-imidazolidinon.

Die Reaktionstemperatur beträgt typischerweise 100 - 250°C, bevorzugt 140 - 200 °C.

Die Reaktion mit Alkalisulfid (z.B. Natriumsulfid) erfolgt in der Regel in Gegenwart von Zusätzen wie Alkalimetall-Carboxylaten (z.B. Natriumacetat, Lithiumacetat), Alkalimetall-Carbonaten (z.B. Lithiumcarbonat), Alkalimetall-Sulfonaten, Lithiumborat, Lithiumchlorid.

Das Alkalisulfid (z.B. Natriumsulfid) kann auch als Hydrat eingesetzt werden (z.B. $Na_2S \cdot 9\ H_2O$).

Reaktionsschema II:

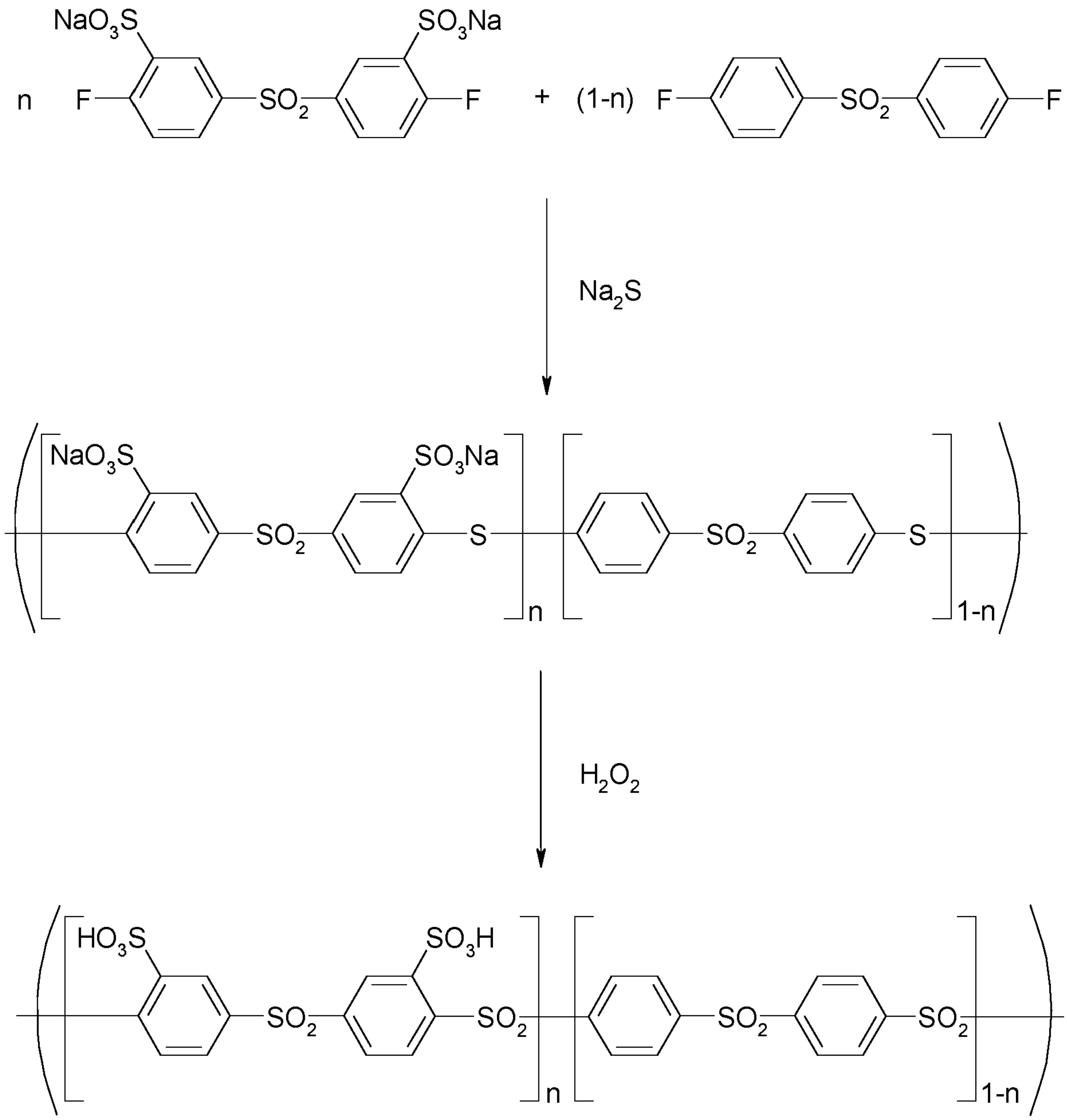


Derartige Copolymere unterschiedlicher Zusammensetzung weisen auch unterschiedliche Ionenaustauschkapazitäten auf. Das oben beschriebene Verfahren bietet die Möglichkeit, durch geeignete Reaktionsführung unter Verwendung bestimmter Ausgangsmonomere und bestimmter Monomerverhältnisse gezielt Copolymere mit einstellbaren variablen Ionenaustauschkapazitäten (IEC = ion exchange capacity [mequiv/g], EW = equivalent weight [g/equiv]) herzustellen.

Für die gemäß bzw. analog dem obigen Schema hergestellten beispielhaften Copolymere sind die Berechnungsformeln in den jeweiligen Beispielen angegeben. Für andere erfindungsgemäße Copolymere lassen sich entsprechende Formeln unschwer empirisch ermitteln.

Bei Verwendung der neuen Membranmaterialien ist in jedem Fall eine erheblich höhere hydrolytische sowie thermo-oxidative Stabilität zu erwarten.

Die Charakterisierung der erfindungsgemäßen sulfonierten Poly(arylensulfone) kann auf verschiedene Weise erfolgen, z.B. durch Elementaranalyse, NMR, Löslichkeiten, GPC, MALDI-TOF, DSC, Röntgen, IEC durch Titration, Dichte, IR, Quellung in Wasser und Methanol, Wasserabsorptions-Isotherme), Untersuchungen über Wasserdiffusion und elektroosmotische Mitführung, Leitfähigkeitsmessungen insbesondere bei höheren Temperaturen unter Befeuchtung, Untersuchungen der Wasseraufnahme und der hydrolytischen Stabilität (TGA unter 1 atm Wasserdampf) und thermo-oxidativer Stabilität (TGA unter Sauerstoff-Atmosphäre z. B. 80 % $N_2$ und 20 % $O_2$). Einige Ergebnisse der letzteren Untersuchungen mit erfindungsgemäßen Polymeren sowie verschiedenen Referenzpolymeren sind in den Figuren 1-4 dargestellt. Weitere Ergebnisse von Untersuchungen, bei denen die Eigenschaften der erfindungsgemäßen Polymere sowie einiger Referenzpolymere eingehender studiert und mit denen von literaturbekannten sulfonierten Poly(arylenethersulfonen) und sulfonierten Poly(arylensulfidsulfonen) verglichen wurden, sind in den Figuren 5-11 dargestellt.

## Kurzbeschreibung der Figuren

**Fig. 1** zeigt die Protonenleitfähigkeit über 100°C von Poly(sulfonsäure-1,4-phenylensulfon) im Vergleich zu der von Nafion 117, gemessen unter Wasseratmosphäre ($p(H_2O) = 10^5$ Pa).

**Fig. 2A** zeigt die Wasserabsorption von Nafion 117 unter einer Wasseratmosphäre ($p(H_2O) = 10^5$ Pa).

**Fig. 2B** zeigt die Wasserabsorption von Poly(sulfonsäure-1,4-phenylensulfon) unter einer Wasseratmosphäre ($p(H_2O) = 10^5$ Pa).

**Fig. 3A** zeigt die Wasserabsorption von sulfoniertem Poly(1,4-phenylen-sulfon-1,4-phenylen-sulfid-1,3-phenylensulfid) unter einer Wasseratmosphäre ($p(H_2O) = 10^5$ Pa).

**Fig. 3B** zeigt die Wasserabsorption von sulfoniertem Poly(1,4-phenylen-sulfon-1,4-phenylen-sulfid) unter einer Wasseratmosphäre ($p(H_2O) = 10^5$ Pa) .

**Fig. 4** zeigt die höhere thermo-oxidative Stabilität eines sulfonierten Poly(arylensulfons) (S-PS 220) im Vergleich zu dem entsprechenden sulfonierten Poly(arylensulfidsulfon) durch thermogravimetrische Messungen in sauerstoffhaltiger Atmosphäre (20 % $O_2$ und 80 % $N_2$).

**Fig. 5A** zeigt die höhere thermo-oxidative Stabilität eines sulfonierten Poly(arylensulfons) (sPS-430, n = 0.8, Beispiel 4) im Vergleich zu einem sulfonierten Poly(arylensulfidsulfons) (sPSS-312, n = 1.0, Beispiel 3) durch thermogravimetrische Messungen in sauerstoffhaltiger Atmosphäre (20 % $O_2$ und 80 % $N_2$, Heizrate 2 K / min). Die rein thermische Stabilität von sPS-430 in Stickstoffatmosphäre ist ebenfalls dargestellt.

**Fig. 5B** zeigt, dass in sauerstoffhaltiger Atmosphäre an sulfonierten Poly(arylensulfidsulfonen) eine spontane Umwandlung (Oxidation) der Sulfidgruppen -S- zu Sulfongruppen $-SO_2-$ unter Bildung sulfonierter Poly(arylensulfone) nicht stattfindet.

**Fig. 6A** zeigt die temperaturabhängige Wasserabsorption und Wasserdesorption von Nafion® 117 unter einer Wasseratmosphäre ($p(H_2O) = 10^5$ Pa, Heiz- und Kühlrate 12 °C/h).

**Fig. 6B** zeigt die temperaturabhängige Wasserabsorption und Wasserdesorption eines sulfonierten Poly(arylensulfons) (sPS-220, n = 1.0, Referenzbeispiel 1) unter einer Wasseratmosphäre ($p(H_2O) = 10^5$ Pa, Heiz- und Kühlrate 12 °C/h). Reversible Gewichtsänderungen aufgrund Wasserdesorption und Absorption während der Aufheiz- und Abkühlphasen belegen die hohe hydrolytische Stabilität der Sulfonsäuregruppe.

**Fig. 6C** zeigt die temperaturabhängige Wasserabsorption und Wasserdesorption eines sulfonierten Poly(arylensulfons) (sPS-360, n = 1.0, Beispiel 3) unter einer Wasseratmosphäre ($p(H_2O) = 10^5$ Pa, Heiz- und Kühlrate 12 °C/h). Reversible Gewichtsänderungen aufgrund Wasserdesorption und Absorption während der Aufheiz- und Abkühlphasen belegen die hohe hydrolytische Stabilität der Sulfonsäuregruppe.

**Fig. 6D** zeigt die temperaturabhängige Wasserabsorption und Wasserdesorption eines sulfonierten Poly(arylensulfons) (sPS-430, n = 0.8, Beispiel 3) unter einer Wasseratmosphäre ($p(H_2O) = 10^5$ Pa, Heiz- und Kühlrate 12 °C/h).

Reversible Gewichtsänderungen aufgrund Wasserdesorption und Absorption während der Aufheiz- und Abkühlphasen belegen die hohe hydrolytische Stabilität der Sulfonsäuregruppe.

**Fig. 6E** zeigt die temperaturabhängige Wasserabsorption und Wasserdesorption eines sulfonierten Poly(arylensulfons) (sPS-336, n = 1.0, Beispiel 5) unter einer Wasseratmosphäre ($p(H_2O) = 10^5$ Pa, Heiz- und Kühlrate 12 °C/h). Reversible Gewichtsänderungen aufgrund Wasserdesorption und Absorption während der Aufheiz- und Abkühlphasen belegen die hohe hydrolytische Stabilität der Sulfonsäuregruppe.

**Fig. 6F** zeigt die temperaturabhängige Wasserabsorption und Wasserdesorption eines sulfonierten Poly(arylenether-ether-ketons) (sPEEK-500, IEC = 2.0 mmol/g) unter einer Wasseratmosphäre ($p(H_2O) = 10^5$ Pa, Heiz- und Kühlrate 12 °C/h). Irreversible Gewichtsänderungen belegen die hydrolytische Zersetzung der Sulfonsäure am Aromaten.

**Fig. 6G** zeigt die temperaturabhängige Wasserabsorption und Wasserdesorption eines sulfonierten Poly(arylensulfidsulfons) (sPSS-204, n = 1.0, Referenzbeispiel 1) unter einer Wasseratmosphäre ($p(H_2O) = 10^5$ Pa, Heiz- und Kühlrate 12 °C/h). Irreversible Gewichtsänderungen belegen die hydrolytische Zersetzung der Sulfonsäure am Aromaten.

**Fig. 6H** zeigt die temperaturabhängige Wasserabsorption und Wasserdesorption eines sulfonierten Poly(arylensulfidsulfons) (sPSS-312, n = 1.0, Beispiel 3) unter einer Wasseratmosphäre ($p(H_2O) = 10^5$ Pa, Heiz- und Kühlrate 12 °C/h). Irreversible Gewichtsänderungen belegen die hydrolytische Zersetzung der Sulfonsäure am Aromaten.

**Fig. 6I** zeigt die temperaturabhängige Wasserabsorption und Wasserdesorption eines sulfonierten Poly(arylensulfidsulfons) (sPSS-258, n = 1.0, Beispiel 4) unter einer Wasseratmosphäre ($p(H_2O) = 10^5$ Pa, Heiz- und Kühlrate 12 °C/h). Irreversible Gewichtsänderungen belegen die hydrolytische Zersetzung der Sulfonsäure am Aromaten.

**Fig. 6J** zeigt die temperaturabhängige Wasserabsorption und Wasserdesorption eines sulfonierten Poly(arylensulfidsulfons) (sPSS-304, n = 1.0, Beispiel 5) unter einer Wasseratmosphäre ($p(H_2O) = 10^5$ Pa, Heiz- und Kühlrate 12 °C/h). Irreversible Gewichtsänderungen belegen die hydrolytische Zersetzung der Sulfonsäure am Aromaten.

**Fig. 7** zeigt die $^{13}$C-NMR-Spektren der Probe eines sulfonierten Poly(arylensulfidsulfons) (sPSS-304, n = 1.0, Beispiel 5) vor und nach der TGA unter einer Wasseratmosphäre ($p(H_2O) = 10^5$ Pa). Die Spektren belegen die quantitative Abspaltung der Sulfonsäuregruppe vom Aromaten.

**Fig. 8** zeigt die temperaturabhängige Wasseraufnahme aus flüssigem Wasser eines sulfonierten Poly(arylensulfons) (sPS-430, n = 0.8, Beispiel 3) im Vergleich zu Nafion® 117, eines sulfonierten Poly(arylenether-ether-ketons) (sPEEK, IEC = 1.35 mmol/g) und eines literaturbekannten sulfonierten Poly(arylensulfidsulfons) (sPSS-661, n = 0.4, IEC = 1.51 mmol/g).

**Fig. 9** zeigt die temperatur- und quellungsabhängige Protonenleitfähigkeit eines sulfonierten Poly(arylensulfons) (sPS-430, n = 0.8, Beispiel 3), gemessen mittels Impedanz-Spektroskopie.

**Fig. 10** zeigt die temperaturabhängige Protonenleitfähigkeit zweier sulfonierter Poly(arylensulfone) (sPS-220, n = 1.0, Referenzbeispiel 1 und sPS-430, n = 0.8, Beispiel 3) im Vergleich zu Nafion® 117 und einem sulfonierten Poly(arylenether-ether-keton) sPEEK, gemessen unter einer Wasseratmosphäre ($p(H_2O) = 10^5$ Pa) mittels Impedanz-Spektroskopie.

**Fig. 11** zeigt die temperatur- und molenbruchabhängige Quellung eines sulfonierten Poly(arylensulfons) (sPS-430, n = 0.8, Beispiel 3) in Wasser/Methanol-Mischungen im Vergleich zu Nafion® 117.

In den Charakterisierungsversuchen, deren Ergebnisse in Fig. 1-4 dargestellt sind, wurde die Leitfähigkeit unter Wasseratmosphäre ($p(H_2O) = 10^5$ Pa) mittels Impedanz-Spektroskopie, die Wasserabsorption der Polymere unter Wasseratmosphäre ($p(H_2O) = 10^5$ Pa) mittels TGA (thermogravimetrischer Analyse) und die thermo-oxidative Stabilität mittels TGA unter sauerstoffhaltiger Atmosphäre bestimmt.

Durch zyklische Messungen zwischen T = 105 und 180 °C unter Wasseratmosphäre ($p(H_2O) = 10^5$ Pa; Heiz- und Kühlrate 12 °C/h) lässt sich die hydrolytische Stabilität der Sulfonsäuregruppe am Aromaten abschätzen. Reversible Gewichtsänderungen aufgrund Wasserdesorption und Absorption während der Aufheiz- und Abkühlphasen deuten auf eine hohe Stabilität der Sulfonsäuregruppe im untersuchten Temperaturbereich hin, während eine irreversible Gewichtsänderung auf eine hydrolytische Zersetzung der aromatischen Sulfonsäure hinweist. Da bei der Hydrolyse als Reaktionsprodukt Schwefelsäure entsteht und diese stärker hygroskopisch ist als die entsprechende Sulfonsäure, wird während der Zersetzung eine ansteigende Wasseraufnahme beobachtet. Sulfonierte Poly(arylensulfone) (Fig. 2A) und Nafion (Fig. 2B) sind unter diesen Bedingungen stabil, während die entsprechenden sulfonierten Poly(arylensulfidsulfone) Zersetzungsreaktionen zeigen (Fig. 3A und 3B).

Um den deutlichen Unterschied zwischen den in dieser Erfindung beschriebenen sulfonierten Poly(arylensulfonen) sPS zu literaturbekannten sulfonierten Poly(arylenethersulfonen) und sulfonierten Poly(arylensulfidsulfonen) **sPSS** [Ref.: **1-6**] aufzuzeigen, wurden mehrere dieser Referenzpolymere hergestellt, ihre Eigenschaften eingehender untersucht und mit denen der erfindungsgemäßen Polymere verglichen.

Strukturelle Einheit in sulfonierten Poly(arylen sulfonen) sPS gemäß Erfindung:

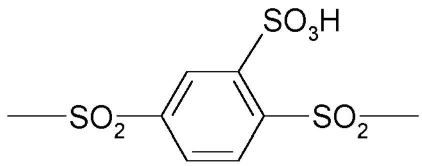

Strukturelle Einheiten in sulfonierten Poly(arylenethersulfonen) bzw. Poly(arylensulfidsulfonen) sPSS:

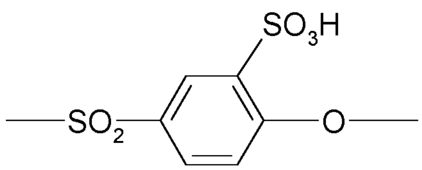

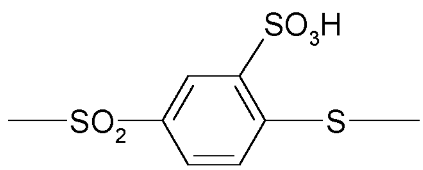

Eine weitere gängige Bezeichnung für Poly(arylensulfidsulfone) ist Poly(arylenthioethersulfone).

Neben dem unterschiedlichen molekularen Aufbau zwischen sulfonierten Poly(arylenethersulfonen) bzw. sulfonierten Poly(arylensulfidsulfonen) und den reinen sulfonierten Poly(arylensulfonen) beobachtet man wesentliche Unterschiede in der thermischen, thermo-oxidativen und hydrolytischen Stabilität, sowie in der Löslichkeit, dem Quellvermögen, und der Leitfähigkeit dieser Polymere, wodurch eine klare Abgrenzung möglich ist.

Für einen thermischen, bzw. thermo-oxidativen Stabilitätsvergleich wurden an den erfindungsgemäßen sulfonierten Poly(arylensulfonen) und den Referenzpolymeren thermogravimetrische Analysen (TGA mit 2 K/Min) unter Stickstoff bzw. sauerstoffhaltiger Atmosphäre (20 % $O_2$ und 80 % $N_2$, bzw. reine $O_2$-Atmosphäre) durchgeführt. Diese Messungen ergaben einen deutlich größeren Stabilitätsbereich für sulfonierte Poly(arylensulfone) sPS gegenüber sulfonierten Poly(arylensulfidsulfonen) sPSS. Wie in Abbildung **Fig. 5A** dargestellt, beginnt die Zersetzungsreaktion (wahrscheinlich die Abspaltung der Sulfonsäuregruppe vom Aromaten) bei sulfonierten Poly(arylensulfidsulfonen) sPSS schon unterhalb 250 °C, während diese Reaktion bei sulfonierten Poly(arylensulfonen) sPS mit vergleichbaren Austauschkapazitäten erst über 300 °C beginnt. In **Fig. 5A** ist exemplarisch die TGA eines sulfonierten Poly(arylensulfons) sPS-430 (Beispiel 3, n = 0.8) und eines sulfonierten Poly(arylensulfidsulfons) sPSS-312 (Beispiel 3, n = 0.8) in sauerstoffhaltiger Atmosphäre dargestellt. Die rein thermische Stabilität von sPS-430 (Beispiel 3, n = 0.8) in Stickstoffatmosphäre ist der thermo-oxidativen Stabilität vergleichbar, bzw. geringfügig höher, wie ebenfalls in **Fig. 5A** dargestellt.

Insbesondere zeigt ein Vergleich von Messungen unter Inertatmosphäre (Stickstoff) und in sauerstoffhaltiger Atmosphäre an sulfonierten Poly(arylensulfidsulfonen) sPSS (siehe **Fig. 5B**), dass eine Umwandlung (Oxidation) der Sulfidgruppe zu einer Sulfongruppe $-SO_2-$ unter Bildung reiner sulfonierter Poly(arylensulfone) in sauerstoffhaltiger Atmosphäre nicht stattfindet. Sowohl unter Inertatmosphäre, wie auch in sauerstoffhaltiger Atmosphäre tritt die Zersetzung sulfonierter Poly(arylensulfidsulfone) bei der gleichen Temperatur auf, d.h. es wird kein Stabilisierungseffekt in sauerstoffhaltiger Atmosphäre im Vergleich zu einer Inertatmosphäre beobachtet. Dies ist damit auch in einer Brennstoffzelle nicht zu erwarten.

Noch klarer ersichtlich tritt der Unterschied zwischen den sulfonierten Poly(arylensulfonen) und den literaturbekannten sulfonierten Poly(arylensulfidsulfonen) [**1-6**] bei der hydrolytischen Stabilität der Sulfonsäuregruppe am Aromaten auf. Durch zyklische Messungen zwischen T = 110 °C und 180 °C unter vollständiger Wasseratmosphäre ($p(H_2O) = 10^5$ Pa, Heiz- und Kühlrate 12 °C/h) konnte die hydrolytische Stabilität der Sulfonsäuregruppe am Aromaten nachgewiesen werden. Reversible Gewichtsänderungen aufgrund Wasserdesorption und Absorption während der Aufheiz- und Abkühlphasen belegen eine hohe hydrolytische Stabilität der Sulfonsäuregruppe im untersuchten Temperaturbereich, während eine irreversible Gewichtsänderung auf eine hydrolytische Zersetzung der aromatischen Sulfonsäure hinweist. Da bei der Hydrolyse als Reaktionsprodukt Schwefelsäure entsteht und diese stärker hygroskopisch ist als die entsprechende Sulfonsäure am Aromaten, wird während der Zersetzung teilweise zunächst einen Anstieg der Wasseraufnahme beobachtet, bei weiterer Zersetzung kann es dann zu einer Gewichtsabnahme kommen. Nur PFSA-Polymere wie Nafion® 117 (**Fig. 6A**)und sulfonierte Poly(arylensulfone) sPS (**Fig. 6B, 6C, 6D, 6E**) sind unter diesen Bedingungen stabil, während die entsprechenden literaturbekannten sulfonierten Poly(arylenetherether-ketone) sPEEK (**Fig. 6F**) und die sulfonierten Poly(arylensulfidsulfone) sPSS (**Fig. 6G, 6H, 6I, 6J**) [**1-6**] deutlich Zersetzungsreaktionen zeigen. Durch $^{13}C$-NMR-Untersuchungen konnte sogar gezeigt werden, dass eine quantitative Abspaltung der Sulfonsäuregruppen von sulfonierten Poly(arylensulfidsulfonen) unter diesen Reaktionsbedingungen stattfindet (siehe **Fig. 7**).

Ein weiterer wesentlicher Unterschied tritt in der Wasserlöslichkeit der sulfonierten Polymere auf. Typischerweise gibt es einen klaren Zusammenhang zwischen der Wasserlöslichkeit bzw. dem Quellvermögen (= Wasseraufnahme) und der Austauschkapazität eines sulfonierten Polymers. Im Allgemeinen steigt die Wasserlöslichkeit, bzw. Quellung eines sulfonierten Polymers mit steigender Austauschkapazität (= Ion exchange capacity, IEC). Eine hohe Austauschkapazität führt jedoch im Allgemeinen auch zu einer hohen Ionenleitfähigkeit. Ziel ist es daher, ein Polymer mit einer möglichst hohen Austauschkapazität zu erhalten, aber bei gleichzeitiger Wasserunlöslichkeit, bzw. nicht zu starker Quellung des Polymers. Eine Vergleich sulfonierter Poly(arylene) zeigt, dass die Wasserlöslichkeit sulfonierter Poly(arylen- sulfone) gegenüber sulfonierten Poly(arylensulfidsulfonen), sulfonierten Poly(arylenethersulfonen), sulfonierten Poly(arylen- etherketonen) und sulfonierten Poly(arylensulfiden) bei vergleichbaren Austauschkapazitäten deutlich reduziert ist. So sind sulfonierte Poly(arylenetherketone) bzw. Poly(arylensulfid- sulfone) bei einer IEC von größer als ca. 1.8 - 2.0 mmol/g nahezu vollständig wasserlöslich (siehe Polymere sPSS-312 (n = 1.0) und sPSS-370 (n = 0.8) in Beispiel 3), bzw. quellen auch bei niedrigeren IECs im Bereich von 1.3 - 1.7 mmol/g ab einer Temperatur von etwa 50 - 70 °C übermäßig stark (siehe **Fig. 8**). Damit sind diese Polymere mit hoher IEC oder bei hoher Temperatur für eine Anwendung in einer Brennstoffzelle oder auch für andere Anwendungen quasi unbrauchbar. Hingegen sind analoge Polysulfone selbst mit einer IEC von 2.5 mmol/g und höher wasserunlöslich. Darüber hinaus zeigen sie selbst bei Temperaturen bis 120 °C bei mittleren Austauschkapazitäten (< 2.5 mmol/g) und hohen Molekulargewichten ein nahezu konstantes Quellverhalten in Wasser (siehe **Fig. 8**), in etwa vergleichbar mit Nafion® 117, was sie für Anwendungen in einem breiten Temperaturbereich bis weit über 100 °C interessant macht. Einen erheblichen Vorteil der sulfonierten Poly(arylensulfone) stellt damit deren potentiell hohe Austauschkapazität und die damit verbundene hohe Protonenleitfähigkeit bei gleichzeitiger Wasserunlöslichkeit und geringer Quellung in Wasser dar. Hohe Protonenleitfähigkeiten in flüssigem Wasser($\sigma$ = 130 mS/cm bei 25 °C) konnten am Polymer sPS-430 (Beispiel 3, n= 0.8) mittels Impedanz-Spektroskopie gemessen werden, in Fig. 9 sind ebenfalls die temperatur- und quellungsabhängigen Leitfähigkeitdaten von sPS-430 (Beispiel 3, n= 0.8) dargestellt. Leitfähigkeiten bei T > 100 °C unter Wasseratmosphäre zeigen ebenfalls vergleichbare bis bessere Ergebnisse wie Nafion® 117 als Referenzpolymer (siehe **Fig. 10**), sowie deutlich bessere Leitfähigkeiten wie entsprechende sulfonierte Poly(arylenether-ether-ketone) sPEEK.

Ein weiterer Unterschied tritt bei der Quellung und Löslichkeit sulfonierter Poly(arylensulfone) in Wasser/Methanol-Mischungen auf. PFSA (= perfluoro sulfonic acid) Membrane wie z.B. Nafion® oder sulfonierte Poly(arylensulfidsulfone) quellen sehr stark in Methanollösungen, wobei sulfonierte Poly(arylensulfidsulfone) bei höheren Austauschkapazitäten sogar Methanol-löslich werden (siehe sPSS-312 (n = 1.0) und sPSS-370 (n = 0.8) in Beispiel 3). Hingegen zeigen sulfonierte Poly(arylensulfone) in Methanol/Wasser-Mischungen selbst bei hohen Methanolkonzentrationen, sowie hoher Temperatur eine deutlich geringere Quellung (gezeigt an sPS-430 von Beispiel 3, n= 0.8, siehe **Fig. 11**), was diese Polymere ebenfalls sehr interessant für Direkt-Methanol-Brennstoffzellen (DMFC) macht. Auch der Methanolfluss durch die Membran ist gegenüber einer Nafion® 117 Membran um etwa die Hälfte (bei gleicher Dicke) reduziert, gemessen mit einer Diffusionszelle bei 60 °C (Halbzellen: 1 M Methanol-Lösung - Wasser).

Darüber hinaus sind noch weitere interessante Eigenschaften zu erwarten, wie z.B. eine hohe Permselektivität von Ionen, was eine Anwendung dieser Polymere in diversen Elektromembranprozessen eröffnet. So können sulfonierte Poly(arylensulfone) in der Elektrodialyse, der Donnandialyse und in der Elektrolyse eingesetzt werden. Die hohe chemische und hydrolytische Stabilität erlaubt weiterhin den Einsatz in der Wasserelektrolyse. Aufgrund der Möglichkeit, Membrane mit sehr hohen Austauschkapazitäten und damit Ladungsdichten herzustellen, sind noch weitere interessante Anwendungsgebiete zu erwarten. So eignen sich Membranen aus hydrolytisch stabilen Poly(arylen sulfonen) für die Be- und Entfeuchtung von Gasen. Diese Eigenschaft ist für die Anoden- und Kathodengasbefeuchtung genau so wichtig wie für einfache Anwendungen wie in der Raumklimatisierung speziell in Niedrigenergiehäusern. Weiterhin eignen sich hoch geladene Kationenaustauschermembranen für die elektromagnetische Abschirmung insbesondere im GHz-Bereich speziell für WLAN Anwendungen. Darüber hinaus finden transparente Filme von hochgeladenen sulfonierten Poly(arylensulfonen) eine Anwendungsmöglichkeit in der elektrostatischen Beschichtung von Bildschirmen speziell von LCD-Displays, beispielsweise von Laptops.

Es hat sich auch erwiesen, dass eine Synthese sulfonierter Poly(arylensulfone) über bereits sulfonierte Monomere mit nachfolgender Oxidation einer ebenfalls in dieser Erfindung beschriebenen Oxidation von bereits sulfonierten Poly(arylen-sulfiden) vorzuziehen ist. Letztere Methode führt zu Materialien, die deutlich schlechtere Filmbildungseigenschaften besitzen (siehe **Referenzbeispiel 2**).

Ein ähnliches Ergebnis beobachtet man bei der Oxidation von Poly(p-phenylensulfiden) mit $H_2O_2$ in konzent-

rierter Schwefelsäure, wie im Patent von J. Studinka, R. Gabler, *Polyarylene sulphonates from sulphonated polyarylene sulphide by two-stage oxidation in acid medium* DE 1938806A1 (1970**)** [**7**] beschrieben, wobei sich ein Material bildet, welches in allen bekannten Lösungsmitteln unlöslich ist, sowie unschmelzbar und damit auch thermisch nicht verarbeitbar ist. Auch wenn man eine Sulfonierung des Aromaten durch die Verwendung von konzentrierter Schwefelsäure bei der Oxidation annimmt, gehen jegliche Filmbildungseigenschaften verloren. Darüber hinaus kann man das Erreichen höherer Austauschkapazitäten (> 0.1 mmol/g) mittels dieser Methode praktisch ausschließen. Daher ist die Herstellung der sulfonierten Poly(arylensulfone) über den Weg einer Polymerisation von bereits sulfonierten Monomeren mit anschließender Oxidation gegenüber einer Sulfonierung eines bereits bestehenden Poly(arylensulfids) mit anschließender oder gleichzeitiger Oxidation bevorzugt.

Die folgenden Beispiele sollen die vorliegende Erfindung näher erläutern, ohne diese jedoch darauf zu beschränken.

**BEISPIEL 1**

Herstellung eines bifunktionellen sulfonierten Arylmonomers

**a) Dinatrium-3,3'-disulfonat-4,4'-dichlorodiphenylsulfon (DSDCS)**

In einem Kolben, der mit einem Kühler versehen war, wurde 4,4'-Dichlorodiphenylsulfon (30 g, 0.104 mol, Aldrich) und Oleum (60 mL, 60 % $SO_3$ in $H_2SO_4$, Aldrich) auf 110 °C erwärmt und 12 h lang gerührt. Nach Abkühlen auf Raumtemperatur wurde die Reaktionsmischung in 1000 mL Eiswasser gegossen. Natriumchlorid (350 g) wurde dann zugegeben, um das Produkt auszufällen. Das weiße Präzipitat wurde durch Filtration gewonnen und erneut in 800 mL Wasser gelöst. Nach Neutralisation der Lösung mit NaOH wurde das Produkt wiederum mit Natriumchlorid (200 g) ausgefällt, abfiltriert und durch Umkristallisation aus einer Wasser/Isopropanol-Mischung (2 : 8) gereinigt. Schließlich wurde das weiße Produkt bei 50 °C 24 h lang im Vakuum getrocknet ($2 \cdot 10^{-3}$ mbar). Die Ausbeute betrug 30.5 g (59 %) an Dinatrium-3,3'-disulfonat-4,4'-dichlorodiphenylsulfon-Monohydrat. Der Wasser-gehalt hing von den Trocknungsbedingungen ab und wurde mittels $^1$H-NMR und Elementaranalyse bestimmt.

$^1$H-NMR (300 MHz, DMSO-$d_6$): $\delta$ = 8.24 (d, 2H, CH, $J$ = 2.4 Hz), 7.77 (dd, 2H, CH, $J$ = 2.4, 8.3 Hz), 7.58 (d, 2H, CH, J = 8.3 Hz), 3.24 (s, 2H, $H_2O$), $^{13}$C-NMR (75.5 MHz, DMSO-$d_6$): $\delta$ = 141.6 (s), 138.3 (s), 138.0 (s), 133.5 (s), 131.6 (s), 128.3 (s).

**b) Dinatrium-3,3'-disulfonat-4,4'-difluorodiphenylsulfon (DSDFS)**

Diese Verbindung wurde analog zu Dinatrium-3,3'-disulfonat-4,4'-dichlorodiphenylsulfon-(DSDCS) als Monohydrat bis Trihydrat (abhängig von den Trocknungsbedingungen) hergestellt. $^1$H-NMR (300 MHz, DMSO-$d_6$): $\delta$ = 8.06 (dd, 2H, CH, $J_{HH}$ = 2.5 Hz, $J_{HF}$ = 6.4 Hz), 7.87 (ddd, 2H, CH, $J_{HH}$ = 2.6, 8.7 Hz, $J_{HF}$ = 4.3 Hz), 7.32 (dd, 2H, CH, $J_{HH}$ = 8.8 Hz, $J_{HF}$ = 9.2 Hz), 3.23 (s, 2H, $H_2O$); $^{13}$C NMR (75.5 MHz, DMSO-$d_6$): $\delta$ = 162.1 (d, $J_{CF}$ = 259.2 Hz), 137.4 (d, $J_{CF}$ = 18.9 Hz), 136.7 (d, $J_{CF}$ = 2.0 Hz), 131.5 (d, $J_{CF}$ = 10.0 Hz), 128.9 (d, $J_{CF}$ = 4.6 Hz), 119.0 (d, $J_{CF}$ = 24.6 Hz).

Anstelle des Natriumsalzes des sulfonierten Monomeren wurde auch das entsprechende Kaliumsalz hergestellt und für Polymerisationen eingesetzt.

**REFERENZBEISPIEL** 1

Herstellung von Poly(sulfonsäure 1,4-phenylensulfon)

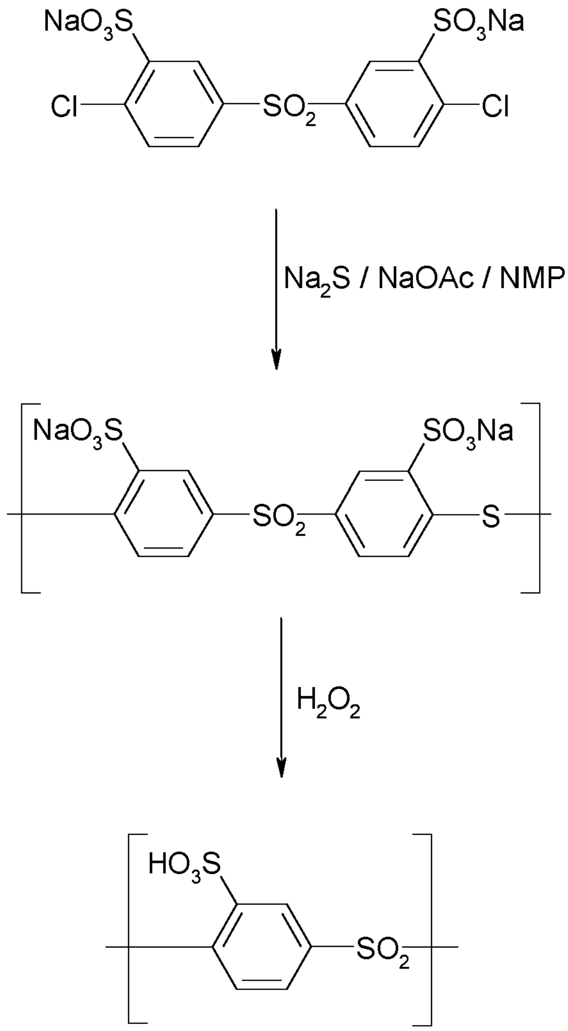


**I. Polymerisation:**

**Sulfoniertes Poly(1,4-phenylen-sulfon-1,4-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 3.8591 g (7.578 mmol) Dinatrium-3,3'-disulfonat-4,4'-dichloro-diphenylsulfon-Monohydrat (M = 509.25 g/mol), 0.5914 g (7.578 mmol) Natriumsulfid ($Na_2S$) und 0.6216 g (7.578 mmol) trockenes Natriumacetat zugegeben. Diese Mischung wurde 2 h lang bei 100 °C im Vakuum ($2 \cdot 10^{-3}$ mbar) getrocknet. Dann wurden unter Argon 20 ml trockenes 1-Methyl-2-pyrrolidon (NMP) und 35 ml trockenes Toluol zugegeben und die Reaktionsmischung wurde in einem Ölbad auf 145 °C für 4 h erwärmt, um jegliches Wasser zu entfernen (Wasserabscheider). Das Toluol wurde anschließend durch Leeren der Dean-Stark-Falle entfernt (abdestilliert) und die Reaktion wurde 18 h lang bei 190 °C fortgesetzt. Nach Abkühlen auf Raumtemperatur wurde die schwarze Suspension langsam in Isopropanol (800 ml) getropft, um das Polymer auszufällen. Das graue Präzipitat wurde abfiltriert und mit Isopropanol gewaschen. Das Produkt wurde dann erneut in 50 ml Wasser gelöst (schwarze Lösung), wiederum in Isopropanol (800 ml) ausgefällt, abfiltriert und mit Isopropanol gewaschen und im Vakuum ($2 \cdot 10^{-3}$mbar) getrocknet. Zur Entfernung aller Nebenprodukte wurde das Polymer unter Anwendung von 24-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum ($2 \cdot 10^{-3}$ mbar) ein dunkelbrauner Feststoff (4.346 g, M = 452.39 g/mol $Na^+$-Form = 9.62 mmol, M = 596.51 g/mol $Na^+$-Form und 4 $H_2O/SO_3H$ = 7.286 mmol, M = 408.43 g/mol $H^+$-Form) resultierte. Ein Teil des Natriumsalzes (ca. 0.2 g) wurde mittels eines Ionenaustauschers (Dowex® Marathon® C) in die $H^+$-Form umgewandelt.

Löslichkeit:

Löslich in Wasser, Dimethylsulfoxid (DMSO), Dimethylformamid (DMF), 1-Methyl-2-pyrrolidon (NMP), *N,N'*-

Dimethylacetamid (DMAc), konzentrierter Schwefelsäure;
unlöslich in Methanol, Ethanol, Isopropanol, Toluol, Tetrahydrofuran (THF), Chloroform, Aceton, Ethylacetat, Trifluoressigsäure.

| | |
|---|---|
| Austauschkapazität: | experimentell: 4.890 mmol/g (204.50 g/mol) für $H^+$-Form |
| | theoretisch: 4.500 mmol/g (222.24 g/mol) Annahme: 1.0 $H_2O/SO_3H$ |
| | theoretisch: 4.897 mmol/g (204.22 g/mol) Annahme: 0.0 $H_2O/SO_3H$ |
| Dichte: | 1.6601 g / $cm^3$ für $H^+$-Form |

$^1$H-NMR (300 MHz, DMSO-$d_6$): $\delta$ = 8.20 (d, 2H, CH, $J_{HH}$ = 1.7 Hz), 7.70 (dd, 2H, CH, $J_{HH}$ = 1.9, 8.0 Hz), 7.18 (d, 2H, CH, $J_{HH}$ = 8.3 Hz), 3.24 (s, 20H, $H_2O$).
$^{13}$C-NMR (75.5 MHz, DMSO-$d_6$): $\delta$ = 148.6 (s), 141.6 (s), 139.0 (s), 135.0 (s), 129.1 (s), 127.1 (s).

| | |
|---|---|
| Molekulargewicht: | $M_n$ = 1672, $M_w$ = 2767 g/mol, D = 1.6551 (Ansatz 41, GPC) |
| | $M_n$ = 46832, $M_w$ = 81145 g/mol, D = 1.7327 (Ansatz 19, GPC) |

**II. Oxidation:**

**Sulfoniertes Poly(1,4-phenylen-sulfon):** 4.34 g (9.62 mmol) Poly(natriumsulfonat-phenylen-thio-sulfon) wurden in 50 ml konzentrierter Schwefelsäure gelöst, welches eine dunkelbraune Lösung ergab. Wasserstoffperoxid (4.5 ml von 36 % $H_2O_2$ in Wasser, ca. 45 mmol $H_2O_2$) wurde langsam zugegeben. Dann wurde die Reaktionsmischung 2 Tage lang bei Raumtemperatur gerührt. Nach Verdünnen der Mischung mit 200 ml Wasser wurde die Schwefelsäure durch Dialyse entfernt (Dialyseschlauch von Sigma-Aldrich, Molekulargewichts-Ausschluss = 3000). Das Wasser wurde mit Hilfe eines Rotationsverdampfers entfernt und das Produkt bei 50 °C im Vakuum getrocknet ($2 \cdot 10^{-3}$ mbar). Die Ausbeute betrug 2.3 g (5.22 mmol, M = 440.42 g/mol) eines schwach braun gefärbten Polymers.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc); unlöslich in wässriger 1M-NaCl-Lösung, Methanol, Ethanol, Isopropanol, Toluol, Tetrahydrofuran (THF), Chloroform, Aceton, Ethylacetat, Trifluoressigsäure.

| | |
|---|---|
| Austauschkapazität: | experimentell: 4.270 mmol/g (234.19 g/mol) für $H^+$-Form |
| | theoretisch: 4.198 mmol/g (238.22 g/mol) Annahme: 1.0 $H_2O/SO_3H$ |
| | theoretisch: 4.541 mmol/g (220.21 g/mol) Annahme: 0.0 $H_2O/SO_3H$ |
| Dichte: | 1.745 g / $cm^3$ für $H^+$-Form |
| Analyse: | experimentell: C: 24.25, H: 3.84, S: 20.85, Cl: 0.70 |
| | theoretisch: C: 32.72, H: 1.83, S: 29.11, Cl: 0.00 mit 0.0 $H_2O/SO_3H$ |
| | theoretisch: C: 23.91, H: 4.35, S: 21.28, Cl: 0.00 mit 4.5 $H_2O/SO_3H$ |
| | theoretisch: C: 23.73, H: 4.32, S: 21.11, Cl: 0.78 mit 4.5 $H_2O/SO_3H$ und Polymerisationsgrad = 30, Cl-Endgruppen |

$^1$H-NMR (300 MHz, DMSO-$d_6$): $\delta$ = 8.32 (s, 2H, CH), 8.19 (d, 2H, CH, $J_{HH}$ = 8.2 Hz), 7.99 (d, 2H, CH, $J_{HH}$ = 8.4 Hz), zwischen 6 und 4 ppm (br s, $SO_3H \times n\ H_2O$, abhängig vom Wassergehalt).
$^{13}$C-NMR (75.5 MHz, DMSO-$d_6$): $\delta$ = 147.7 (s), 144.0 (s), 143.3 (s), 133.1 (s), 128.9 (s), 128.5 (s).

**BEISPIEL 2**

Synthese eines Poly(sulfonsäurephenylensulfons) mit variabler Austauschkapazität: Sulfoniertes Poly(1,4-phenylensulfon) mit n = 0.7 und 0.8

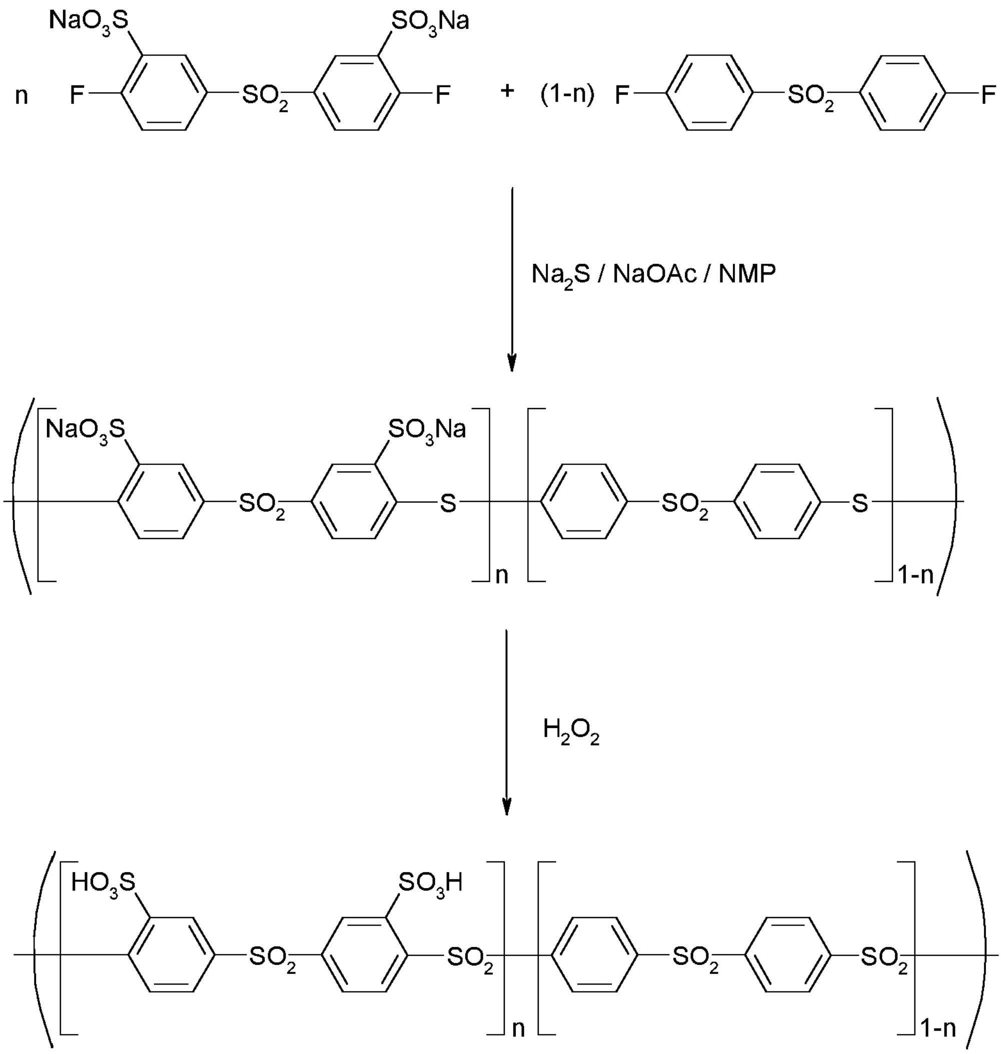


$$EW(sPS-I) = \frac{440.42\,n + 280.31\,(1-n)}{2\,n}$$

$$EW(sPSS-I) = \frac{408.43\,n + 248.31\,(1-n)}{2\,n}$$

| n | 1.0 | 0.9 | 0.8 | 0.7 | 0.6 | 0.5 |
|---|---|---|---|---|---|---|
| IEC(sPS-I) | 4.5411 | 4.2412 | 3.9177 | 3.5679 | 3.1883 | 2.7750 |
| EW(sPS-I) | 220.21 | 235.78 | 255.25 | 280.28 | 313.65 | 360.37 |
| MW(sPS-I) | 440.42 | 424.41 | 408.40 | 392.39 | 376.38 | 360.37 |
| IEC(sPSS-I) | 4.8968 | 4.5869 | 4.2507 | 3.8846 | 3.4845 | 3.0453 |
| EW(sPSS-I) | 204.22 | 218.01 | 235.25 | 257.42 | 286.99 | 328.37 |
| MW(sPSS-I) | 408.43 | 392.42 | 376.41 | 360.39 | 344.38 | 328.37 |
| MW(sPSS-I-Na) | 452.39 | 431.98 | 411.57 | 391.17 | 370.76 | 350.35 |

**I. Polymerisation (n = 0.7):**

**Sulfoniertes Poly(1,4-phenylen-sulfon-1,4-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 3.8233 g (8.026 mmol, M = 476.34 g/mol) Dinatrium-3,3'-disulfonat-4,4'-difluorodiphenylsulfon-Monohydrat, 0.9299 g (3.657 mmol, M = 254.25 g/mol) 4,4'-Difluorodiphenylsulfon, 0.8948 g (11.466 mmol) Natriumsulfid ($Na_2S$) und 0.958 g (11.466 mmol) trockenes Natriumacetat zugegeben. Diese Mischung wurde 2 h lang bei 70 °C im Vakuum ($1 \cdot 10^{-3}$ mbar) getrocknet. Dann wurden unter Argon 20 ml trockenes 1-Methyl-2-pyrrolidon (NMP) und 40 ml trockenes Toluol zugegeben und die Reaktionsmischung wurde in einem Ölbad auf 140 °C für 2 h erwärmt, um jegliches Wasser zu entfernen (Wasserabscheider). Das Toluol wurde anschließend durch Leeren der Dean-Stark-Falle entfernt (abdestilliert) und die Reaktion wurde 19 h lang bei 180 °C fortgesetzt. Nach Abkühlen auf Raumtemperatur wurde die dunkelviolette Suspension langsam in Isopropanol (600 ml) getropft, um das Polymer auszufällen. Das graue Präzipitat wurde abfiltriert und mit Isopropanol gewaschen. Das Produkt wurde dann erneut in 50 ml Wasser gelöst (dunkelbraune Lösung), wiederum in Isopropanol (800 ml) ausgefällt, abfiltriert und mit Isopropanol gewaschen und im Vakuum ($2 \cdot 10^{-3}$ mbar) getrocknet. Zur Entfernung aller Nebenprodukte wurde das Polymer unter Anwendung von 24-stündiger Dialyse (Dialyseschlauch von Sigma-Aldrich, Molekulargewichts-Ausschluss = 3000) gereinigt, wobei nach Entfernen des Lösungsmittels und Trocknen bei 50 °C im Vakuum ($2 \cdot 10^{-3}$ mbar) ein dunkelbrauner Feststoff (3.80 g, M = 391.17 g/mol $Na^+$-Form = 9.71 mmol) resultierte.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc), konzentrierter Schwefelsäure;
unlöslich in Methanol, Ethanol, Isopropanol, Toluol, Tetrahydrofuran (THF), Chloroform, Aceton.
$^1$H-NMR (300 MHz, DMSO-$d_6$) : $\delta$ = 8.21 (d, 2H, CH, $J_{HH}$ = 1.6 Hz), 7.83 (br d, 1.6H, CH, $J_{HH}$ = 6.7 Hz), 7.70 (d, 2H, CH, $J_{HH}$ = 8.4 Hz), 7.45 (d, 1.6H, CH, $J_{HH}$ = 6.7 Hz), 7.17 (d, 2H, CH, $J_{HH}$ = 8.4 Hz ), 3.25 (br s, 6H, $H_2O$).
$^{13}$C-NMR (75.5 MHz, DMSO-$d_6$): $\delta$ = 148.6 (s), 141.6 (s), 141.3 (s), 140.5 (s), 139.0 (s), 135.0 (s), 132.1 (s), 129.4 (s), 129.0 (s), 127.1 (s).
Molekulargewicht: $M_n$ = 19612, $M_w$ = 27043 g/mol, D = 1.3789 (GPC) für $Na^+$-Form

**II. Oxidation (n = 0.7):**

**Sulfoniertes Poly(1,4-phenylen-sulfon):** 2.188 g (ca. 5.59 mmol) Poly(natriumsulfonat-phenylen-thio-sulfon) aus obiger Reaktion wurden in 50 ml konzentrierter Schwefelsäure gelöst, welches eine braune Lösung ergab. Wasserstoffperoxid (4.0 ml von 36 % $H_2O_2$ in Wasser, ca. 40 mmol $H_2O_2$) wurde langsam zugegeben. Dann wurde die Reaktionsmischung 2 Tage lang bei Raumtemperatur gerührt. Nach Verdünnen der Mischung mit 250 ml Wasser wurde die Schwefelsäure durch Dialyse entfernt (Dialyseschlauch von Sigma-Aldrich, Molekulargewichts-Ausschluss = 3000). Das Wasser wurde mit Hilfe eines Rotationsverdampfers entfernt und das Produkt bei 50 °C im Vakuum getrocknet ($2 \cdot 10^{-3}$ mbar). Die Ausbeute betrug 1.93 g (M = 392.39 g/mol $H^+$-Form = 4.92 mmol) eines schwach gelblich gefärbten Polymers.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc); unlöslich in Methanol, Ethanol, Isopropanol, Toluol, Tetrahydrofuran (THF), Chloroform, Aceton.

| | |
|---|---|
| Austauschkapazität: | experimentell: 3.260 mmol/g (306.75 g/mol) für $H^+$-Form |
| | theoretisch: 3.161 mmol/g (316.31 g/mol) Annahme: 2.0 $H_2O/SO_3H$ |
| | theoretisch: 3.568 mmol/g (280.27 g/mol) Annahme: 0.0 $H_2O/SO_3H$ |
| Dichte: | 1.6835 g / $cm^3$ für $H^+$-Form |
| Analyse: | experimentell: C: 29.92, H: 3.41, S: 22.80 für $H^+$-Form |
| | theoretisch: C: 36.73, H: 2.05, S: 27.77 mit 0.0 $H_2O/SO_3H$ |
| | theoretisch: C: 29.21, H: 3.92, S: 22.09 mit 4.0 $H_2O/SO_3H$ |

$^1$H-NMR (300 MHz, DMSO-$d_6$) : $\delta$ = 8.29 (br s und br d, zusammen 4H, CH), 8.08 (m, 0.6H, CH), 7.97 (d, 2H, CH, $J_{HH}$ = 8.4 Hz), 7.85 (m, 0.6H, CH), 6.35 (br s, 12H, $SO_3H \times n\ H_2O$).
$^{13}$C-NMR (75.5 MHz, DMSO-$d_6$): $\delta$ = 147.9 (s), 144.1 (s), 143.2 (s), 133.5 (s), 130.2 (schwaches s), 129.8 (schwaches s), 128.7 (s), 128.0 (s) .

Molekulargewicht: $M_n$ = 33362, $M_w$ = 61256 g/mol, D = 1.8361 (GPC) für $H^+$-Form

**I. Polymerisation (n = 0.8):**

**Sulfoniertes Poly(1,4-phenylen-sulfon-1,4-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 3.6073 g (7.040 mmol) Dinatrium-3,3'-disulfonat-4,4'-difluorodiphenylsulfon-Trihydrat, 0.4475 g (1.760 mmol) 4,4'-Difluorodiphenylsulfon, 0.6868 g (8.801 mmol) Natriumsulfid ($Na_2S$) und 0.7938 g (9.680 mmol) trockenes Natriumacetat zugegeben. Diese Mischung wurde 2 h lang bei 70 °C im Vakuum (2 · $10^{-3}$ mbar) getrocknet. Dann wurden unter Argon 18 ml trockenes 1-Methyl-2-pyrrolidon (NMP) und 40 ml trockenes Toluol zugegeben und die Reaktionsmischung wurde in einem Ölbad auf 145 °C für 12 h erwärmt, um jegliches Wasser zu entfernen (Wasserabscheider). Das Toluol wurde anschließend durch Leeren der Dean-Stark-Falle entfernt (abdestilliert) und die Reaktion wurde 24 h lang bei 175 °C fortgesetzt. Nach Abkühlen auf Raumtemperatur wurde die schwarze Suspension langsam in Isopropanol (600 ml) getropft, um das Polymer auszufällen. Das graue Präzipitat wurde abfiltriert und mit Isopropanol gewaschen. Das Produkt wurde dann erneut in 50 ml Wasser gelöst (schwarze Lösung), wiederum in Isopropanol (800 ml) ausgefällt, abfiltriert und mit Isopropanol gewaschen und im Vakuum (2 · $10^{-3}$ mbar) getrocknet. Zur Entfernung aller Nebenprodukte wurde das Polymer unter Anwendung von 12-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum (2 · $10^{-3}$ mbar) ein dunkelbrauner Feststoff (2.69 g, M = 411.57 g/mol $Na^+$-Form = 6.54 mmol) resultierte.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc), konzentrierter Schwefelsäure;
unlöslich in Methanol, Ethanol, Isopropanol, Toluol, Tetrahydrofuran (THF), Chloroform, Aceton.

$^1$H-NMR (300 MHz, DMSO-$d_6$): $\delta$ = 8.23 (s, 2H, CH), 7.83 (s, 1H, CH), 7.71 (d, 2H, CH), 7.45 (s, 1H, CH), 7.17 (d, 2H, CH), 3.33 (br s, $H_2O$).

$^{13}$C-NMR (75.5 MHz, DMSO-$d_6$): $\delta$ = 148.6 (s), 141.6 (s), 141.0 (s), 140.4 (s), 139.0 (s), 135.0 (s), 132.1 (s), 129.4 (s), 129.1 (s), 127.1 (s).

**II. Oxidation (n = 0.8):**

**Sulfoniertes Poly(1,4-phenylen-sulfon):** 2.26 g (ca. 5.49 mmol) Poly(natriumsulfonat-phenylen-thio-sulfon) aus obiger Reaktion wurden in 30 ml Eisessig suspendiert, dann 10 ml konzentrierte Schwefelsäure hinzugefügt. Wasserstoffperoxid (2.5 ml von 36 % $H_2O_2$ in Wasser, ca. 25 mmol $H_2O_2$) wurde langsam zugegeben. Dann wurde die Reaktionsmischung 24 h bei 55 °C gerührt. Nach Verdünnen der Mischung mit 200 ml Eisessig wurde der farblose, schwach gelbliche Niederschlag abfiltriert. Das Produkt wurde durch Dialyse gereinigt (Dialyseschlauch von Sigma-Aldrich, Molekulargewichts-Ausschluss = 8000) und bei 50 °C im Vakuum getrocknet (2 · $10^{-3}$ mbar). Die Ausbeute betrug 1.80 g (M = 408.40 g/mol $Na^+$-Form = 4.41 mmol) eines schwach gelblich gefärbten Polymers.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc); unlöslich in Methanol, Ethanol, Isopropanol, Toluol, Tetrahydrofuran (THF), Chloroform, Aceton.

| | |
|---|---|
| Austauschkapazität: | experimentell: 2.640 mmol/g (378.79 g/mol) für $H^+$-Form |
| | theoretisch: 2.752 mmol/g (363.34 g/mol) Annahme: 6.0 $H_2O/SO_3H$ |
| | theoretisch: 3.918 mmol/g (255.25 g/mol) Annahme: 0.0 $H_2O/SO_3H$ |
| Dichte: | 1.707 g / $cm^3$ für $H^+$-Form |

$^1$H-NMR (300 MHz, DMSO-$d_6$): $\delta$ = 8.31 (br s, 2H, CH), 8.19 (br s, 2H, CH), 8.08 (br s, 0.4H, CH), 7.98 (br s, 2H, CH), 7.88 (s, 0.4H, CH), 5.16 (br s, $SO_3H \times n\ H_2O$).

$^{13}$C-NMR (75.5 MHz, DMSO-$d_6$) : $\delta$ = 147.7 (s), 144.0 (s), 143.3 (s), 133.1 (s), 130.2 (schwaches s), 129.8 (schwaches s), 128.8 (s), 128.4 (s).

In Analogie zu den in BEISPIEL 2 beschriebenen Reaktionen wurden weitere Copolymere mit unterschiedlichen

Austauschkapazitäten unter Einsatz verschiedener Verhältnisse der Ausgangsmonomeren Dinatrium-3,3'-disulfonat-4,4'-difluorodiphenylsulfon und 4,4'-Difluorodiphenylsulfon, bzw. Dinatrium-3,3'-disulfonat-4,4'-dichlorodiphenylsulfon und 4,4'-Dichlorodiphenylsulfon hergestellt. Die Reaktionsbedingungen waren analog.

**BEISPIEL 3**

Synthese eines Poly(sulfonsäurearylensulfons) mit variabler Austauschkapazität: Sulfoniertes Poly(1,4-phenylen-sulfon) mit n = 1.0 und n = 0.8

Dithiol-Komponente: 4,4'-Thiobisbenzolthiol (Bis-(4-Mercaptophenyl) sulfid)

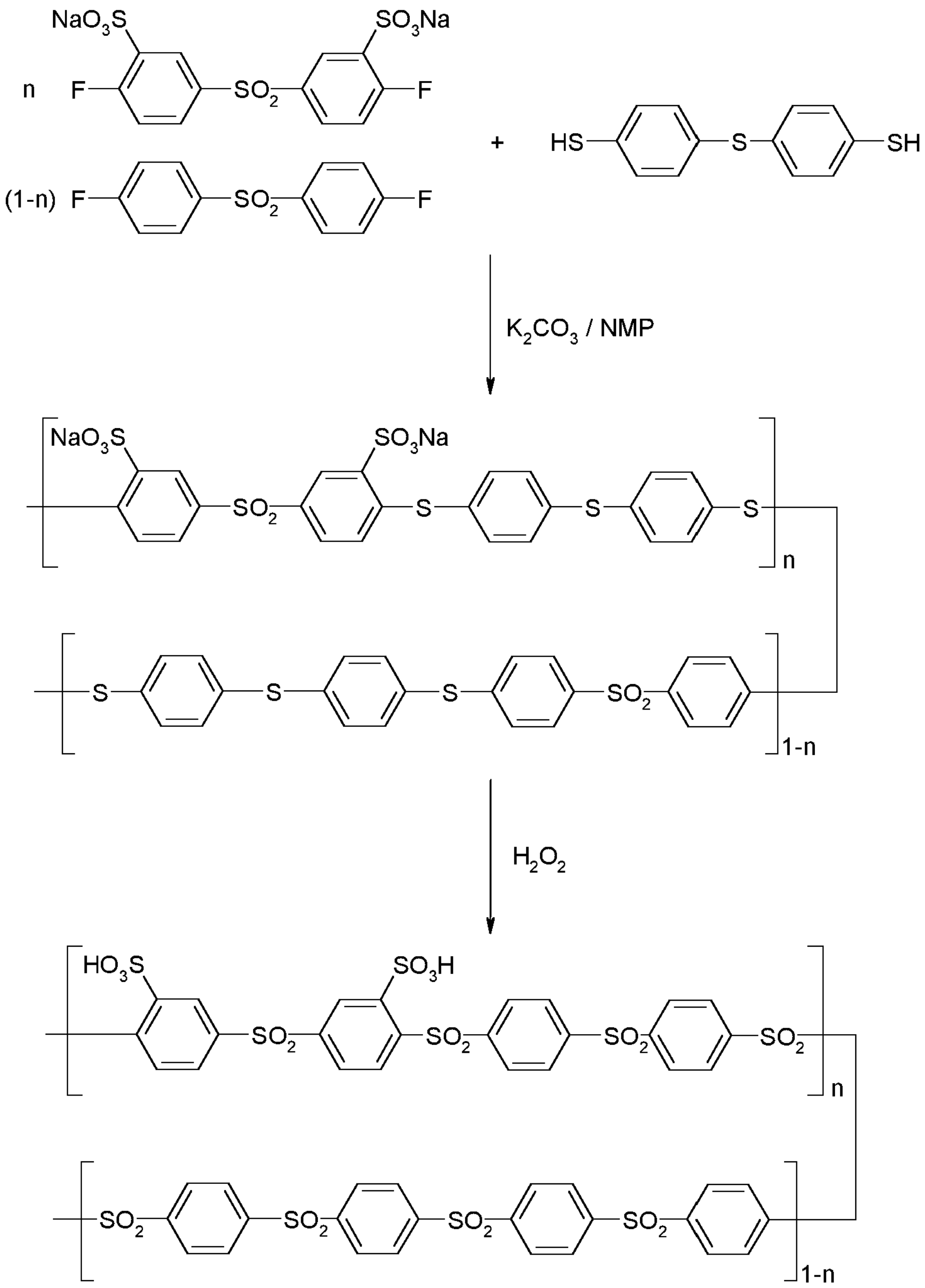

$$EW(s-PS-III) = \frac{720.74\ n + 560.62\ (1-n)}{2\ n}$$

$$EW(s-PSS-III) = \frac{624.74\ n + 464.62\ (1-n)}{2\ n}$$

| N | 1.0 | 0.9 | 0.8 | 0.7 | 0.6 | 0.5 |
|---|---|---|---|---|---|---|
| IEC(sPS-III) | 2.7749 | 2.5542 | 2.3232 | 2.0812 | 1.8273 | 1.5608 |
| EW(sPS-III) | 360.37 | 391.52 | 430.4475 | 480.50 | 547.24 | 640.68 |
| MW(sPS-III) | 720.74 | 704.73 | 688.72 | 672.70 | 656.69 | 640.68 |
| IEC(sPSS-III) | 3.2013 | 2.9570 | 2.6994 | 2.4276 | 2.1402 | 1.8359 |
| EW(sPSS-III) | 312.37 | 338.18 | 370.45 | 411.93 | 467.24 | 544.68 |
| MW(sPSS-III) | 624.74 | 608.73 | 592.72 | 576.70 | 560.69 | 544.68 |
| MW(sPSS-III-Na) | 668.70 | 648.29 | 627.88 | 607.48 | 587.07 | 566.66 |

**1. Ansatz**

**I. Polymerisation:**

**Sulfoniertes Poly(1,4-phenylen-sulfon-1,4-phenylen-sulfid-1,4-phenylen-sulfid-1,4-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 3.276 g (6.394 mmol) Dinatrium-3,3'-disulfonat-4,4'-difluorodiphenylsulfon-Trihydrat, 1.601 g (6.394 mmol) 4,4'-Thiobisbenzolthiol und 1.060 g (7.673 mmol) trockenes Kaliumcarbonat zugegeben. Diese Mischung wurde 2 h lang bei 70 °C im Vakuum ($2 \cdot 10^{-3}$ mbar) getrocknet. Dann wurden unter Argon 18 ml trockenes 1-Methyl-2-pyrrolidon (NMP) und 40 ml trockenes Toluol zugegeben und die Reaktionsmischung wurde in einem Ölbad auf 145 °C für 4 h erwärmt, um jegliches Wasser zu entfernen (Wasserabscheider). Das Toluol wurde anschließend durch Leeren der Dean-Stark-Falle entfernt (abdestilliert) und die Reaktion wurde 15 h lang bei 185 °C fortgesetzt. Nach Abkühlen auf Raumtemperatur wurde die schwarze Suspension langsam in Isopropanol (600 ml) getropft, um das Polymer auszufällen. Das graue Präzipitat wurde abfiltriert und mit Isopropanol gewaschen. Das Produkt wurde dann erneut in 100 ml Wasser gelöst (braune Lösung), wiederum in Isopropanol (600 ml) ausgefällt, abfiltriert und mit Isopropanol gewaschen und im Vakuum ($2 \cdot 10^{-3}$ mbar) getrocknet. Zur Entfernung aller Nebenprodukte wurde das Polymer unter Anwendung von 24-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum ($2 \cdot 10^{-3}$ mbar) ein dunkelbrauner Feststoff (4.056 g, M = 668.70 g/mol $Na^+$-Form = 6.07 mmol) resultierte.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc), konzentrierter Schwefelsäure;
unlöslich in Methanol, Ethanol, Isopropanol, Toluol, Tetrahydrofuran (THF), Chloroform, Aceton.

$^1$H-NMR (300 MHz, DMSO-$d_6$): $\delta$ = 8.09 (s, 2H, CH), 7.57 (d, 2H, CH, $J_{HH}$ = 8.3 Hz), 7.44 (d, 4H, CH, $J_{HH}$ = 7.9 Hz), 7.37 (d, 4H, CH, $J_{HH}$ = 7.9 Hz), 6.80 (d, 2H, CH, $J_{HH}$ = 8.3 Hz).

$^{13}$C-NMR (75.5 MHz, DMSO-$d_6$): $\delta$ = 144.7 (s), 144.1 (s), 136.5 (s), 136.2 (s), 135.9 (s), 132.0 (s), 130.8 (s), 127.6 (s), 126.0 (s).

Molekulargewicht: $M_n$ = 8378, $M_w$ = 34670 g/mol, D = 4.1383 (GPC) für $Na^+$-Form

**II. Oxidation** :

**Sulfoniertes Poly(1,4-phenylen-sulfon):** 3.22 g (4.82 mmol, M = 668.70 g/mol) fein-gemörserter Feststoff aus obiger Reaktion wurden in 50 ml Eisessig und 10 ml konzentrierter Schwefelsäure suspendiert. Die dunkelbraune Reaktionsmischung wurde auf 55 °C erhitzt, dann wurden 8 ml einer 36 % Wasserstoffperoxidlösung (ca. 80 mmol $H_2O_2$) langsam zugetropft. Diese Mischung wurde 5 h lang bei 55 °C gerührt, wobei sich der Feststoff langsam entfärbte.

Anschließend wurde die Mischung kurz auf 110 °C erhitzt, um überschüssiges Peroxid zu entfernen. Dann wurde die Mischung mit 150 ml Eisessig verdünnt. Der blassgelbe bis farblose Feststoff wurde abfiltriert und mehrmals mit Eisessig gewaschen. Zur Entfernung aller Nebenprodukte wurde das Polymer unter Anwendung von 48-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum ($2 \cdot 10^{-3}$ mbar) ein blassgelber Feststoff (2.83 g, M = 720.74 g/mol = 3.93 mmol) resultierte.

Löslichkeit:

Löslich in Dimethylsulfoxid (DMSO), Dimethylformamid (DMF), 1-Methyl-2-pyrrolidon (NMP), *N,N'*-Dimethylacetamid (DMAc); unlöslich in Wasser (nur Quellung), Methanol, Ethanol, Isopropanol, Toluol, Tetrahydrofuran (THF), Chloroform, Aceton.

| | |
|---|---|
| Austauschkapazität: | experimentell: 2.210 mmol/g (452.49 g/mol) für $H^+$-Form |
| | theoretisch: 2.211 mmol/g (452.25 g/mol) Annahme: 5.1 $H_2O/SO_3H$ |
| | theoretisch: 2.775 mmol/g (360.37 g/mol) Annahme: 0.0 $H_2O/SO_3H$ |
| Dichte: | 1.693 g / $cm^3$ für $H^+$-Form |

$^1$H-NMR (300 MHz, DMSO-$d_6$) : $\delta$ = 8.44 (br, 4H, CH), 8.16 (br, 2H, CH), 7.94 (br, 4H, CH), 7.89 (br, 4H, CH), 5.01 (br, 9H, $H_2O$).

$^{13}$C-NMR (75.5 MHz, DMSO-$d_6$) : $\delta$ = 150.0 (s), 146.9 (s), 144.7 (s), 144.1 (s), 141.2 (s), 134.2 (s), 129.9 (s), 128.6 (s).

**2. Ansatz**

**I. Polymerisation (n = 1.0)**:

**sPSS-312 (n = 1.0) Sulfoniertes Poly(1,4-phenylen-sulfon-1,4-phenylen-sulfid-1,4-phenylen-sulfid-1,4-phenylen-sulfid):**

Die Polymerisation wurde in einem ausgeheizten und mit Argon gefüllten 1000-mL-Kolben durchgeführt, der mit einem Argoneinlass, einem mechanischen Rührer und einer Dean-Stark-Falle, versehen mit einem Kühler, ausgerüstet war. In den Kolben wurden 30.170 g (0.0658 mol) Dinatrium-3,3'-disulfonat-4,4'-difluorodiphenylsulfon, 16.482 g (0.0658 mol) 4,4'-Thiobisbenzolthiol und 19.1 g (0.138 mol) trockenes Kaliumcarbonat zugegeben. Dann wurden 200 mL trockenes 1-Methyl-2-pyrrolidon (NMP) und 80 mL trockenes Toluol zugegeben und die Reaktionsmischung unter schwachen Argonstrom für 30 Minuten bei Raumtemperatur gerührt. Anschließend wurde die Reaktionsmischung in einem Ölbad auf 150 °C für 3 h erwärmt, um jegliches Wasser zu entfernen (Wasserabscheider). Das Toluol wurde anschließend durch Leeren der Dean-Stark-Falle entfernt (abdestilliert) und die Reaktion wurde 36 h lang bei 185 °C fortgesetzt, wobei nach 24 h weitere 100 mL NMP zugegeben wurden. Nach Abkühlen auf Raumtemperatur wurde die dunkelviolette Suspension langsam in Isopropanol (1200 mL) getropft, um das Polymer auszufällen. Das violette Präzipitat wurde abfiltriert und mit Isopropanol gewaschen. Das Produkt wurde dann in 600 mL Wasser gelöst (dunkelviolette Lösung), wiederum in Isopropanol (1200 mL) ausgefällt, dann das graue Präzipitat abfiltriert und mit Isopropanol gewaschen. Zur Entfernung aller Nebenprodukte wurde das Polymer unter Anwendung von 36-stündiger Dialyse (Dialyseschlauch mit Molekulargewichts-Ausschluss = 12000-14000) gereinigt, wobei nach Entfernen des Lösungsmittels und Trocknen bei 60 °C im Vakuum ein dunkelvioletter Feststoff (38.46 g, M = 700.94 g/mol $K^+$-Form, 83.4 %) resultierte. Ein Teil (7.93 g) des Polymers wurde mit Hilfe eines Ionenaustauschers (Dowex® Marathon® C) in die $H^+$-Form übergeführt. Es resultierte ein hellbraunes Polymer (6.96 g, 98.5 %), welches bei 60 °C im Vakuum für 12 h getrocknet wurde. Dem $^1$H-NMR Spektrum nach enthält das Polymer noch 3.7 $H_2O/SO_3H$, damit entspricht die gemessene Ionenaustauschkapazität (IEC) nach Abzug dieser 3.7 $H_2O/SO_3H$ (IEC = 3.116 mmol/g) in etwa der theoretisch zu erwartenden IEC von 3.201 mmol/g.

Löslichkeit:

Löslich in Wasser, Methanol ($H^+$-Form), Dimethylsulfoxid (DMSO), Dimethylformamid (DMF), 1-Methyl-2-pyrrolidon (NMP), *N,N'*-Dimethylacetamid (DMAc), konzentrierter Schwefelsäure.

Unlöslich in Methanol (Na/$K^+$-Form), Ethanol, Isopropanol, Toluol, Tetrahydrofuran (THF), Chloroform, Aceton.

| | |
|---|---|
| Austauschkapazität: | experimentell: 2.580 mmol/g (387.60 g/mol) für $H^+$-Form |
| | theoretisch: 2.638 mmol/g (379.03 g/mol) Annahme: 3.7 $H_2O/SO_3H$ |
| | theoretisch: 3.201 mmol/g (312.37 g/mol) Annahme: 0.0 $H_2O/SO_3H$ |
| Dichte: | 1.560 $g/cm^3$ für $H^+$-Form mit 3.7 $H_2O/SO_3H$ |

$^1$H-NMR (300 MHz, DMSO-$d_6$): $\delta$ = 8.09 (s, 2H, CH), 7.57 (d, 2H, CH, $J_{HH}$ = 8.3 Hz), 7.44 (d, 4H, CH, $J_{HH}$ = 7.9 Hz), 7.37 (d, 4H, CH, $J_{HH}$ = 7.9 Hz), 6.80 (d, 2H, CH, $J_{HH}$ = 8.3 Hz).
$^{13}$C-NMR (75.5 MHz, DMSO-$d_6$) : $\delta$ = 144.7 (s), 144.1 (s), 136.5 (s), 136.2 (s), 135.9 (s), 132.0 (s), 130.8 (s), 127.6 (s), 126.0 (s).
Molekulargewicht: $M_n$ = 21229 g/mol, $M_w$ = 52025 g/mol, D = 2.45 (GPC in DMF / 60 °C / Salzzusatz / relativ zu Polystyrol-Standard) für Na/$K^+$-Form

**II. Oxidation (n = 1.0):**

**sPS-360 (n = 1.0) Sulfoniertes Poly(1,4-phenylen-sulfon):**

20.0 g (28.5 mmol, M = 700.92 g/mol für Kalium-Form) fein-gemörserter violetter Feststoff aus obiger Reaktion (sPSS-312, n = 1.0) wurden in 400 mL Eisessig und 15 mL konzentrierter Schwefelsäure suspendiert. Zu der dunkelbraunen Reaktionsmischung wurden 26 mL einer Wasserstoffperoxidlösung (30 %ig, ca. 0.26 mol $H_2O_2$) langsam zugetropft. Diese Mischung wurde 36 h lang bei Raumtemperatur gerührt, wobei sich der Feststoff langsam entfärbte. Anschließend wurde die Mischung mit 200 mL Eisessig verdünnt. Der blassgelbe bis farblose Feststoff wurde abfiltriert und mehrmals mit Eisessig gewaschen. Zur Entfernung aller Nebenprodukte wurde das Polymer unter Anwendung von 48-stündiger Dialyse (Dialyseschlauch von Sigma-Aldrich, Molekulargewichts-Ausschluss = 12000 - 14000) gereinigt, wobei nach Entfernen des Lösungsmittels und Trocknen bei 60 °C im Vakuum ein blassgelber Feststoff (18.25 g, M = 720.74 g/mol = 88.9 %) resultierte. Transparente Filme konnten aus DMAc-, DMSO- und NMP-Lösungen (20 wt%) erhalten werden.

Löslichkeit:

Löslich in Dimethylsulfoxid (DMSO), Dimethylformamid (DMF), 1-Methyl-2-pyrrolidon (NMP), *N*,*N'*-Dimethylacetamid (DMAc);
unlöslich in Wasser (nur Quellung), Methanol, Ethanol, Isopropanol, Toluol, Tetrahydrofuran (THF), Chloroform, Aceton.

Leitfähigkeit bei 25 °C: 128 mS/cm (in flüssigem Wasser)

| | |
|---|---|
| E-Modulus bei 30 °C: | 600 MPa (DMA mit 1 Hz, in Luft gemessen, vorher in Wasser gequollen) |
| Relative Viskosität: | 2.972 bei 25 °C, c = 1 g/dL in DMSO |
| Inhärente Viskosität: | 1.089 dL/g bei 25 °C, c = 1 g/dL in DMSO |
| Austauschkapazität: | experimentell: 2.730 mmol/g (366.30 g/mol) für $H^+$-Form |
| | theoretisch: 2.775 mmol/g (360.37 g/mol) Annahme: 0.0 $H_2O/SO_3H$ |
| Dichte: | g / $cm^3$ für $H^+$-Form (keine Daten) |

$^1$H-NMR (300 MHz, DMSO-$d_6$) : $\delta$ = 8.44 (br, 4H, CH), 8.16 (br, 2H, CH), 7.94 (br, 4H, CH), 7.89 (br, 4H, CH), 5.01 (br, 9H, $H_2O$).
$^{13}$C-NMR (75.5 MHz, DMSO-$d_6$) : $\delta$ = 150.0 (s), 146.9 (s), 144.7 (s), 144.1 (s), 141.2 (s), 134.2 (s), 129.9 (s), 128.6 (s).

## 3. Ansatz

### I. Polymerisation (n = 0.8):

**sPSS-370 (n = 0.8) Sulfoniertes Poly(1,4-phenylen-sulfon-1,4-phenylen-sulfid-1,4-phenylen-sulfid-1,4-phenylen-sulfid) :**

Die Polymerisation wurde in einem ausgeheizten und mit Argon gefüllten 1000-mL-Kolben durchgeführt, der mit einem Argoneinlass, einem mechanischen Rührer und einer Dean-Stark-Falle, versehen mit einem Kühler, ausgerüstet war. In den Kolben wurden 30.090 g (65.65 mmol) Dinatrium-3,3'-disulfonat-4,4'-difluorodiphenylsulfon, 4.173 g (16.40 mmol) 4,4'-Difluorodiphenylsulfon, 20.548 g (82.06 mmol) 4,4'-Thiobisbenzolthiol und 17.0 g (0.123 mol) trockenes Kaliumcarbonat zugegeben. Dann wurden 200 mL trockenes 1-Methyl-2-pyrrolidon (NMP) und 80 mL trockenes Toluol zugegeben und die Reaktionsmischung unter Argonstrom für 30 Minuten bei Raumtemperatur gerührt. Anschließend wurde die Reaktionsmischung in einem Ölbad auf 150 °C für 3 h erwärmt, um jegliches Wasser zu entfernen (Wasserabscheider). Das Toluol wurde anschließend durch Leeren der Dean-Stark-Falle entfernt (abdestilliert) und die Reaktion wurde 36 h lang bei 185 °C fortgesetzt, wobei nach 24 h weitere 100 mL NMP zugegeben wurden. Nach Abkühlen auf Raumtemperatur wurde die dunkelviolette Suspension langsam in Isopropanol (1200 mL) getropft, um das Polymer auszufällen. Das violette Präzipitat wurde abfiltriert und mit Isopropanol gewaschen. Das Produkt wurde dann in 600 mL Wasser gelöst (dunkelviolette Lösung), wiederum in Isopropanol (1200 mL) ausgefällt, dann das graue Präzipitat abfiltriert und mit Isopropanol gewaschen. Zur Entfernung aller Nebenprodukte wurde das Polymer unter Anwendung von 36-stündiger Dialyse (Dialyseschlauch mit Molekulargewichts-Ausschluss = 12000-14000) gereinigt, wobei nach Entfernen des Lösungsmittels und Trocknen bei 60 °C im Vakuum ein dunkelvioletter Feststoff (33.07 g, M = 653.66 g/mol $K^+$-Form, 61.7 %) resultierte. Ein Teil (7.47 g) des Polymers wurde mit Hilfe eines Ionenaustauschers (Dowex® Marathon® C) in die $H^+$-Form übergeführt. Es resultierte ein hellbrauner Feststoff (6.50 g, 96.0 %), welcher bei 60 °C im Vakuum für 12 h getrocknet wurde.

Löslichkeit:

Löslich in Wasser, Methanol ($H^+$-Form), Dimethylsulfoxid (DMSO), Dimethylformamid (DMF), 1-Methyl-2-pyrrolidon (NMP), *N,N'*-Dimethylacetamid (DMAc), konzentrierter Schwefelsäure; unlöslich in Methanol (Na/$K^+$-Form), Ethanol, Isopropanol, Toluol, Tetrahydrofuran (THF), Chloroform, Aceton.

| | |
|---|---|
| Austauschkapazität: | experimentell: 2.175 mmol/g (459.77 g/mol) für $H^+$-Form |
| | theoretisch: 2.175 mmol/g (459.77 g/mol) Annahme: 5.0 $H_2O/SO_3H$ |
| | theoretisch: 2.699 mmol/g (370.45 g/mol) Annahme: 0.0 $H_2O/SO_3H$ |
| Dichte: | 1.526 $g/cm^3$ für $H^+$-Form |

$^1$H-NMR (300 MHz, DMSO-$d_6$): $\delta$ = 8.09, 7.70, 7.57, 7.44, 7.37, 7.20, 6.80.

$^{13}$C-NMR (75.5 MHz, DMSO-$d_6$): $\delta$ = 144.7 (s), 144.4 (weak s), 144.2 (s), 138.5 (weak s), 136.5 (s), 136.2 (s), 135.9 (s), 135.6 (weak s), 132.0 (s), 130.8 (s), 130.2 (weak s), 128.4 (s), 127.6 (s), 126.0 (s).

Molekulargewicht: $M_n$ = 169680 g/mol, $M_w$ = 315424 g/mol, D = 1.86 (GPC in DMF / 60 °C / Salzzusatz / relativ zu Polystyrol-Standard) für Na/$K^+$-Form

II. Oxidation (n = **0.8):**

**sPS-430 (n = 0.8) Sulfoniertes Poly(1,4-phenylen-sulfon):**

20.0 g (28.5 mmol, M = 700.92 g/mol für Kalium-Form) fein-gemörserter violetter Feststoff aus obiger Reaktion (sPSS-370 ,n = 0.8) wurden in 400 mL Eisessig und 15 mL konzentrierter Schwefelsäure suspendiert. Zu der dunkelbraunen Reaktionsmischung wurden 26 mL einer Wasserstoffperoxidlösung (30 %ig, ca. 0.26 mol $H_2O_2$) langsam zugetropft. Diese Mischung wurde 36 h lang bei Raumtemperatur gerührt, wobei sich der Feststoff langsam entfärbte. Anschließend wurde die Mischung mit 200 mL Eisessig verdünnt. Der blassgelbe bis farblose Feststoff wurde abfiltriert und mehrmals mit Eisessig gewaschen. Zur Entfernung aller Nebenprodukte wurde das Polymer unter Anwendung einer 48-stündigen Dialyse (Dialyseschlauch von Sigma-Aldrich, Molekulargewichts-Ausschluss = 12000 - 14000) gereinigt, wobei nach Entfernen des Lösungsmittels und Trocknen bei 60 °C im Vakuum ein blassgelber Feststoff (18.25 g, M = 720.74 g/mol = 88.9 %) resultierte. Transparente Filme konnten aus DMSO-, DMAc- und NMP-Lösungen (20 wt%) erhalten werden.

Löslichkeit:

Löslich (nach Erwärmen) in Dimethylsulfoxid (DMSO), Dimethylformamid (DMF), 1-Methyl-2-pyrrolidon (NMP), *N,N'*-Dimethylacetamid (DMAc);
unlöslich in Wasser (nur Quellung), Methanol, Ethanol, Isopropanol, Toluol, Tetrahydrofuran (THF), Chloroform, Aceton.

Leitfähigkeit bei 25 °C: 130 mS/cm (in flüssigem Wasser)

| | |
|---|---|
| E-Modulus bei 60 °C: | 600 MPa (DMA mit 1 Hz, in Luft gemessen, vorher in Wasser gequollen) |
| Austauschkapazität: | experimentell: 1.970 mmol/g (507.61 g/mol) für $H^+$-Form |
| | theoretisch: 1.970 mmol/g (507.61 g/mol) Annahme: 4.3 $H_2O/SO_3H$ |
| | theoretisch: 2.323 mmol/g (430.45 g/mol) Annahme: 0.0 $H_2O/SO_3H$ |
| Dichte: | 1.66 $g/cm^3$ für $H^+$-Form |

$^1$H-NMR (300 MHz, DMSO-$d_6$) : $\delta$ = 8.48 (d), 8.44 (s), 8.16 (d), 8.10 (s), 7.94 (d), 7.89 (d), 5.0 ($H_2O$).
$^{13}$C-NMR (75.5 MHz, DMSO-$d_6$): $\delta$ = 150.1 (s), 146.9 (s), 145.1 (weak s), 144.7 (s), 144.1 (s), 143.6 (weak s), 141.2 (s), 134.2 (s), 130.2 (s), 129.9 (s), 128.6 (s).
Molekulargewicht: $M_n$ = 44151 , $M_w$ = 679752 g/mol, D = 15.4 (GPC in DMF / 60 °C / Salzzusatz / relativ zu Polystyrol-Standard) für $H^+$-Form (geringe Löslichkeit in DMF).

**BEISPIEL 4**

Synthese eines Poly(sulfonsäurephenylensulfons) mit variabler Austauschkapazität: Sulfoniertes Poly(1,4-phenylen-sulfon-1,4-phenylen-sulfon-1,3-phenylen-sulfon) mit n = 1.0 und 0.8

Dithiol-Komponente: Benzol-1,3-dithiol

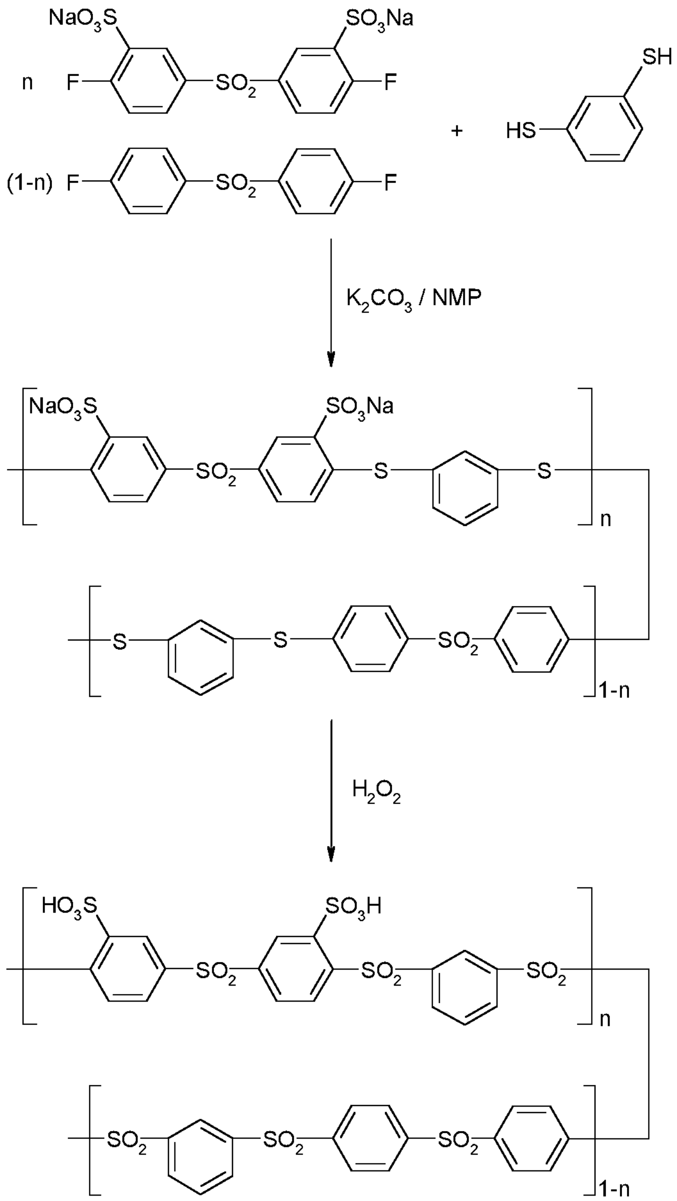


$$EW(sPS-II) = \frac{580.58\,n + 420.46\,(1-n)}{2\,n}$$

$$EW(sPSS-II) = \frac{516.58\,n + 356.47\,(1-n)}{2\,n}$$

| N | 1.0 | 0.9 | 0.8 | 0.7 | 0.6 | 0.5 |
|---|---|---|---|---|---|---|
| IEC(sPS-II) | 3.4448 | 3.1883 | 2.9167 | 2.6289 | 2.3232 | 1.9979 |
| EW(sPS-II) | 290.29 | 313.65 | 342.85 | 380.39 | 430.44 | 500.52 |
| MW(sPS-II) | 580.58 | 564.57 | 548.56 | 532.54 | 516.53 | 500.52 |
| IEC(sPSS-II) | 3.8716 | 3.5959 | 3.3020 | 2.9880 | 2.6517 | 2.2908 |
| EW(sPSS-II) | 258.29 | 278.09 | 302.85 | 334.68 | 377.11 | 436.53 |
| MW(sPSS-II) | 516.58 | 500.57 | 484.56 | 468.55 | 452.54 | 436.53 |
| MW(sPSS-II-Na) | 560.54 | 540.13 | 519.73 | 499.32 | 478.91 | 458.51 |

**I. Polymerisation (n = 1.0):**

**Sulfoniertes Poly(1,4-phenylen-sulfon-1,4-phenylen-sulfid-1,3-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 4.8537 g (9.531 mmol, M = 509.25 g/mol) Dinatrium-3,3'-disulfonat-4,4'-dichlorodiphenylsulfon-Monohydrat, 1.3557 g (9.531 mmol) Benzol-1,3-dithiol und 1.449 g (10.5 mmol) trockenes Kaliumcarbonat zugegeben. Diese Mischung wurde 2 h lang bei 70 °C im Vakuum ($2 \cdot 10^{-3}$ mbar) getrocknet. Dann wurden unter Argon 15 ml trockenes 1-Methyl-2-pyrrolidon (NMP) und 25 ml trockenes Toluol zugegeben und die Reaktionsmischung wurde in einem Ölbad auf 150 °C für 4 h erwärmt, um jegliches Wasser zu entfernen (Wasserabscheider). Das Toluol wurde anschließend durch Leeren der Dean-Stark-Falle entfernt (abdestilliert) und die Reaktion wurde 20 h lang bei 190 °C fortgesetzt. Nach Abkühlen auf Raumtemperatur wurde die schwach gelblich gefärbte Suspension langsam in Isopropanol (500 ml) gegossen, um das Polymer auszufällen. Das schwach rosa gefärbte Präzipitat wurde abfiltriert und mit Isopropanol gewaschen. Das Produkt wurde dann erneut in 50 ml Wasser gelöst, wiederum in Isopropanol (800 ml) ausgefällt, abfiltriert, mit Isopropanol gewaschen und im Vakuum ($2 \cdot 10^{-3}$ mbar) getrocknet. Zur Entfernung aller Nebenprodukte wurde das Polymer unter Anwendung von 24-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum ($2 x \cdot 10^{-3}$ mbar) ein rosa gefärbter Feststoff (5.10 g, M = 560.54 g/mol $Na^+$-Form = 9.10 mmol) resultierte. Ein Teil des Natriumsalzes (ca. 1.0 g) wurde mittels eines Ionenaustauschers (Dowex® Marathon® C) in die $H^+$-Form umgewandelt.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc), konzentrierter Schwefelsäure;
unlöslich in wässriger 1M-NaCl-Lösung, Methanol, Ethanol, Isopropanol, Toluol, Tetrahydrofuran (THF), Chloroform, Aceton, Ethylacetat, Trifluoressigsäure.

| | |
|---|---|
| Austauschkapazität: | experimentell: 3.940 mmol/g (253.81 g/mol) für $H^+$-Form |
| | theoretisch: 3.619 mmol/g (276.31 g/mol) Annahme: 1.0 $H_2O/SO_3H$ |
| | theoretisch: 3.872 mmol/g (258.29 g/mol) Annahme: 0.0 $H_2O/SO_3H$ |
| Dichte: | 1.5778 g / $cm^3$ für $H^+$-Form |
| Analyse: | experimentell: C: 31.27, H: 4.28, S: 21.61, Cl: 0.67 |
| | theoretisch: C: 41.85, H: 2.34, S: 31.03, Cl: 0.00 mit 0.0 $H_2O/SO_3H$ |
| | theoretisch: C: 31.02, H: 4.63, S: 23.00, Cl: 0.00 mit 5.0 $H_2O/SO_3H$ |
| | theoretisch: C: 30.87, H: 4.61, S: 22.89, Cl: 0.51 mit 5.0 $H_2O/SO_3H$ und Polymerisationsgrad = 20, Cl-Endgruppen |

$^1H$-NMR (300 MHz, DMSO-$d_6$) : $\delta$ = 8.08 (d, 2H, CH, $J_{HH}$ = 1.7 Hz), 7.61 (s, 1H, CH), 7.56 (dd, 2H, CH, $J_{HH}$ = 1.7, 7.2 Hz), 7.48 (s, 3H, CH), 6.85 (d, 2H, CH, $J_{HH}$ = 7.2 Hz), 4.96 (s, $H_2O$).
$^{13}C$-NMR (75.5 MHz, DMSO-$d_6$): $\delta$ = 145.4 (s), 144.5 (s), 141.3 (s), 137.3 (s), 136.7 (s), 134.2 (s), 132.7 (s), 128.6 (s), 128.5 (s), 126.8 (s).

II. **Oxidation (n = 1.0) :**

**Sulfoniertes Poly(1,4-phenylen-sulfon-1,4-phenylen-sulfon-1,3-phenylen-sulfon):** 3.08 g (5.49 mmol, M = 560.54 g/mol) Feststoff aus obiger Reaktion wurden in 50 ml konzentrierter Schwefelsäure gelöst. Zu dieser schwach grünlich gefärbten Lösung tropfte man langsam 5 ml einer 36 % Wasserstoffperoxidlösung (ca. 50 mmol $H_2O_2$) , wobei eine Farbaufhellung nach blassgelb auftrat. Diese Mischung wurde 1 d lang bei Raumtemperatur gerührt. Nach Verdünnen der Mischung mit 200 ml Wasser wurde die Schwefelsäure durch Dialyse entfernt (Dialyseschlauch von Sigma-Aldrich, Molekulargewichts-Ausschluss = 3000). Das Wasser wurde mit Hilfe eines Rotationsverdampfers entfernt und das Produkt bei 50 °C im Vakuum getrocknet ($2 \cdot 10^{-3}$ mbar). Die Ausbeute betrug 2.40 g (4.13 mmol, M = 580.58 g/mol) eines blassgelben Feststoffs.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc); unlöslich in wässriger 1M-NaCl-Lösung, Methanol, Ethanol, Isopropanol, Toluol, Tetrahydrofuran (THF), Chloroform, Aceton, Ethylacetat, Trifluoressigsäure.

| | |
|---|---|
| Austauschkapazität: | experimentell: 2.270 mmol/g (440.53 g/mol) für $H^+$-Form |
| | theoretisch: 2.302 mmol/g (434.41 g/mol) Annahme: 8.0 $H_2O/SO_3H$ |
| | theoretisch: 3.445 mmol/g (290.29 g/mol) Annahme: 0.0 $H_2O/SO_3H$ |
| Dichte: | 1.6503 g / $cm^3$ für $H^+$-Form |

$^1$H-NMR (300 MHz, DMSO-$d_6$): $\delta$ = 8.45 und 8.44 (zwei s, zusammen 4H, CH), 8.16 (d, 2H, CH, $J_{HH}$ = 7.2 Hz), 7.88 (d, 2H, CH, $J_{HH}$ = 7.2 Hz), 7.46 (t, 1H, CH, $J_{HH}$ = 6.5 Hz), 3.87 (s, $H_2O$).
$^{13}$C-NMR (75.5 MHz, DMSO-$d_6$) : $\delta$ = 149.6 (s), 144.4 (s), 142.4 (s), 141.9 (s), 134.2 (s), 133.4 (s), 130.1 (s), 129.9 (s), 129.8 (s), 128.4 (s) .

**I. Polymerisation (n = 0.8):**

**Sulfoniertes Poly(1,4-phenylen-sulfon-1,4-phenylen-sulfid-1,3-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 4.4466 g (9.335 mmol) Dinatrium-3,3'-disulfonat-4,4'-difluorodiphenylsulfon-Monohydrat, 0.5933 g (2.334 mmol) 4,4'-Difluorodiphenylsulfon, 1.6596 g (11.668 mmol) Benzol-1,3-dithiol und 3.225 g (23.336 mmol) trockenes Kaliumcarbonat zugegeben. Diese Mischung wurde 2 h lang bei 90 °C im Vakuum (2 · $10^{-3}$ mbar) getrocknet. Dann wurden unter Argon 20 ml trockenes 1-Methyl-2-pyrrolidon (NMP) und 35 ml trockenes Toluol zugegeben und die Reaktionsmischung wurde in einem Ölbad auf 145 °C für 4 h erwärmt, um jegliches Wasser zu entfernen (Wasserabscheider). Das Toluol wurde anschließend durch Leeren der Dean-Stark-Falle entfernt (abdestilliert) und die Reaktion wurde 24 h lang bei 180 °C fortgesetzt. Nach Abkühlen auf Raumtemperatur wurde die dunkelviolette Lösung langsam in Isopropanol (800 ml) gegossen, um das Polymer auszufällen. Das rosa gefärbte Präzipitat wurde abfiltriert und mit Isopropanol gewaschen. Das Produkt wurde dann erneut in 50 ml Wasser gelöst (violette Lösung), wiederum in Isopropanol (800 ml) ausgefällt, abfiltriert, mit Isopropanol gewaschen und im Vakuum (2 x · $10^{-3}$ mbar) getrocknet. Zur Entfernung aller Nebenprodukte wurde das Polymer unter Anwendung von 24-stündiger Dialyse (Dialyseschlauch von Sigma-Aldrich, Molekulargewichts-Ausschluss = 3000) gereinigt, wobei nach Entfernen des Lösungsmittels und Trocknen bei 50 °C im Vakuum (2 · $10^{-3}$ mbar) ein violetter Feststoff (3.66 g, M = 519.73 g/mol $Na^+$-Form = 7.04 mmol) resultierte.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc), konzentrierter Schwefelsäure;
unlöslich in Methanol, Ethanol, Isopropanol, Toluol, Tetrahydrofuran (THF), Chloroform, Methylenchlorid, Aceton.
$^1$H-NMR (300 MHz, DMSO-$d_6$): $\delta$ = 8.10, 7.73, 7.62, 7.59, 7.51, 7.24, 6.78.
$^{13}$C-NMR (75.5 MHz, DMSO-$d_6$): $\delta$ = 145.4, 145.1, 144.8, 144.6, 144.1, 141.3, 140.0, 139.1, 138.6, 137.3, 136.9, 136.7, 136.6, 135.3, 134.2, 133.3, 132.7, 128.9, 128.6, 128.5, 127.5, 126.7, 126.5.

**II. Oxidation (n = 0.8):**

**Sulfoniertes Poly(1,4-phenylen-sulfon-1,4-phenylen-sulfon-1,3-phenylen-sulfon):** 3.066 g (5.90 mmol, M = 519.73 g/mol) Feststoff aus obiger Reaktion wurden in 50 ml konzentrierter Schwefelsäure suspendiert. Zu dieser grünen Suspension tropfte man langsam 6 ml einer 36 % Wasserstoffperoxidlösung (ca. 60 mmol $H_2O_2$), wobei eine Farbaufhellung nach blassgelb auftrat. Diese Mischung wurde 1 d lang bei Raumtemperatur gerührt. Nach Verdünnen der Mischung mit 200 ml Wasser wurde die Schwefelsäure durch Dialyse entfernt (Dialyseschlauch von Sigma-Aldrich, Molekulargewichts-Ausschluss = 3000). Das Wasser wurde mit Hilfe eines Rotationsverdampfers entfernt und das Produkt bei 50 °C im Vakuum getrocknet (2 · $10^{-3}$ mbar). Die Ausbeute betrug 2.21 g (4.0 mmol, M = 548.56 g/mol) eines blassgelben Feststoffs.

| | |
|---|---|
| Löslichkeit: | praktisch unlöslich in allen Lösungsmitteln in $H_2O$ (Quellung) |
| Austauschkapazität: | experimentell: 2.680 mmol/g (373.13 g/mol) für $H^+$-Form |
| | theoretisch: 2.624 mmol/g (381.10 g/mol) Annahme: 4.5 $H_2O/SO_3H$ |
| | theoretisch: 2.677 mmol/g (373.55 g/mol) Annahme: 4.0 $H_2O/SO_3H$ |

(fortgesetzt)

| | |
|---|---|
| | theoretisch: 2.919 mmol/g (342.58 g/mol) Annahme: 0.0 $H_2O/SO_3H$ |
| Dichte: | 1.648 g / $cm^3$ für $H^+$-Form |
| Analyse: | experimentell: C: 31.83, H: 3.12, S: 21.24 für $H^+$-Form |
| | theoretisch: C: 39.41, H: 2.20, S: 26.88, mit 0.0 $H_2O/SO_3H$ |
| | theoretisch: C: 31.87, H: 3.92, S: 21.74, mit 4.5 $H_2O/SO_3H$ |

$^1$H-NMR (300 MHz, DMSO-$d_6$): $\delta$ = 8.45 (br, CH), 8.08 (br, CH), 7.84 (br, CH), 6.19 (br, CH), 5.66 (br, CH), 4.04 ($H_2O$).

$^{13}$C-NMR: unbekannt, aufgrund sehr geringer Löslichkeit

Molekulargewicht: unbekannt, aufgrund sehr geringer Löslichkeit

**BEISPIEL 5**

Synthese eines Poly(sulfonsäurephenylensulfons) mit variabler Austauschkapazität: Sulfoniertes Poly(1,4-phenylen-sulfon-1,4-phenylen-sulfon-1,4-phenylen-oxid) mit n = 1.0

Dithiol-Komponente: 4,4'-Oxobisbenzolthiol (Bis-(4-Mercapto-phenyl)-oxid)

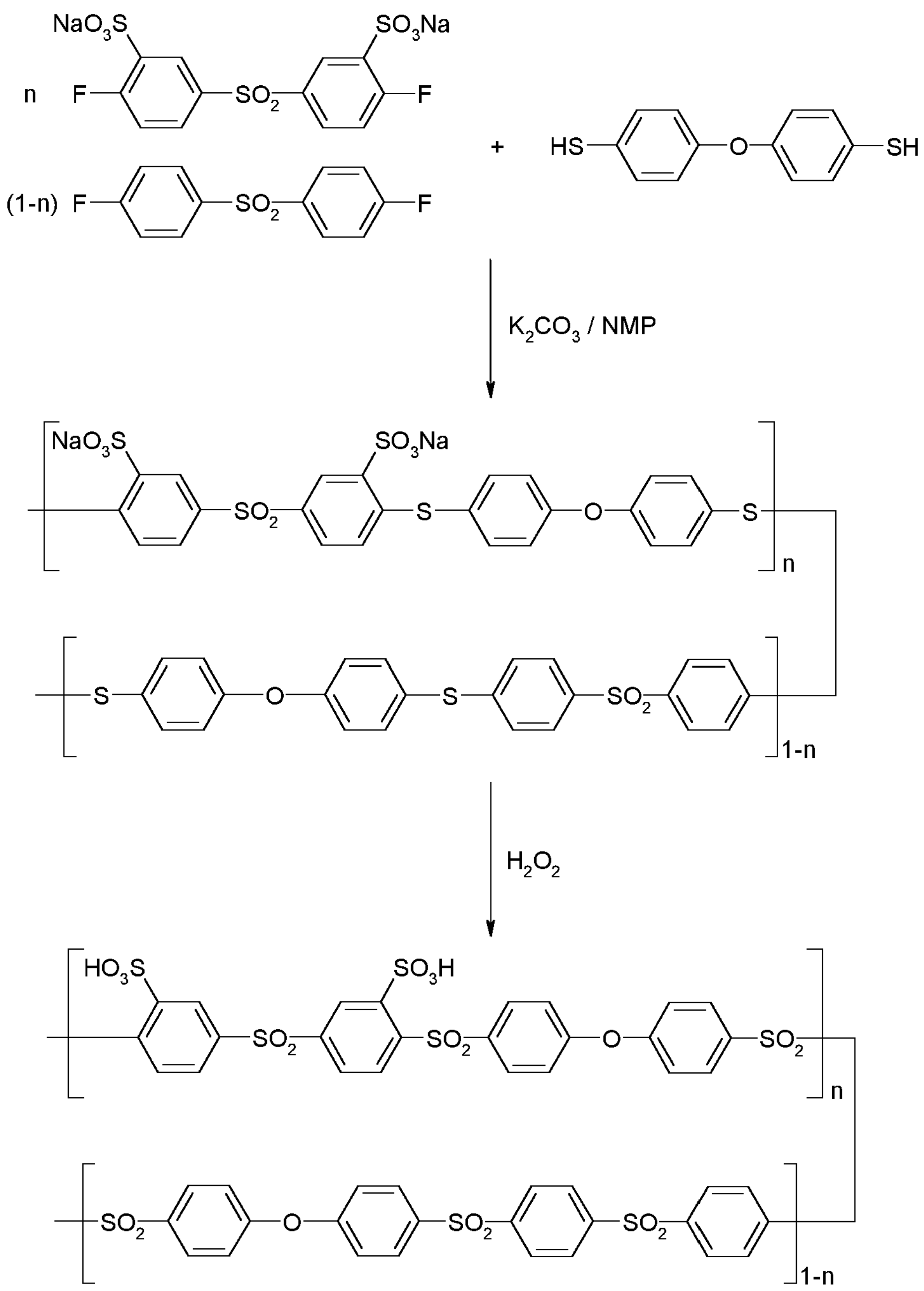


$$EW(sPS-IV) = \frac{672.68\ n + 512.56\ (1-n)}{2\ n}$$

$$EW(sPSS-IV) = \frac{608.68\ n + 448.56\ (1-n)}{2\ n}$$

| n | 1.0 | 0.9 | 0.8 | 0.7 | 0.6 | 0.5 |
|---|---|---|---|---|---|---|
| IEC(sPS-IV) | 2.9732 | 2.7411 | 2.4974 | 2.2413 | 1.9716 | 1.6874 |
| EW(sPS-IV) | 336.34 | 364.82 | 400.41 | 446.17 | 507.19 | 592.62 |
| MW(sPS-IV) | 672.68 | 656.67 | 640.66 | 624.64 | 608.63 | 592.62 |
| IEC(sPSS-IV) | 3.2858 | 3.0371 | 2.7746 | 2.4971 | 2.2033 | 1.8917 |

(fortgesetzt)

| n | 1.0 | 0.9 | 0.8 | 0.7 | 0.6 | 0.5 |
|---|---|---|---|---|---|---|
| EW(sPSS-IV) | 304.34 | 329.26 | 360.41 | 400.46 | 453.86 | 528.62 |
| MW(sPSS-IV) | 608.68 | 592.67 | 576.66 | 560.64 | 544.63 | 528.62 |
| MW(sPSS-IV-Na) | 652.64 | 632.23 | 611.82 | 591.42 | 571.01 | 550.60 |

**I. Polymerisation:**

**Sulfoniertes Poly(1,4-phenylen-sulfon-1,4-phenylen-sulfid-1,4-phenylen-oxid-1,4-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 2.2566 g (4.404 mmol) Dinatrium-3,3'-disulfonat-4,4'-difluorodiphenylsulfon-Trihydrat, 1.0320 g (4.404 mmol) 4,4'-Oxobisbenzolthiol und 0.852 g (6.16 mmol) trockenes Kaliumcarbonat zugegeben. Diese Mischung wurde 2 h lang bei 70 °C im Vakuum ($2 \cdot 10^{-3}$ mbar) getrocknet. Dann wurden unter Argon 18 ml trockenes 1-Methyl-2-pyrrolidon (NMP) und 40 ml trockenes Toluol zugegeben und die Reaktionsmischung wurde in einem Ölbad auf 145 °C für 4 h erwärmt, um jegliches Wasser zu entfernen (Wasserabscheider). Das Toluol wurde anschließend durch Leeren der Dean-Stark-Falle entfernt (abdestilliert) und die Reaktion wurde 15 h lang bei 185 °C fortgesetzt. Nach Abkühlen auf Raumtemperatur wurde die schwarze Suspension langsam in Isopropanol (600 ml) getropft, um das Polymer auszufällen. Das braune Präzipitat wurde abfiltriert und mit Isopropanol gewaschen. Das Produkt wurde dann erneut in 100 ml Wasser gelöst, wiederum in Isopropanol (600 ml) ausgefällt, abfiltriert und mit Isopropanol gewaschen und im Vakuum ($2 \cdot 10^{-3}$mbar) getrocknet. Zur Entfernung aller Nebenprodukte wurde das Polymer unter Anwendung von 12-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum ($2 \cdot 10^{-3}$ mbar) ein dunkelbrauner Feststoff (2.89 g, M = 652.64 g/mol $Na^+$-Form = 4.43 mmol) resultierte. Ein Teil des Natriumsalzes (Ansatz 38) (ca. 1.0 g) wurde mittels eines Ionenaustauschers (Dowex® Marathon C) in die $H^+$-Form umgewandelt.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc), konz. Schwefelsäure;
unlöslich in wässriger 1M-NaCl-Lösung, Methanol, Ethanol, Isopropanol, Toluol, Tetrahydrofuran (THF), Chloroform, Aceton, Ethylacetat, Trifluoressigsäure.

| | |
|---|---|
| Austauschkapazität: | experimentell: 3.190 mmol/g (313.48 g/mol) für $H^+$-Form |
| | theoretisch: 3.102 mmol/g (322.36 g/mol) Annahme: 1.0 $H_2O/SO_3H$ |
| | theoretisch: 3.286 mmol/g (304.34 g/mol) Annahme: 0.0 $H_2O/SO_3H$ |
| Dichte: | 1.4974 g / $cm^3$ für $H^+$-Form |
| Analyse: | experimentell: C: 36.78, H: 3.94, S: 20.76, Cl: 0.79 |
| | theoretisch: C: 47.35, H: 2.65, S: 26.33, Cl: 0.00 mit 0.0 $H_2O/SO_3H$ |
| | theoretisch: C: 37.39, H: 4.45, S: 20.79, Cl: 0.00 mit 4.5 $H_2O/SO_3H$ |
| | theoretisch: C: 37.05, H: 4.41, S: 20.60, Cl: 0.91 mit 4.5 $H_2O/SO_3H$ und Polymerisationsgrad = 10, Cl-Endgruppen |

$^1$H-NMR (300 MHz, DMSO-$d_6$): $\delta$ = 8.08 (s, 2H, CH), 7.56 (d, 2H, CH, $J_{HH}$ = 8.4 Hz), 7.47 (d, 4H, CH, $J_{HH}$ = 8.2 Hz), 7.13 (d, 4H, CH, $J_{HH}$ = 8.2 Hz), 6.74 (d, 2H, CH, $J_{HH}$ = 8.4 Hz) .
$^{13}$C-NMR (75.5 MHz, DMSO-$d_6$): $\delta$ = 158.1 (s), 145.9 (s), 144.5 (s), 138.5 (s), 136.9 (s), 128.3 (s), 127.7 (s), 126.6 (s), 125.9 (s), 121.3 (s) .
Molekulargewicht: $M_n$ = 2217, $M_w$ = 3402 g/mol, D = 1.5346 (GPC) für $Na^+$-Form

**II. Oxidation:**

**Sulfoniertes Poly(1,4-phenylen-sulfon-1,4-phenylen-sulfon-1,4-phenylen-oxid):** 1.55 g (2.37 mmol, M = 652.64 mol/g) fein-gemörserter Feststoff aus obiger Reaktion wurden in 50 ml Eisessig und 5 ml konzentrierter Schwefelsäure suspendiert. Die dunkelbraune Reaktionsmischung wurde auf 55 °C erhitzt, wobei 4 ml einer 36 % Wasserstoffperoxidlösung (ca. 40 mmol $H_2O_2$) langsam zugetropft wurden. Diese Mischung wurde 5 h lang bei 55 °C gerührt,

wobei der Feststoff langsam heller wurde. Anschließend wurde die Mischung kurz auf 110 °C erhitzt, um überschüssiges Peroxid zu entfernen. Dann wurde die Mischung mit 150 ml Eisessig verdünnt. Der blassgelbe Feststoff wurde abfiltriert und mehrmals mit Eisessig gewaschen. Zur Entfernung aller Nebenprodukte wurde das Polymer unter Anwendung von 48-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum (2 · $10^{-3}$mbar) ein hellbrauner Feststoff (1.45 g, M = 672.68 g/mol, 2.16 mmol) resultierte.

Löslichkeit:

Löslich in Wasser, Dimethylsulfoxid (DMSO), Dimethylformamid (DMF), 1-Methyl-2-pyrrolidon (NMP), *N,N'*-Dimethylacetamid (DMAc), konzentrierter Schwefelsäure;
unlöslich in Methanol, Ethanol, Isopropanol, Toluol, Tetrahydrofuran (THF), Chloroform, Aceton.

| | |
|---|---|
| Austauschkapazität: | experimentell: 1.930 mmol/g (518.13 g/mol) für $H^+$-Form |
| | theoretisch: 1.936 mmol/g (516.49 g/mol) Annahme: 10.0 $H_2O/SO_3H$ |
| | theoretisch: 2.973 mmol/g (336.34 g/mol) Annahme: 0.0 $H_2O/SO_3H$ |
| Dichte: | 1.662 g / $cm^3$ für $H^+$-Form |

$^1H$-NMR (300 MHz, DMSO-$d_6$): $\delta$ = 8.47 (s, 2H, CH), 8.44 (d, 2H, CH, $J_{HH}$ = 7.7 Hz), 8.11 (d, 2H, CH, $J_{HH}$ = 7.7 Hz), 7.84 (d, 4H, CH, $J_{HH}$ = 7.9 Hz), 7.17 (s, 5H, $H_2O$), 7.04 (d, 2H, CH, $J_{HH}$ = 7.9 Hz).
$^{13}C$-NMR (75.5 MHz, DMSO-$d_6$): $\delta$ = 159.9 (s), 149.5 (s), 144.1 (s), 143.4 (s), 136.9 (s), 133.9 (s), 132.2 (s), 129.8 (s), 129.7 (s), 119.3 (s).

**BEISPIEL** 6

Synthese eines Poly(sulfonsäurephenylensulfons) mit variabler Austauschkapazität: Sulfoniertes Poly(1,4-phenylen-sulfon-1,4-phenylen-sulfon-1,4-phenylen-sulfon-1,4-phenylen-oxid-1,4-phenylen-sulfon-1,4-phenylen-oxid-1,4-phenylen-sulfon-1,4-phenylen-sulfon) mit n = 0.7

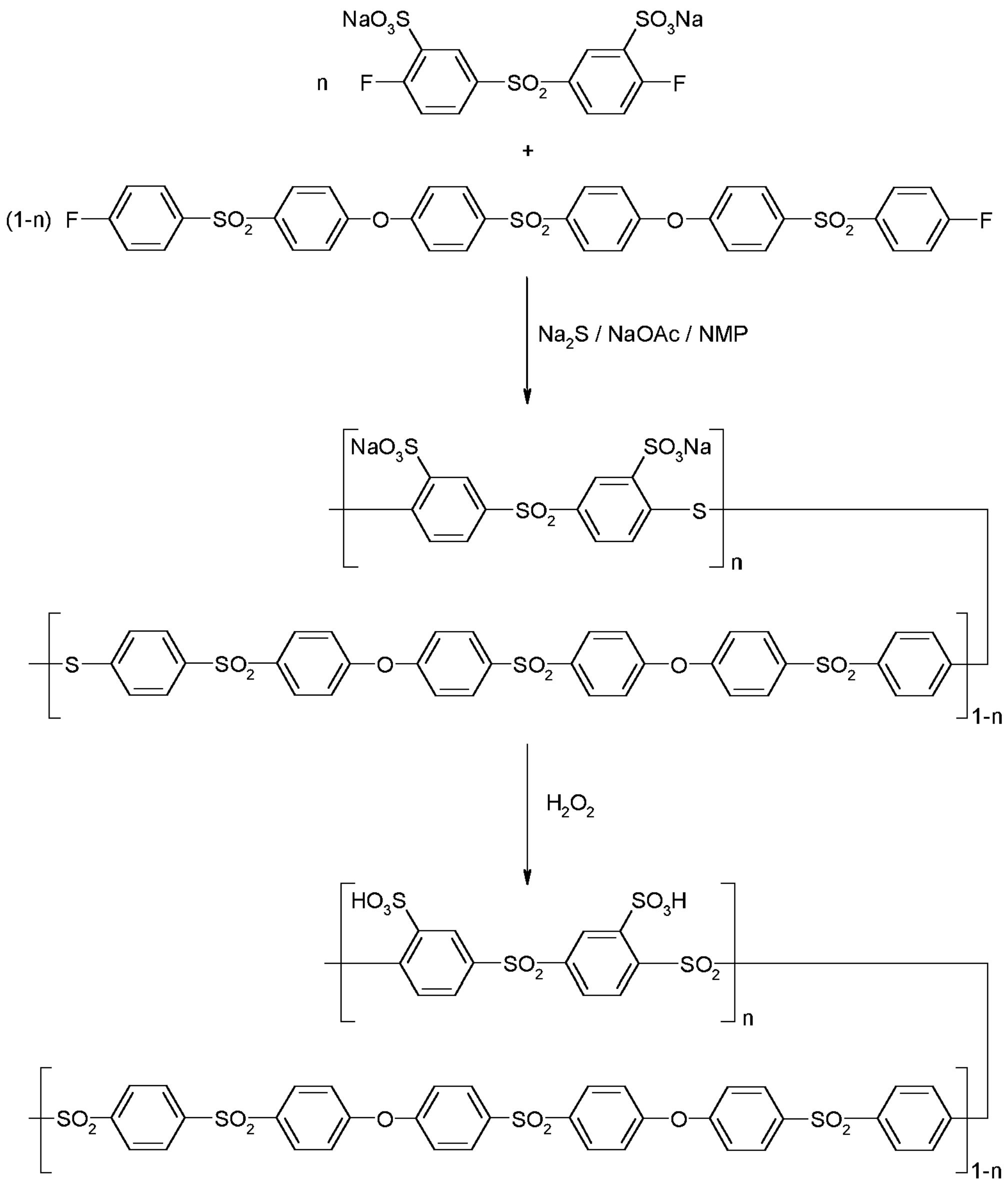


$$EW(sPS-V) = \frac{440.42\,n + 744.81\,(1-n)}{2\,n}$$

$$EW(sPSS-V) = \frac{408.43\,n + 712.82\,(1-n)}{2\,n}$$

| n | 1.0 | 0.9 | 0.8 | 0.7 | 0.6 | 0.5 |
|---|---|---|---|---|---|---|
| IEC(sPS-V) | 4.5411 | 3.8228 | 3.1917 | 2.6329 | 2.1346 | 1.6874 |
| EW(sPS-V) | 220.21 | 261.59 | 313.31 | 379.81 | 468.48 | 592.62 |
| MW(sPS-V) | 440.42 | 470.86 | 501.30 | 531.74 | 562.18 | 592.62 |
| IEC(sPSS-V) | 4.8968 | 4.1015 | 3.4093 | 2.8014 | 2.2634 | 1.7837 |
| EW(sPSS-V) | 204.22 | 243.82 | 293.32 | 356.96 | 441.82 | 560.63 |
| MW(sPSS-V) | 408.43 | 438.87 | 469.31 | 499.75 | 530.19 | 560.63 |
| MW(sPSS-V-Na) | 452.39 | 478.43 | 504.48 | 530.52 | 556.56 | 582.61 |

**I. Polymerisation:**

**Poly(1,4-phenylen-sulfon-1,4-phenylen-sulfid-1,4-phenylen-sulfon-1,4-phenylen-oxid-1,4-phenylen-sulfon-1,4-phenylen-oxid-1,4-phenylen-sulfon-1,4-phenylen-sulfid):** Die Polymerisation wurde in einem ausgeheizten und mit Argon gefüllten 100-ml-Rundkolben durchgeführt, der mit einem Argoneinlass, einem Magnetrührer und einer Dean-Stark-Falle, versehen mit einem Kühler, ausgerüstet war. In den Kolben wurden 3.7680 g (7.35 mmol) Dinatrium-3,3'-disulfonat-4,4'-difluorodiphenylsulfon-Trihydrat, 2.2650 g (3.15 mmol) Bis-(4-Fluorophenyl-sulfophenyloxophenyl)sulfon, 0.8199 g (10.50 mmol) Natriumsulfid ($Na_2S$) und 0.861 g (10.50 mmol) trockenes Natriumacetat zugegeben. Diese Mischung wurde 2 h lang bei 70 °C im Vakuum ($2 \cdot 10^{-3}$ mbar) getrocknet. Dann wurden unter Argon 18 ml trockenes 1-Methyl-2-pyrrolidon (NMP) und 40 ml trockenes Toluol zugegeben und die Reaktionsmischung wurde in einem Ölbad auf 150 °C für 4 h erwärmt, um jegliches Wasser zu entfernen (Wasserabscheider). Das Toluol wurde anschließend durch Leeren der Dean-Stark-Falle entfernt (abdestilliert) und die Reaktion wurde 15 h lang bei 190 °C fortgesetzt. Nach Abkühlen auf Raumtemperatur wurde die dunkelgrüne Suspension langsam in Isopropanol (600 ml) getropft, um das Polymer auszufällen. Das dunkelgrüne Präzipitat wurde abfiltriert und mit Isopropanol gewaschen. Das Produkt wurde dann in 200 ml Wasser suspendiert und zur Entfernung aller Nebenprodukte unter Anwendung von 24-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum ($2 \cdot 10^{-3}$ mbar) ein dunkelbrauner Feststoff (2.44 g, M = 530.52 g/mol $Na^+$-Form = 4.60 mmol) resultierte.

Löslichkeit:

Löslich in Dimethylsulfoxid (DMSO), Dimethylformamid (DMF), 1-Methyl-2-pyrrolidon (NMP), *N,N'*-Dimethylacetamid (DMAc);
unlöslich in Wasser (Quellung), Methanol, Ethanol, Isopropanol, Toluol, Tetrahydrofuran (THF), Chloroform, Aceton.

$^1$H-NMR (300 MHz, DMSO-$d_6$): $\delta$ = 8.21 (s, CH), 7.89, 7.86, 7.72, 7.69, 7.44, 7.17 (ohne Zuordnung der Signale), 3.25 (s, $H_2O$).

$^{13}$C-NMR (75.5 MHz, DMSO-$d_6$): $\delta$ = 160.1 (s), 148.7 (s), 141.7 (s), 141.1 (s), 140.9 (s), 139.0 (s), 137.3 (s), 136.8 (s), 135.0 (s), 132.1 (s), 130.9 (s), 129.3 (s), 128.9 (s), 127.0 (s), 120.6 (s), 117.0 (s).

**II. Oxidation:**

**Sulfoniertes Poly(1,4-phenylen-sulfon-1,4-phenylen-sulfon-1,4-phenylen-sulfon-1,4-phenylen-oxid-1,4-phenylen-sulfon-1,4-pheny-lenoxid-1,4-phenylen-sulfon-1,4-phenylen-sulfon):** 1.56 g (2.94 mmol) fein-gemörserter Feststoff aus obiger Reaktion wurden in 30 ml Eisessig und 2.7 ml konzentrierter Schwefelsäure suspendiert. Die dunkelbraune Reaktionsmischung wurde auf 55 °C erhitzt, wobei 1.5 ml einer 36 % Wasserstoffperoxidlösung (ca. 15 mmol $H_2O_2$) langsam zugetropft wurden. Diese Mischung wurde 3 h lang bei 55 °C gerührt, wobei die Reaktionsmischung langsam heller wurde. Anschließend wurde die Mischung kurz auf 110 °C erhitzt, um überschüssiges Peroxid zu entfernen. Dann wurde die Mischung mit 150 ml Eisessig verdünnt. Der schwach bräunlich gefärbte Feststoff wurde abfiltriert und mehrmals mit Eisessig gewaschen. Zur Entfernung aller Nebenprodukte wurde das Polymer unter Anwendung von 48-stündiger Dialyse (Dialyseschlauch von Sigma-Aldrich,

Molekulargewichts-Ausschluss = 8000) gereinigt, wobei nach Entfernen des Lösungsmittels und Trocknen bei 50 °C im Vakuum ($2 \cdot 10^{-3}$mbar) ein schwach bräunlich gefärbter Feststoff (0.977 g, 1.84 mmol, M = 531.74 g/mol) resultierte.

Löslichkeit:

Löslich in Dimethylsulfoxid (DMSO), Dimethylformamid (DMF), 1-Methyl-2-pyrrolidon (NMP), *N,N'*-Dimethylacetamid (DMAc);
unlöslich in Wasser (Quellung), Methanol, Ethanol, Isopropanol, Toluol, Tetrahydrofuran (THF), Chloroform, Aceton.

| | |
|---|---|
| Austauschkapazität: | experimentell: 1.595 mmol/g (627.00 g/mol) für $H^+$-Form |
| | theoretisch: 1.786 mmol/g (559.96 g/mol) Annahme: 10.0 $H_2O/SO_3H$ |
| | theoretisch: 2.633 mmol/g (379.81 g/mol) Annahme: 0.0 $H_2O/SO_3H$ |
| Dichte: | 1.570 g / $cm^3$ für $H^+$-Form |

$^1$H-NMR (300 MHz, DMSO-$d_6$) : $\delta$ = 8.33, 8.16, 8.09, 7.99, 7.87 (starkes Signal), 7.64, 7.49, 7.39, 7.15 (starkes Signal) (alle Signale ohne Zuordnung), 4.48 (s, $H_2O$).

$^{13}$C-NMR (75.5 MHz, DMSO-$d_6$): $\delta$ = 160.8 (s), 160.1 (s, starkes Signal), 159.8 (s), 148.6 (s), 147.7 (s), 146.8 (s), 144.7 (s), 143.8 (s), 143.4 (s), 142.5 (s), 142.1 (s), 137.3 (s, starkes Signal), 135.4 (s), 132.9 (s), 131.5 (s), 130.9 (s, starkes Signal), 130.1 (s), 129.6 (s), 129.0 (s), 128.6 (s), 128.1 (s), 127.7 (s), 120.9 (s), 120.6 (s, starkes Signal), 116.9 (s).

## BEISPIEL 7

Synthese eines Poly(sulfonsäurephenylensulfonketons) mit variabler Austauschkapazität: Sulfoniertes Poly(1,4-phenylen-keton-1,4-phenylen-sulfon)

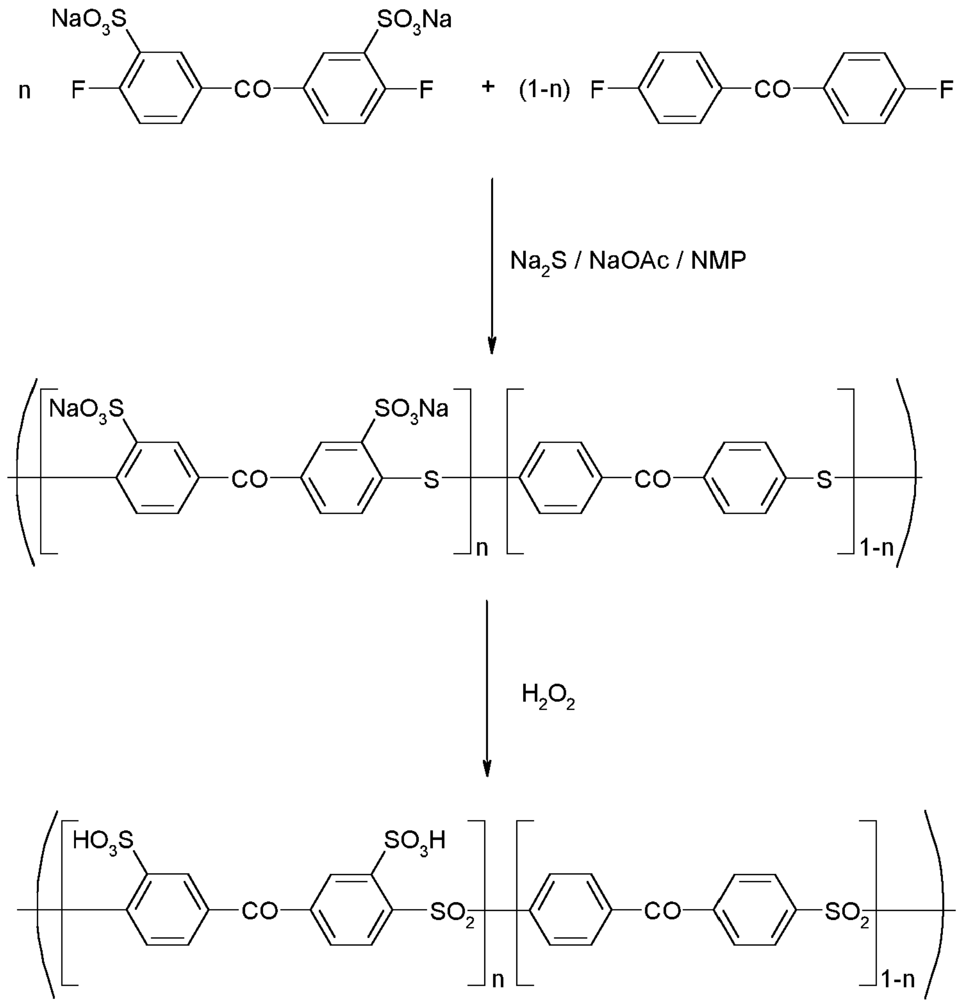


## REFERENZBEISPIEL 2

Synthese von Poly(sulfonsäure 1,4-phenylen-sulfon)

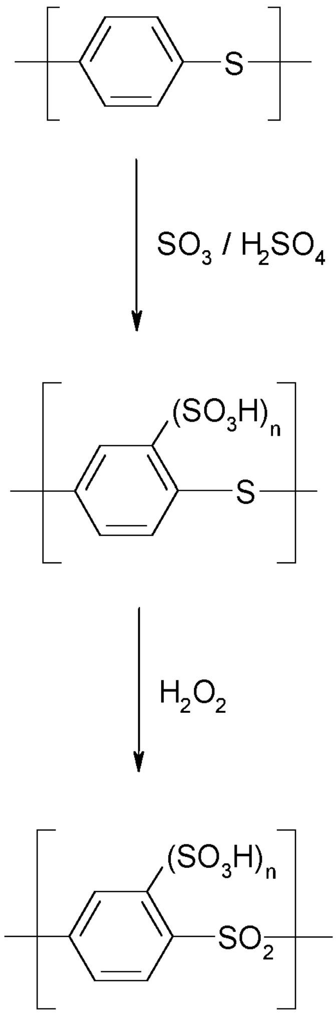


**I. Sulfonierung von Poly(1,4-phenylen-sulfid):**

**Sulfoniertes Poly(1,4-phenylen-sulfid):** Die Sulfonierung wurde in einem ausgeheizten und mit Argon gefüllten 100-ml-Rundkolben durchgeführt, der mit einem Argoneinlass, und einem Magnetrührer ausgerüstet war. In den Kolben wurden 4.04 g (37.4 mmol) Poly(1,4-phenylen-sulfid) (Aldrich, $M_n$ = 15000, M = 108.15 g/mol) in 50 ml konzentrierter Schwefelsäure suspendiert. Zu dieser Suspension tropfte man langsam und unter starkem Rühren 10 ml einer 60 % $SO_3$-Lösung in Schwefelsäure (Oleum, ca. 150 mmol $SO_3$), wobei sich eine dunkelgrüne Lösung bildete. Diese wurde für 12 h bei Raumtemperatur gerührt. Anschließend wurde die Lösung langsam in 400 ml Eisessig gegossen, (Kühlung mit einem Eisbad auf 0 °C), wobei das Polymer als grünlich gefärbter Feststoff ausfiel. Dieser wurde abfiltriert und im Vakuum ($2 \cdot 10^{-3}$mbar) 2 h lang getrocknet. Man erhielt einen schwach grünlich gefärbten Feststoff.

Löslichkeit:

Löslich in Dimethylsulfoxid (DMSO), Dimethylformamid (DMF), 1-Methyl-2-pyrrolidon (NMP), *N,N'*-Dimethylacetamid (DMAc);
unlöslich in Wasser (Quellung) Methanol, Ethanol, Isopropanol, Toluol, Tetrahydrofuran (THF), Chloroform, Aceton.

Dichte: 1.720 g / $cm^3$ für $H^+$-Form

$^1$H-NMR (300 MHz, DMSO-$d_6$): $\delta$ = 7.8 - 7.4 (br m), 7.19 (br m), 3.72 (s, $H_2O$).

**II. Oxidation von sulfoniertem Poly(1,4-phenylen-sulfid):**

**Sulfoniertes Poly(1,4-phenylen-sulfon):** 5.0 g (26.6 mmol, M = 188.21 mol/g) fein-gemörserter Feststoff aus obiger Reaktion wurden in 100 ml Eisessig und 10 ml konzentrierter Schwefelsäure suspendiert. Die dunkelbraune Reaktionsmischung wurde auf 55 °C erhitzt, anschließend wurden 10 ml einer 36 % Wasserstoffperoxidlösung (ca. 100 mmol $H_2O_2$) langsam zugetropft. Diese Mischung wurde 12 h lang bei 55 °C gerührt. Anschließend wurde die blassgelbe Mischung kurz auf 110 °C erhitzt, um überschüssiges Peroxid zu entfernen. Dann wurde die Mischung mit 300 ml Eisessig verdünnt und der Feststoff abfiltriert. Dieser wurde in 100 ml Wasser suspendiert. Zur Entfernung aller Nebenprodukte (Schwefelsäure, Essigsäure) wurde die Suspension unter Anwendung von 72-stündiger Dialyse (Dialyseschlauch von Sigma-Aldrich, Molekulargewichts-Ausschluss = 8000) gereinigt, wobei nach Entfernen des Lösungsmittels und Trocknen bei 50 °C im Vakuum ($2 \cdot 10^{-3}$ mbar) ein blassgelber Feststoff (4.5 g, M = 220.21 g/mol) resultierte.

Löslichkeit:

Löslich in Dimethylsulfoxid (DMSO), Dimethylformamid (DMF), 1-Methyl-2-pyrrolidon (NMP), *N,N'*-Dimethylacetamid (DMAc);
unlöslich in Wasser (Quellung), Methanol, Ethanol, Isopropanol, Toluol, Tetrahydrofuran (THF), Chloroform, Aceton.

| | |
|---|---|
| Austauschkapazität: | experimentell: 1.780 mmol/g (561.80 g/mol) für $H^+$-Form |
| | Sulfonierungsgrad = 29.1 % (n = 0.291) Annahme: 0.0 $H_2O/SO_3H$ |
| | Sulfonierungsgrad = 34.2 % (n = 0.342) Annahme: 4.0 $H_2O/SO_3H$ |
| Dichte: | 1.636 g / $cm^3$ für $H^+$-Form |

$^1H$-NMR (300 MHz, DMSO-$d_6$) : $\delta$ = 8.1 (br m), 5.18 (s, $H_2O$).
$^{13}C$-NMR (75.5 MHz, DMSO-$d_6$): $\delta$ = 145.7 (s), 145.2 (s), 139.8 (s), 134.6 (s), 130.2 (s), 128.7 (s).

**III. Oxidation von sulfoniertem Poly(1,4-phenylen-sulfid) mit IEC = 1.6 mmol/g:**

**Sulfoniertes Poly(1,4-phenylen-sulfon):** 5.00 g (0.04 mol, M = 124.2 mol/g, IEC = 1.6 mmol/g) fein-gemörsertes sulfoniertes Poly(1,4-phenylen-sulfid) aus einem anderen Ansatz wurden in 300 mL Eisessig und 15 mL konzentrierter Schwefelsäure suspendiert. Anschließend wurden 12 mL einer 30 % Wasserstoffperoxidlösung (ca. 0.12 mol $H_2O_2$) langsam zugetropft. Diese Mischung wurde 36 h lang bei RT gerührt. Dann wurde der weiße Feststoff abfiltriert und mit 200 mL Wasser gewaschen. Dieser wurde bei 60 °C im Vakuum 12 h getrocknet. Man erhielt einen weißen Feststoff (5.73 g, 91.1%), welcher praktisch in allen verwendeten Lösungsmitteln unlöslich war. Eine Filmbildung aus heißem NMP war nicht möglich.

Löslichkeit:

Geringfügig löslich in heißem 1-Methyl-2-pyrrolidon (NMP). Unlöslich in Wasser, DMSO, Methanol, Ethanol, Isopropanol, Toluol, Tetrahydrofuran (THF), Chloroform, Aceton.

| | |
|---|---|
| Austauschkapazität: | experimentell: 0.96 mmol/g (1041 g/mol) für $H^+$-Form |
| | theoretisch: 1.28 mmol/g (781 g/mol) Annahme: 0.0 $H_2O/SO_3H$ |

In Analogie zu den in REFERENZBEISPIEL 2 beschriebenen Reaktionen wurden weitere Polymere mit unterschiedlichen Austauschkapazitäten (Sulfonierungsgrad) unter Einsatz verschiedener Verhältnisse des Ausgangspolymers Poly(1,4-phenylen-sulfid) und Oleum ($SO_3$) hergestellt. Die Reaktionsbedingungen waren analog.

**Literaturübersicht:**

Ein allgemeiner Überblick über den Stand der Technik von Brennstoffzellen wird in Teil 3 des Handbook of Fuel Cells - Fundamentals, Technology and Applications, Vol. 3 (Eds. W. Vielstich, A. Lamm, H.A. Gasteiger), John WILEY & Sons, 2003 gegeben. Ein Überblick von Membranmaterialien für Brennstoffzellen findet sich in den Reviews von Q. Li, R. He, J.O. Jensen, N.J. Bjerrum Chem. Mater. 2003, 15, 4896 und von M.A. Hickner, H. Ghassemi, Y.S. Kim, J.E. McGrath Chem. Rev. 2004, 104, 4587; ein Einblick in Zusammenhänge zwischen Struktur, Morphologie und Transportprozessen in Membranen für Brennstoffzellen wird in dem Review von K.D. Kreuer, S.J. Paddison, E. Spohr,

M. Schuster Chem. Rev. 2004, 104, 4637, gegeben.

Polymere mit der strukturellen Einheit **$-SO_2-Ar(SO_3H)_n-SO_2-$** (Ar = Aromat, n = 1 - 4) sind nach CA (Chemical Abstracts) nicht beschrieben. Hingegen gibt es eine Vielzahl von Veröffentlichungen und Patentschriften zu Polymeren mit der strukturellen Einheit - **$SO_2-Ar(SO_3H)-O$**-(Poly(arylenethersulfone)), wie z.B. in F. Wang, M. Hickner, Y.S. Kim, T.A. Zawodzinski, J.E. McGrath J. Membr. Sci. 2002, 197, 231), bei welchen der Aromat, der die Sulfonsäuregruppe trägt sowohl von einer Sulfongruppe $-SO_2-$ wie auch von einer Ethergruppe -O- umgeben ist. Anstelle der Ethergruppe sind auch analoge Polymere mit einer Thioethergruppe (Sulfidgruppe) -S-beschrieben: Poly(arylenthioethersulfone) bzw. Poly(arylensulfidsulfone) mit der strukturellen Einheit **$-SO_2-Ar(SO_3H)-S-$,** z.B. in T.D. Dang, Z. Bai, M.J. Dalton, E. Fossum Polymer Preprints 2004, 45, 22; Z. Bai, L.D. Williams, M.F. Durstock, T.D. Dang Polymer Preprints 2004, 45, 60; K.B. Wiles, V.A. Bhanu, F. Wang, M.A. Hickner, J.E. McGrath Polymer Preprints 2003, 44, 1089; F. Wang, J. Mecham, W. Harrison, J.E. McGrath Polymer Preprints 2000, 41, 1401; K.B. Wiles, V.A. Bhanu, F. Wang, J.E. McGrath Polymer Preprints 2002, 43, 993; K.B. Wiles, C.M. de Diego, J.E. McGrath Polymer Preprints 2004, 45, 724.

Die Synthese dieser Polymere erfolgt mittels Polykondensation von sulfoniertem Dichlorodiphenylsulfon bzw. Difluorodiphenylsulfon mit Thiobisbenzolthiol. Erste Erwähnung des sulfonierten Monomers von Dichlorodiphenylsulfon bzw. Difluorodiphenylsulfon findet sich in dem Patent von L.M. Robeson, M. Matzner US Patent 4380598 (1983)**,** bzw. in der Publikation von M. Udea, H. Toyota, T. Ochi, J. Sugiyama, K. Yonetake, T. Masuko, T. Teramoto J. Polym. Sci., Polym. Chem. 1993, 31, 853. Im der Folge wurden eine Vielzahl von Polymerisationen ausgehend von sulfonierten Monomeren dieser Art beschrieben, z.B. in F. Wang, M. Hickner, Q. Ji, W. Harrison, J. Mecham, T.A. Zawodzinski, J.E. McGrath Macromol. Symp. 2001, 175, 387 und F. Wang, M. Hickner, Y.S. Kim, T.A. Zawodzinski, J.E. McGrath J. Membr. Sci. 2002, 197, 231 und W. Harrison, F. Wang, J.B. Mecham, V. Bhanu, M. Hill, Y.S. Kim, J.E. McGrath J. Polym. Sci., Polym. Chem. 2003, 41, 2264 und F. Wang, J. Li, T. Chen, J. Xu Polymer 1999, 40, 795 und F. Wang, T. Chen, J. Xu Macromol. Chem. Phys. 1998, 199, 1421.

Daneben sind unsulfonierte Polymere mit der strukturellen Einheit $-SO_2-Ar-SO_2-$ (Ar = Aromat, unsulfoniert) Gegenstand einiger Patente, wie in J. Studinka, R. Gabler, Polyarylene sulphonates from sulphonated polyarylene sulphide by two-stage oxidation in acid medium DE Patent 1938806A1 (1970), sowie in US Patenten 6020442 (2000), 6013761 (2000), 5496916 (1996), 5496917 (1996)und einigen Publikationen wie z.B. D.R. Robello, A. Ulman, E. Urankar Macromol. 1993, 26, 6718 und H.M. Colquhoun, P. Aldred, F.H. Kohnke, P.L. Herbertson, I. Baxter, D.J. Williams Macromol. 2002, 35, 1685.

Eine Publikation zum Mechanismus der Sulfonierung am Aromaten ist J. O. Morley, D. W. Roberts J. Org. Chem. 1997, 62, 7358 - 7363.

Spezielle Referenzen:

[1] T.D. Dang, Z. Bai, M.J. Dalton, E. Fossum Polymer Preprints 2004, 45, 22

[2] Z. Bai, L.D. Williams, M.F. Durstock, T.D. Dang Polymer Preprints 2004, 45, 60

[3] K.B. Wiles, V.A. Bhanu, F. Wang, M.A. Hickner, J.E. McGrath Polymer Preprints 2003, 44, 1089

[4] F. Wang, J. Mecham, W. Harrison, J.E. McGrath Polymer Preprints 2000, 41, 1401

[5] K.B. Wiles, V.A. Bhanu, F. Wang, J.E. McGrath Polymer Preprints 2002, 43, 993

[6] K.B. Wiles, C.M. de Diego, J.E. McGrath Polymer Preprints 2004, 45, 724

[7] J. Studinka, R. Gabler (Uitikon-Waldegg, CH), Polyarylene Sulphonates from Sulphonated Polyarylene Sulphide by Two-Stage Oxidation in Acid Medium DE 1938806A1 (1970)

[8] D. Fleischer, H. Strutz, J. Kulpe, A. Schleicher (Ticona GmbH, Germany), Oxidized Polyarylene Sulfides US 6020442 (2000)

[9] D. Zierer, H. Scheckenbach (Ticona GmbH, Germany), Oxidation of Polyarylene Sulfides US 6013761 (2000)

[10] D. Fleischer, H. Strutz, J. Kulpe, A. Schleicher (Hoechst Aktiengesellschaft, Germany), Process for Oxidizing Polyarylene Compounds Containing Thioether Groups US 5496916 (1996)

[11] D. Fleischer, H. Strutz, J. Kulpe, A. Schleicher (Hoechst Aktiengesellschaft, Germany), Two-Stage Oxidation of Polyarylene Sulfides US 5496917 (1996)


## Patentansprüche

**1.** Sulfoniertes Poly(arylen), welches ein oder mehrere Strukturelement(e) der allgemeinen Formel $-X-Ar(SO_3M)_n-Y-$ enthält, wobei X und Y, gleich oder verschieden voneinander, jeweils eine Elektronen-Akzeptor-Gruppe bedeuten, Ar ein aromatisches oder heteroaromatisches Ringsystem mit 5-18 Ringatomen darstellt, wobei das aromatische oder heteroaromatische Ringsystem neben der Sulfonsäuregruppe und den Substituenten X und Y noch weitere

Substituenten aufweisen kann, die keine Elektronen-Donor-Gruppen sind, M ein einwertiges Kation darstellt und n eine ganze Zahl von 1 bis 4 bedeutet, und wobei X, Y, Ar, M und n, unabhängig voneinander, in verschiedenen Strukturelementen gleich oder verschieden sein können,

**dadurch gekennzeichnet, dass** es aus wiederkehrenden Einheiten der Formeln - $[-Ar_1(SO_3M)_n-X-]$- und - $[-Ar_2(SO_3M)_n-Y-]$-, wobei X und Y, gleich oder verschieden voneinander, jeweils eine Elektronen-Akzeptor-Gruppe bedeuten, $Ar_1$ und $Ar_2$, gleich oder verschieden voneinander, ein aromatisches oder heteroaromatisches Ringsystem Ar mit 5-18 Ringatomen wie oben definiert darstellen, M und n wie oben definiert sind, und wobei X, Y, $Ar_1$, $Ar_2$, M und n, unabhängig voneinander, in verschiedenen Strukturelementen gleich oder verschieden sein können,
und einer oder mehreren Einheiten der Formel $-[-Ar_3-Z-]$-besteht, wobei Z eine Elektronen-Donor- oder Elektronen-Akzeptor-Gruppe oder keines von beiden sein kann, $Ar_3$ ein aromatisches oder heteroaromatisches Ringsystem mit 5-18 Ringatomen ohne $SO_3M$-Substituenten darstellt und die Gruppen $Ar_3$ und Z in verschiedenen Einheiten $-[-Ar_3-Z-]$- gleich oder verschieden sein können, mit der Maßgabe, dass die Gruppe Z nur dann an ein sulfoniertes aromatisches oder heteroaromatisches Ringsystem der Formel $Ar(SO_3M)_n$ gebunden sein kann, wenn Z keinen Elektronen-Donor darstellt, und dadurch, dass das sulfonierte Poly(arylen) ein Molekulargewicht im Bereich von 10.000 bis 1.000.000 aufweist.

2. Sulfoniertes Poly(arylen) nach Anspruch 1, **dadurch gekennzeichnet, dass** X und Y, unabhängig voneinander, aus der Gruppe, bestehend aus $-SO_2-$,-SO-, $-SO_2O-$, -CO-, -COO-, -CONH-, CONR-, und -POR-, ausgewählt sind.

3. Sulfoniertes Poly(arylen) nach Anspruch 2, **dadurch gekennzeichnet, dass** X und Y jeweils $-SO_2-$ bedeuten.

4. Sulfoniertes Poly(arylen) nach einem der Ansprüche 1 bis 3, **dadurch gekennzeichnet, dass** das Kation M aus der Gruppe aus $Li^+$, $Na^+$, $K^+$, $NR_4^+$, $PR_4^+$ und $H^+$ ausgewählt ist.

5. Sulfoniertes Poly(arylen) nach einem der Ansprüche 1 bis 4, **dadurch gekennzeichnet, dass** n 1 ist.

6. Sulfoniertes Poly(arylen) nach einem der Ansprüche 1 bis 5, **dadurch gekennzeichnet, dass** $Ar_1$ und $Ar_2$ aus der Gruppe, bestehend aus Phenylen, Naphthylen, Anthracen, Phenanthren, Biphenylen, Furan, Thiophen, Pyrrol, Thiazol, Triazol, Pyridin, Imidazol und Benzimidazol, ausgewählt sind.

7. Sulfoniertes Poly(arylen) nach einem der Ansprüche 1 bis 6, **dadurch gekennzeichnet dass** $Ar_3$, für jede Einheit der Formel $-[-Ar_3-Z-]$- unabhängig, aus der Gruppe, bestehend aus Phenylen, Naphthylen, Anthracen, Phenanthren, Biphenylen, Furan, Thiophen, Pyrrol, Thiazol, Triazol, Pyridin, Imidazol und Benzimidazol, ausgewählt ist.

8. Sulfoniertes Poly(arylen) nach einem der Ansprüche 1 bis 7, **dadurch gekennzeichnet, dass** Z aus der Gruppe, bestehend aus $-SO_2-$,-SO-, $-SO_2O-$, -CO-, -COO-, -CONH-, CONR-, -POR-, -S-, -O- oder Alkylen, ausgewählt ist.

9. Polymermischung, umfassend ein sulfoniertes Poly(arylen) nach einem der Ansprüche 1-8 und mindestens ein weiteres Polymer.

10. Polymermischung nach Anspruch 9, **dadurch gekennzeichnet, dass** das mindestens eine weitere Polymer aus der Gruppe von Polymeren, die aus PBI (Polybenzimidazol), PTFE (Polytetrafluorethylen), PVDF (Polyvinylidenfluorid), PSU (Polysulfonen), PES (Polyethersulfonen), PEK (Polyetherketonen), PPO (Polyphenylenoxid), PPS (Polyphenylensulfid), PI (Polyimiden), PC (Polycarbonaten), PMMA (Polymethylmethacrylaten) und Polyphosphazenen besteht, ausgewählt ist.

11. Sulfoniertes Poly(arylen) nach einem der Ansprüche 1-8 oder Polymermischung nach einem der Ansprüche 9 oder 10, **dadurch gekennzeichnet, dass** das Polymer oder die Polymermischung in eine poröse Matrix eingebettet ist.

12. Sulfoniertes Poly(arylen) nach einem der Ansprüche 1-8 oder Polymermischung nach einem der Ansprüche 9 oder 10, **dadurch gekennzeichnet, dass** das Polymer oder die Polymermischung mit Fasermaterialien, Füllstoffen oder anderen Additiven kombiniert ist.

13. Verfahren zur Herstellung eines sulfonierten Poly(arylens) nach einem der Ansprüche 1-8, umfassend

a) Herstellung eines sulfonierten Arylmonomers $F_1$-AS-$F_2$, wobei AS ein Arylsystem aus einem oder mehreren

aromatischen Ringen bedeutet, wobei mindestens ein aromatischer Ring mit einer Sulfonsäuregruppe substituiert ist, und welches Arylsystem funktionelle Gruppen $F_1$ und $F_2$ aufweist, die gleich oder verschieden voneinander sein können und eine Kondensationsreaktion eingehen können, oder mehrerer verschiedener solcher Arylmonomere;
b) Polykondensation des oder der sulfonierten Arylmonomers bzw. Arylmonomere von Schritt a) unter Bildung eines sulfonierten Poly(arylens), welches mindestens einen Elektronen-Donor-Substituenten an den sulfonierten aromatischen Ringen aufweist;
c) Überführung des mindestens einen Elektronen-Donor-Substituenten in einen Elektronen-Akzeptor-Substituenten unter Bildung eines sulfonierten Poly(arylens), das ausschließlich Elektronen Akzeptor-Substituenten an den sulfonierten aromatischen Ringen aufweist.

**14.** Verfahren nach Anspruch 13, **dadurch gekennzeichnet, dass** an der Polykondensation neben einem oder mehreren sulfonierten Arylmonomeren $F_1$-AS-$F_2$ wie in Anspruch 13 definiert, ein oder mehrere Arylmonomere $F_1$-ANS-$F_2$, wobei ANS ein Arylsystem aus einem oder mehreren aromatischen Ringen, die nicht mit einer Sulfonsäuregruppe substituiert sind, bedeutet und welches Arylsystem funktionelle Gruppen $F_1$ und $F_2$ wie in Anspruch 13 definiert aufweist, die gleich oder verschieden voneinander sein können,

beteiligt ist/sind, wobei ein teilweise sulfoniertes Poly(arylen) gebildet wird, welches mindestens einen Elektronen-Donor-Substituenten an den sulfonierten aromatischen Ringen aufweist,
und der mindestens eine Elektronen-Donor-Substituent in einen Elektronen-Akzeptor-Substituenten überführt wird,
wobei ein teilweise sulfoniertes Poly(arylen) gebildet wird, das ausschließlich Elektronen-Akzeptor-Substituenten an den sulfonierten aromatischen Ringen aufweist.

**15.** Verfahren zur Herstellung eines sulfonierten Poly(arylen-sulfons) nach Anspruch 13, umfassend

a) Herstellung eines sulfoniertes Arylmonomers $F_1$-AS-$F_2$, wobei AS ein sulfoniertes Arylsystem aus einem oder mehreren aromatischen Ringen bedeutet, wobei mindestens ein aromatischer Ring mit einer Sulfonsäuregruppe substituiert ist, und welches Arylsystem funktionelle Gruppen $F_1$ und $F_2$ aufweist, die gleich oder verschieden voneinander sein können und in einer Kondensationsreaktion mit einer Sulfidgruppierung reagieren können, oder mehrerer verschiedener solcher Arylmonomere;
b) Polykondensation des oder der sulfonierten Arylmonomers bzw. Arylmonomere von Schritt a) mit einem Aryldisulfid oder Alkalisulfid unter Bildung eines sulfonierten Poly(arylensulfidsulfons);
c) Oxidation des sulfonierten Poly(arylensulfidsulfons) von Schritt b) zu einem sulfonierten Poly(arylensulfon).

**16.** Verfahren nach Anspruch 15, **dadurch gekennzeichnet, dass** an der Polykondensation neben einem oder mehreren sulfonierten Arylmonomeren $F_1$-AS-$F_2$ wie in Anspruch 15 definiert, ein oder mehrere Arylmonomere $F_1$-ANS-$F_2$, wobei ANS ein Arylsystem aus einem oder mehreren aromatischen Ringen, die nicht mit einer Sulfonsäuregruppe substituiert sind, bedeutet und welches Arylsystem funktionelle Gruppen $F_1$ und $F_2$ wie in Anspruch 15 definiert aufweist, die gleich oder verschieden voneinander sein können, teilnehmen,

wobei ein teilweise sulfoniertes Poly(arylensulfidsulfon) gebildet wird, welches mindestens einen Elektronen-Donor-Substituenten an den sulfonierten aromatischen Ringen aufweist,
und Oxidation des teilweise sulfonierten Poly(arylensulfidsulfons) zu einem teilweise sulfonierten Poly(arylensulfon), das ausschließlich Elektronen-Akzeptor-Substituenten an den sulfonierten aromatischen Ringen aufweist.

**17.** Verfahren nach Anspruch 15 oder 16, **dadurch gekennzeichnet, dass** das sulfonierte Arylmonomer oder die sulfonierten Arylmonomere die Strukturformel $F_1$-$Ar_a$-$SO_2$-$Ar_b$-$F_2$ aufweist bzw. aufweisen, wobei $Ar_a$ und $Ar_b$ gleich oder verschieden sein können und jeweils ein aromatisches oder heteroaromatisches Ringsystem mit 5-18 Ringatomen darstellen, mit der Maßgabe, dass bei mindestens einem eingesetzten Arylmonomer $Ar_a$ und/oder $Ar_b$ durch mindestens eine $SO_3M$-Gruppe, wobei M wie oben definiert ist, substituiert ist bzw. sind.

**18.** Verfahren nach Anspruch 17, **dadurch gekennzeichnet, dass** bei mindestens einem der Arylmonomere die Reste $Ar_a$ und/oder $Ar_b$ durch mindestens eine $SO_3M$-Gruppe, wobei M wie oben definiert ist, substituiert sind und bei mindestens einem anderen Arylmonomer die Reste $Ar_a$ und/oder $Ar_b$ nicht mit einer $SO_3M$-Gruppe substituiert sind.

**19.** Verfahren nach einem der Ansprüche 15 bis 18, **dadurch gekennzeichnet, dass** die funktionellen Gruppen $F_1$ und

$F_2$, gleich oder verschieden, aus der Gruppe, bestehend aus Fluor, Chlor, Brom oder Iod, ausgewählt sind.

**20.** Verwendung des sulfonierten Poly(arylens) nach einem der Ansprüche 1 bis 8, der Polymermischung nach Anspruch 9 oder 10 oder der Mischungen nach Anspruch 11 oder 12 als Membranmaterial, insbesondere Ionenaustauschermembran.

**21.** Verwendung des sulfonierten Poly(arylens) nach einem der Ansprüche 1 bis 8, der Polymermischung nach Anspruch 9 oder 10 oder der Mischungen nach Anspruch 11 oder 12 in Brennstoffzellen, insbesondere DMFC-Brennstoffzellen.

**22.** Verwendung des sulfonierten Poly(arylens) nach einem der Ansprüche 1 bis 8, der Polymermischung nach Anspruch 9 oder 10 oder der Mischungen nach Anspruch 11 oder 12 für die Elektrodialyse, Donnandialyse, Elektrolyse, für die Be- und Entfeuchtung oder für die elektromagnetische Abschirmung.

## Claims

**1.** Sulfonated poly(arylene) containing one or more structural element(s) of the general formula $-X-Ar(SO_3M)_n-Y-$, wherein X and Y, which are identical or different from each other, each represent an electron-acceptor group, Ar represents an aromatic or heteroaromatic ring system with 5-18 ring atoms wherein the aromatic or heteroaromatic ring system, in addition to the sulfonic acid group and the substituents X and Y, may feature additional substituents which are not electron-donor groups; M represents monovalent cation and n means an integral number between 1 and 4; and wherein X, Y, Ar, M and n can be identical or different in different structural elements, independently of each other,

**characterized in that** it consists of recurring elements of the formulas $-[-Ar_1(SO_3M)_n-X-]-$ and $-[-Ar_2(SO_3M)_n-Y-]-$, wherein X and Y, which are either identical or different from each other, each represent an electron-acceptor group, $Ar_1$ and $Ar_2$, which are either identical or different from each other, represent an aromatic or heteroaromatic ring system Ar with 5-18 ring atoms as defined above, M and n are defined as above; and wherein X, Y, $Ar_1$, $Ar_2$, M und n can be identical or different in various structural elements, independently of each other, and one or more elements of the formula $-[-Ar_3-Z-]-$, wherein Z can be an electron-donor group or an electron-acceptor group or neither, $Ar_3$ represents an aromatic or heteroaromatic ring system with 5-18 ring atoms without $SO_3M$ substituents, and the groups $Ar_3$ and Z can be identical or different in different elements $-[-Ar_3-Z-]-$, provided that the Z group can only be bound to a sulfonated aromatic or heteroaromatic ring system of the formula $Ar(SO_3M)_n$ if Z does not represent an electron-donor, and **in that** the sulfonated poly(arylene) has a molecular weight within the range of 10.000 to 1,000,000.

**2.** Sulfonated poly(arylene) according to Claim 1, **characterized in that** X and Y are selected independently of each other from the group consisting of $-SO_2-$,-SO-, $-SO_2O-$, -CO-, -COO-, -CONH-, CONR- and -POR-.

**3.** Sulfonated poly(arylene) according to Claim 2, **characterized in that** X and Y each mean $-SO_2-$.

**4.** Sulfonated poly(arylene) according to one of Claims 1 to 3, **characterized in that** the cation M is selected from the group consisting of $Li^+$, $Na^+$, $K^+$, $NR_4^+$, $PR_4^+$ and $H^+$.

**5.** Sulfonated poly(arylene) according to one of Claims 1 to 4, **characterized in that** n equals 1.

**6.** Sulfonated poly(arylene) according to one of Claims 1 to 5, **characterized in that** $Ar_1$ and $Ar_2$ are selected from the group consisting of phenylene, naphthylene, anthracene, phenanthrene, biphenylene, furan, thiophene, pyrrole, thiazole, triazole, pyridine, imidazole and benzimidazole.

**7.** Sulfonated poly(arylene) according to one of Claims 1 to 5, **characterized in that** $Ar_3$ is selected independently for each element of the formula $-[-Ar_3-Z-]-$ from the group consisting of phenylene, naphthylene, anthracene, phenanthrene, biphenylene, furan, thiophene, pyrrole, thiazole, triazole, pyridine, imidazole and benzimidazole.

**8.** Sulfonated poly(arylene) according to one of Claims 1 to 7, **characterized in that** Z is selected from the group consisting of $-SO_2-$,-SO-, $-SO_2O-$, -CO-, -COO-, -CONH-, CONR-, -POR- , -S-, -O- or alkylene.

**9.** Polymer blend comprising a sulfonated poly(arylene) according to one of Claims 1-8 and at least one additional

polymer.

**10.** Polymer blend according to Claim 9, **characterized in that** the at least one additional polymer is selected from the group of polymers consisting of PBI (polybenzimidazole), PTFE (polytetrafluoroethylene), PVDF (polyvinylidene fluoride), PSU (polysulfones), PES (polyether sulfones), PEK (polyether ketones), PPO (polyphenylene oxide), PPS (polyphenylene sulfide), PI (polyimides), PC (polycarbonates), PMMA (polymethyl methacrylates) and polyphosphazenes.

**11.** Sulfonated poly(arylene) according to one of Claims 1-8 or polymer blend according to one of Claims 9 or 10, **characterized in that** the polymer or the polymer blend is embedded in a porous matrix.

**12.** Sulfonated poly(arylene) according to one of Claims 1-8 or polymer blend according to one of Claims 9 or 10, **characterized in that** the polymer or the polymer blend is combined with fiber materials, fillers or other additives.

**13.** Method for producing a sulfonated poly(arylene) according to one of Claims 1 to 8, comprising:

a) production of a sulfonated aryl monomer $F_1$-AS-$F_2$, where AS represents an aryl system comprising one or more aromatic rings, at least one of which is substituted with a sulfonic acid group, and the said aryl system features functional groups $F_1$ and $F_2$, which can be identical or different from each other and can enter into a condensation reaction, or of several various aryl monomers of this kind;
b) polycondensation of the sulfonated aryl monomer or the sulfonated aryl monomers of step a) resulting in the formation of a sulfonated poly(arylene) featuring at least one electron-donor substituent at the sulfonated aromatic rings;
c) transformation of the at least one electron-donor substituent into an electron-acceptor substituent resulting in the formation of a sulfonated poly(arylene) featuring exclusively electron-acceptor substituents at the sulfonated aromatic rings.

**14.** Method according to Claim 13, **characterized in that** the polycondensation, in addition to one or several sulfonated aryl monomers $F_1$-AS-$F_2$, as defined in Claim 13, involves one or several aryl monomers $F_1$-ANS-$F_2$, ANS representing an aryl system consisting of one or several aromatic rings not substituted with a sulfonic acid group, and the said aryl system featuring functional groups $F_1$ and $F_2$ as defined in Claim 13, which can be identical or different from each other, during which process a partially sulfonated poly(arylene) featuring at least one electron-donor substituent at the sulfonated aromatic rings is formed,

and the at least one electron-donor substituent is transformed into an electron-acceptor substituent,
whereby a partially sulfonated poly(arylene) featuring exclusively electron-acceptor substituents at the sulfonated aromatic rings is formed.

**15.** Method for producing a sulfonated poly(arylene sulfone) according to Claim 13, comprising:

a) production of a sulfonated aryl monomer $F_1$-AS-$F_2$, where AS represents a sulfonated aryl system comprising one or more aromatic rings, at least one of which is substituted with a sulfonic acid group, and the said aryl system features functional groups $F_1$ and $F_2$, which can be identical or different from each other and can enter into a condensation reaction with a sulfide group, or of several various aryl monomers of this kind;
b) polycondensation of the sulfonated aryl monomer or aryl monomers of step a) with an aryl disulfide or alkali sulfide resulting in the formation of a sulfonated poly(arylene sulfide sulfone);
c) oxidation of the sulfonated poly(arylene sulfide sulfone) of step b) into a sulfonated poly(arylene sulfone).

**16.** Method according to Claim 15, **characterized in that** the polycondensation, in addition to one or several sulfonated aryl monomers $F_1$-AS-$F_2$ as defined in Claim 15, involves one or several aryl monomers $F_1$-ANS-$F_2$, ANS representing an aryl system consisting of one or several aromatic rings not substituted with a sulfonic acid group, and the said aryl system featuring functional groups $F_1$ and $F_2$ as defined in Claim 15, which can be identical or different from each other, whereby a partially sulfonated poly(arylene sulfide sulfone) featuring at least one electron-donor substituent at the sulfonated aromatic rings is formed,
and oxidation of the partially sulfonated poly(arylene sulfide sulfone) into a partially sulfonated poly(arylene sulfone) featuring exclusively electron-acceptor substituents at the sulfonated aromatic rings.

**17.** Method according to Claim 15 or 16, **characterized in that** the sulfonated aryl monomer or the sulfonated aryl

monomers feature (s) the structural formula $F_1$-$Ar_a$-$SO_2$-$Ar_b$-$F_2$, wherein $Ar_a$ and $Ar_b$ can be identical or different from each other and each represent an aromatic or heteroaromatic ring system with 5-18 ring atoms, provided that $Ar_a$ and/or $Ar_b$ is/are substituted by at least one $SO_3M$ group, M being defined as above, in at least one of the aryl monomers used.

**18.** Method according to Claim 17, **characterized in that** the $Ar_a$ and/or $Ar_b$ residues in at least one of the aryl monomers is/are substituted with at least one $SO_3M$ group, M being defined as above, and the $Ar_a$ and/or $Ar_b$ residues in at least one other aryl monomer are not substituted with an $SO_3M$ group.

**19.** Method according to one of Claims 15 to 18, **characterized in that** the functional groups $F_1$ and $F_2$, which can be identical or different, are selected from the group consisting of fluorine, chlorine, bromine or iodine.

**20.** Use of the sulfonated poly(arylene) according to one of Claims 1 to 8, the polymer blend according to Claim 9 or 10, or the blends according to Claim 11 or 12, as membrane materials, in particular ion exchanger membranes.

**21.** Use of the sulfonated poly(arylene) according to one of Claims 1 to 8, the polymer blend according to Claim 9 or 10, or the blends according to Claim 11 or 12, in fuel cells, in particular DMFC fuel cells.

**22.** Use of the sulfonated poly(arylene) according to one of Claims 1 to 8, the polymer blend according to Claim 9 or 10, or the blends according to Claim 11 or 12, for electrodialysis, Donnan dialysis, electrolysis, for humidification and dehumidification, or for electromagnetic screening.

## Revendications

**1.** Poly(arylène) sulfoné, qui contient un ou plusieurs éléments de structure de la formule générale -X-Ar$(SO_3M)_n$-Y-, dans lequel X et Y signifient, de manière identique ou différente l'un de l'autre, respectivement un groupe accepteur d'électrons, Ar représente un système cyclique aromatique ou hétéroaromatique avec 5-18 atomes cycliques, dans lequel le système cyclique aromatique ou hétéroaromatique peut présenter, outre le groupe acide sulfonique et les substituants X et Y, encore d'autres substituants qui ne sont pas des groupes donneurs d'électrons, M représente un cation monovalent et n signifie un nombre entier de 1 à 4, et dans lequel X, Y, Ar, M et n peuvent être, indépendamment les uns des autres, identiques ou différents dans différents éléments de structure,

**caractérisé en ce qu'**il est constitué de motifs récurrents des formules -[-$Ar_1(SO_3M)_n$-X-]- et -[-$Ar_2(SO_3M)_n$-Y-]-, dans lequel X et Y signifient, de manière identique ou de manière différente l'un de l'autre, respectivement un groupe accepteur d'électrons, $Ar_1$ et $Ar_2$ représentent, de manière identique ou de manière différente l'un de l'autre, un système cyclique aromatique ou hétéroaromatique Ar avec 5-18 atomes cycliques tels que définis plus haut, M et n sont tels que définis plus haut, et dans lequel X, Y, $Ar_1$, $Ar_2$, M et N, peuvent être, indépendamment les uns des autres, identiques ou différents dans différents éléments de structure,
et est constitué d'un ou de plusieurs motifs de la formule -[-$AR_3$-Z-]-, dans lequel Z peut être un groupe donneur d'électrons ou un groupe accepteur d'électrons ou n'est aucun des deux, $Ar_3$ constitue un système cyclique aromatique ou hétéroaromatique avec 5-18 atomes cycliques sans substituants de $SO_3M$ et les groupes $Ar_3$ et Z peuvent être identiques ou différents dans différents motifs -[-$AR_3$-Z-]-, à la condition que le groupe Z puisse être lié seulement alors à un système cyclique aromatique ou hétéroaromatique sulfoné de la formule Ar$(SO_3M)_n$ quand Z ne représente pas un donneur d'électrons, et **en ce que** le poly(arylène) sulfoné présente un poids moléculaire dans la plage de 10 000 à 1 000 000.

**2.** Poly(arylène) sulfoné selon la revendication 1, **caractérisé en ce que** X et Y, sont choisis, indépendamment l'un de l'autre, parmi un groupe constitué de -$SO_2$-, -SO-, -$SO_2$O-, -CO-, -COO-, -CONH-, CONR-, et -POR-.

**3.** Poly(arylène) sulfoné selon la revendication 2, **caractérisé en ce que** X et Y signifient respectivement -$SO_2$-.

**4.** Poly(arylène) sulfoné selon l'une quelconque des revendications 1 à 3, **caractérisé en ce que** le cation M est choisi parmi le groupe constitué de $Li^+$, $Na^+$, $K^+$, $NR_4^+$, $PR_4^+$ et $H^+$.

**5.** Poly(arylène) sulfoné selon l'une quelconque des revendications 1 à 4, **caractérisé en ce que** n est 1.

**6.** Poly(arylène) sulfoné selon l'une quelconque des revendications 1 à 5, **caractérisé en ce que** $AR_1$ et $AR_2$ sont

choisis parmi le groupe constitué de phénylène, de naphtylène, d'anthracène, de phénantrène, de biphénylène, de furane, de thiophène, de pyrrole, de thiazole, de triazole, de pyridine, d'imidazole et de benzimidazole.

**7.** Poly(arylène) sulfoné selon l'une quelconque des revendications 1 à 6, **caractérisé en ce que** $Ar_3$ est choisi, indépendamment pour chaque motif de la formule -[-$AR_3$-Z-]-, parmi le groupe constitué de phénylène, de naphthylène, d'anthracène, de phénanthrène, de biphénylène, de furane, de thiophène, de pyrrole, de thiazole, de triazole, de pyridine, d'imidazole et de benzimidazole.

**8.** Poly(arylène) sulfoné selon l'une quelconque des revendications 1 à 7, **caractérisé en ce que** Z est choisi parmi le groupe constitué de -$SO_2$-, -SO-, -$SO_2$O-, -CO-, -COO-, -CONH-, CONR-, -POR-, -S-, -O- ou d'alkylène.

**9.** Mélange polymère comprenant un poly(arylène) sulfoné selon l'une quelconque des revendications 1-8 et au moins un autre polymère.

**10.** Mélange polymère selon la revendication 9, **caractérisé en ce que** l'au moins un autre polymère est choisi parmi le groupe de polymères qui est constitué de PBI (polybenzimidazole), de PTFE (polytétrafluoroéthylène), de PVDF (polyfluorure de vinylidène), de PSU (polysulfones), de PES (polyéthersulfones), de PEK (Polyéthercétones), de PPO (polyoxyde de phénylène), de PPS (polysulfure de phénylène), de PI (polyimides), de PC (polycarbonates), de PMMA (polyméthacrylates de méthyle) et de polyphosphazènes.

**11.** Poly(arylène) sulfoné selon l'une quelconque des revendications 1-8 ou mélange polymère selon l'une quelconque des revendications 9 ou 10, **caractérisé en ce que** le polymère ou le mélange polymère est incorporé dans une matrice poreuse.

**12.** Poly(arylène) sulfoné selon l'une quelconque des revendications 1-8 ou mélange polymère selon l'une quelconque des revendications 9 ou 10, **caractérisé en ce que** le polymère ou le mélange polymère est combiné à des matériaux à base de fibres, des charges ou d'autres additifs.

**13.** Procédé de fabrication d'un poly(arylène) sulfoné selon l'une quelconque des revendications 1-8, comprenant

a) la fabrication d'un monomère d'aryle sulfoné $F_1$-AS-$F_2$, dans lequel AS signifie un système aryle composé d'un ou de plusieurs cycles aromatiques, dans lequel au moins un cycle aromatique est substitué par un groupe acide sulfonique, et lequel système aryle présente des groupes fonctionnels $F_1$ et $F_2$ qui peuvent être identiques ou différents les uns des autres et peuvent subir une réaction de condensation, ou de plusieurs monomères d'aryle de ce type différents ;
b) la polycondensation du ou des monomères d'aryle sulfonés de l'étape a) en formant un poly(arylène) sulfoné, lequel présente au moins un substituant donneur d'électrons sur les cycles aromatiques sulfonés ;
c) la transformation de l'au moins un substituant donneur d'électrons en un substituant accepteur d'électrons en formant un poly(arylène) sulfoné, qui présente exclusivement des substituants accepteurs d'électrons sur les cycles aromatiques sulfonés.

**14.** Procédé selon la revendication 13, **caractérisé en ce que** prennent part à la polycondensation, outre un ou plusieurs monomères d'aryle sulfonés $F_1$-AS-$F_2$ tels que définis dans la revendication 13, un ou plusieurs monomères d'aryle $F_1$-ANS-$F_2$, dans lequel ANS signifie un système aryle composé d'un ou de plusieurs cycles aromatiques qui ne sont pas substitués par un groupe acide sulfonique et lequel système aryle présente des groupes fonctionnels $F_1$ et $F_2$ tels que définis dans la revendication 13, qui peuvent être identiques ou différents les uns des autres,

dans lequel un poly(arylène) en partie sulfoné est formé, lequel présente au moins un substituant donneur d'électrons sur les cycles aromatiques sulfonés,
et l'au moins un substituant donneur d'électrons est transformé en un substituant accepteur d'électrons,
dans lequel un poly(arylène) en partie sulfoné est formé, qui présente exclusivement des substituants accepteurs d'électrons sur les cycles aromatiques sulfonés.

**15.** Procédé de fabrication d'un poly(arylène sulfone)sulfoné selon la revendication 13, comprenant

a) la fabrication d'un monomère d'aryle sulfoné $F_1$-AS-$F_2$, dans lequel AS signifie un système aryle sulfoné composé d'un ou de plusieurs cycles aromatiques, dans lequel au moins un cycle aromatique est substitué par un groupe acide sulfonique, et lequel système aryle présente des groupes fonctionnels $F_1$ et $F_2$ qui peuvent

être identiques ou différents les uns des autres et peuvent réagir avec un groupement de sulfure dans une réaction de condensation, ou de plusieurs monomères d'aryle de ce type différents ;

b) la polycondensation du ou des monomères d'aryle sulfonés de l'étape a) avec un disulfure d'aryle ou un sulfure alcalin en formant un poly(arylène sulfure sulfone) sulfoné ;

c) l'oxydation du poly(arylène sulfure sulfone) sulfone de l'étape b) en un poly(arylène sulfone) sulfoné.

**16.** Procédé selon la revendication 15, **caractérisé en ce que** participent à la polycondensation, outre un ou plusieurs monomères d'aryle sulfonés $F_1$-AS-$F_2$ tels que définis dans la revendication 15, un ou plusieurs monomères d'aryle $F_1$-ANS-$F_2$, dans lequel ANS signifie un système aryle composé d'un ou de plusieurs cycles aromatiques qui ne sont pas substitués par un groupe acide sulfonique et lequel système aryle présente des groupes fonctionnels $F_1$ et $F_2$ tels que définis dans la revendication 15, qui peuvent être identiques ou différents les uns des autres,

dans lequel un poly(arylène sulfure sulfone) en partie sulfoné est formé, lequel présente au moins un substituant donneur d'électrons sur les cycles aromatiques sulfonés,

et oxydation du poly(arylène sulfure sulfone) en partie sulfoné en un poly(arylène sulfone) en partie sulfoné, qui présente exclusivement des substituants accepteurs d'électrons sur les cycles aromatiques sulfonés.

**17.** Procédé selon la revendication 15 et 16, **caractérisé en ce que** le monomère d'aryle sulfoné ou les monomères d'aryle sulfonés présente ou présentent la formule de structure $F_1$-$Ar_a$-$SO_2$-$Ar_b$-$F_2$, dans lequel $Ar_a$ et $AR_b$ peuvent être identiques ou différents et représentent respectivement un système cyclique aromatique ou hétéroaromatique avec 5-18 atomes cycliques, à la condition que lorsqu'un monomère d'aryle est employé, $Ar_a$ et/ou $Ar_b$ soit ou soient substitués par au moins un groupe de $SO_3M$, dans lequel M est tel que défini plus haut.

**18.** Procédé selon la revendication 17, **caractérisé en ce que** pour au moins un des monomères d'aryle, les radicaux $Ar_a$ et/ou $Ar_b$ sont substitués par au moins un groupe de $SO_3M$, dans lequel M est défini tel que plus haut, et pour au moins un autre monomère d'aryle, les radicaux $Ar_a$ et/ou $Ar_b$ ne sont pas substitués par un groupe de $SO_3M$.

**19.** Procédé selon l'une quelconque des revendications 15 à 18, **caractérisé en ce que** les groupes fonctionnels $F_1$ et $F_2$ sont choisis, de manière identique ou différente, parmi le groupe constitué de fluor, de chlore, de brome ou d'iode.

**20.** Utilisation du poly(arylène) sulfoné selon l'une quelconque des revendications 1 à 8, du mélange polymère selon la revendication 9 ou 10 ou des mélanges selon la revendication 11 ou 12 en tant que matériau de membrane, en particulier membrane échangeuse d'ions.

**21.** Utilisation du poly(arylène) sulfoné selon l'une quelconque des revendications 1 à 8, du mélange polymère selon la revendication 9 ou 10 ou des mélanges selon la revendication 11 ou 12 dans des piles à combustible, en particulier des piles à combustible à méthanol direct [DMFC - Direct Methanol Fuel Cell].

**22.** Utilisation du poly(arylène) sulfoné selon l'une quelconque des revendications 1 à 8, du mélange polymère selon la revendication 9 ou 10 ou des mélanges selon la revendication 11 ou 12 pour l'électrodialyse, la dialyse de Donnan, l'électrolyse, pour l'humidification et la déshumidification ou pour le blindage électromagnétique.

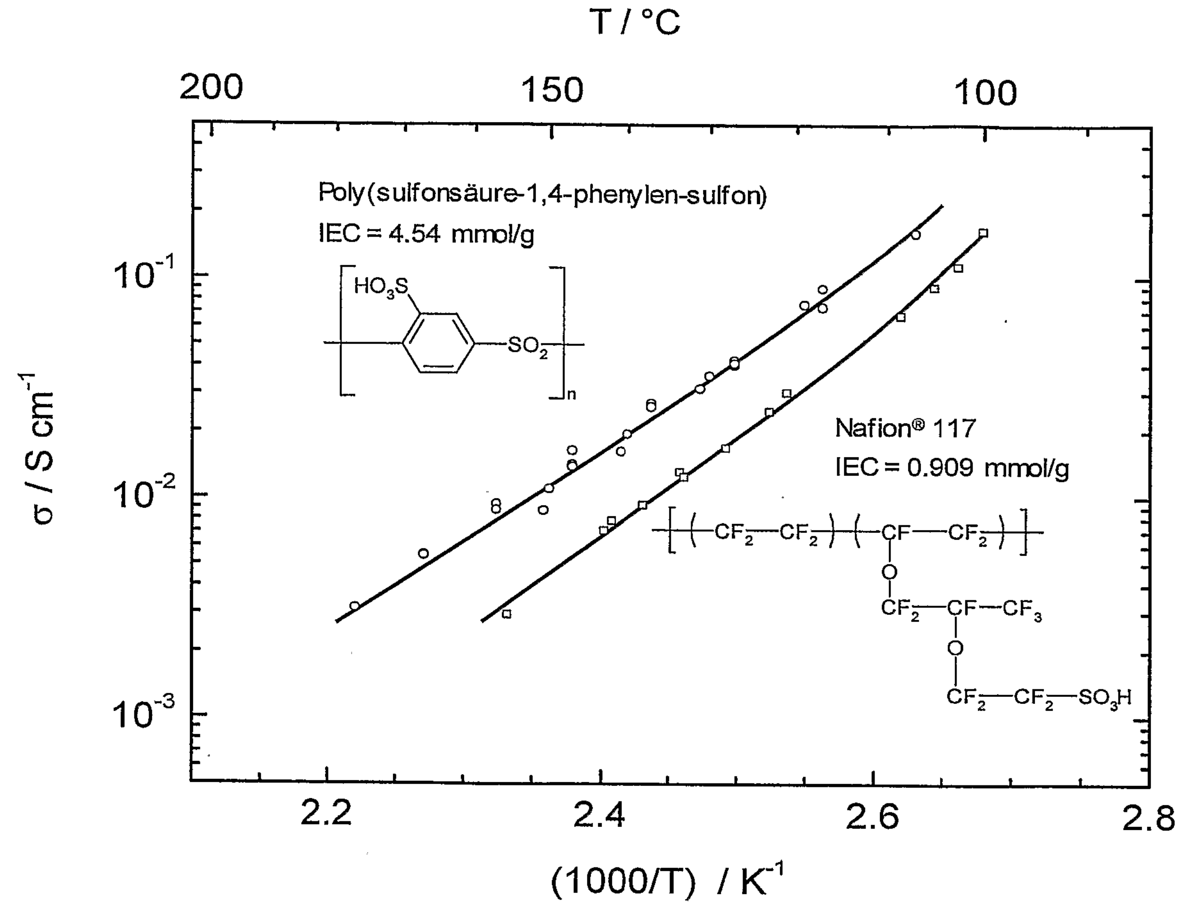
T / °C
200
150
100
10-1
10-2
10-3
σ / S cm-1
Poly(sulfonsäure-1,4-phenylen-sulfon)
IEC = 4.54 mmol/g
Nafion® 117
IEC = 0.909 mmol/g
2.2
2.4
2.6
2.8
(1000/T) / K-1

Fig. 1

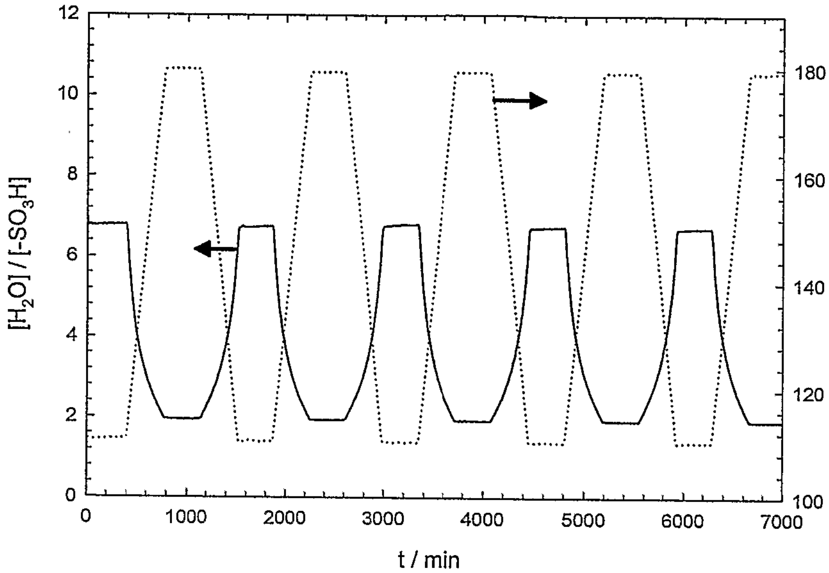


Nafion® 117

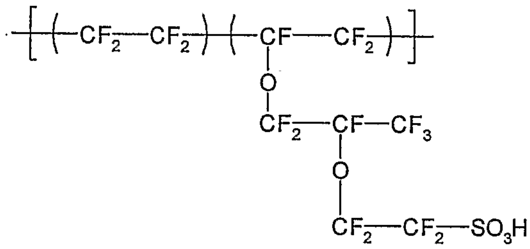

Fig. 2A

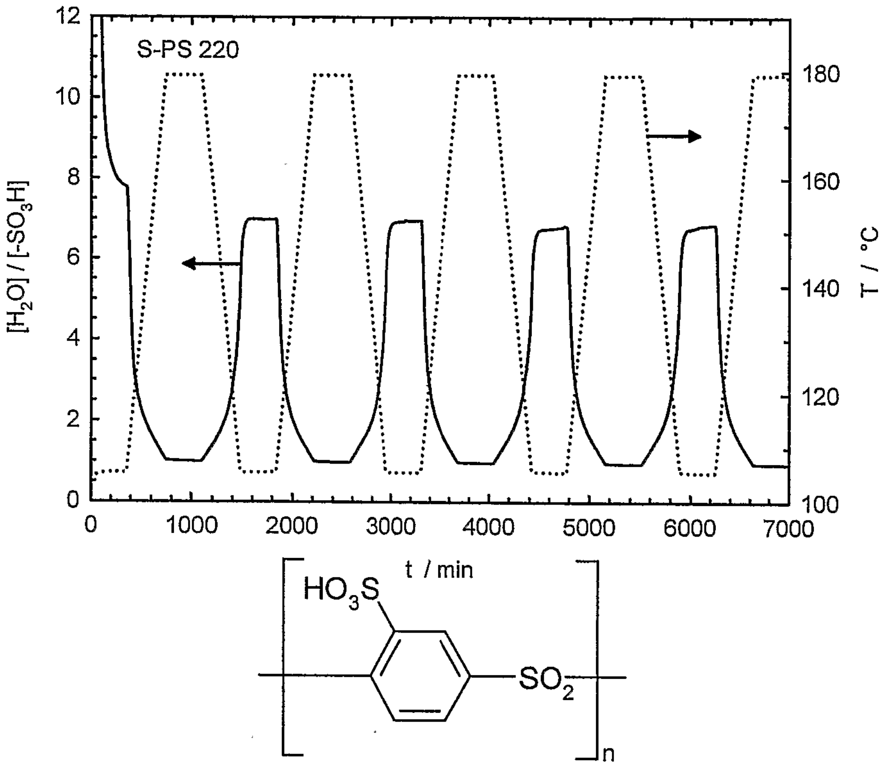
S-PS 220
[H2O] / [-SO3H]
T / °C
t / min
0
2
4
6
8
10
12
100
120
140
160
180
0
1000
2000
3000
4000
5000
6000
7000

FIG. 2B

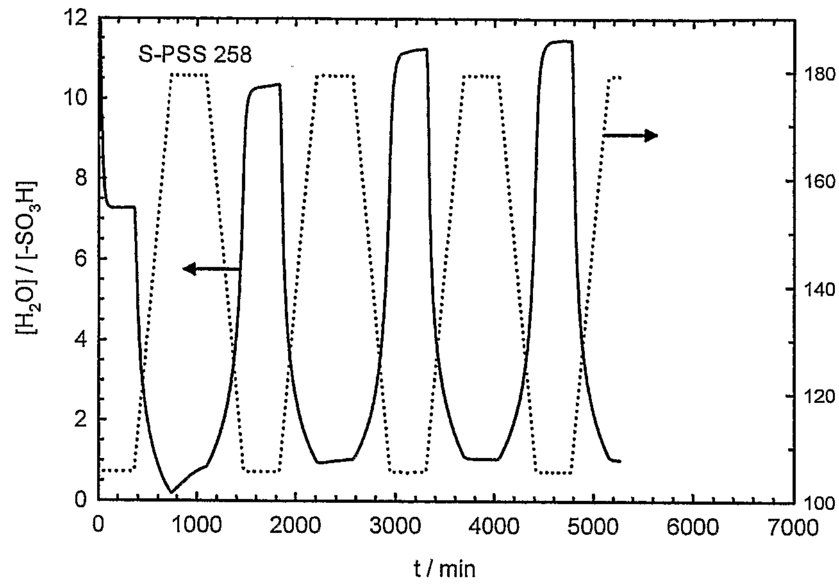
S-PSS 258
[H2O] / [-SO3H]
T / °C
t / min
0
2
4
6
8
10
12
100
120
140
160
180
0
1000
2000
3000
4000
5000
6000
7000

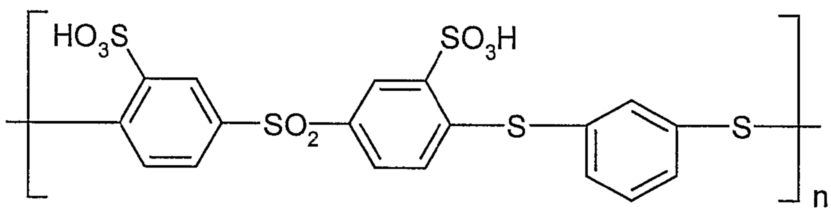

Fig. 3A

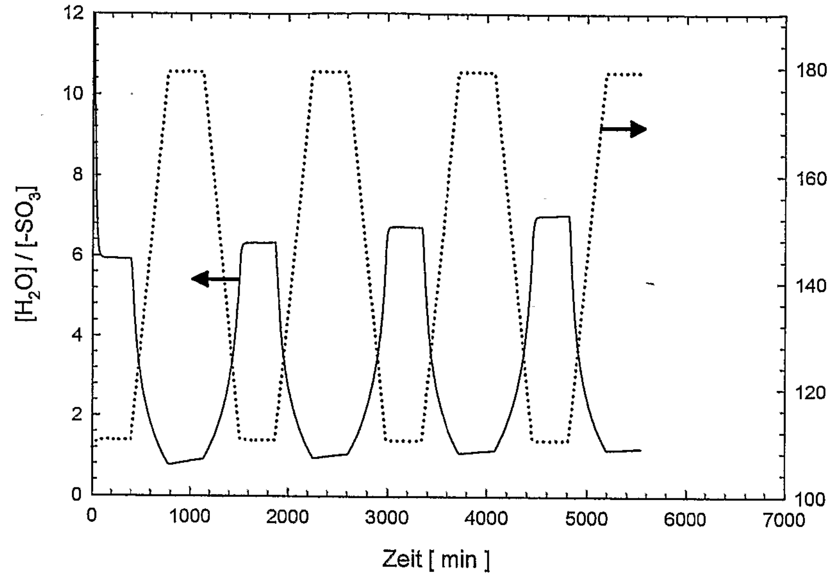
[H2O] / [-SO3]
Temperatur [ °C ]
Zeit [ min ]
0
2
4
6
8
10
12
100
120
140
160
180
0
1000
2000
3000
4000
5000
6000
7000

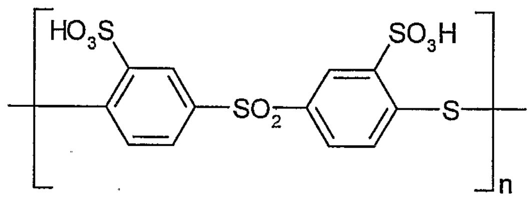

Fig. 3B

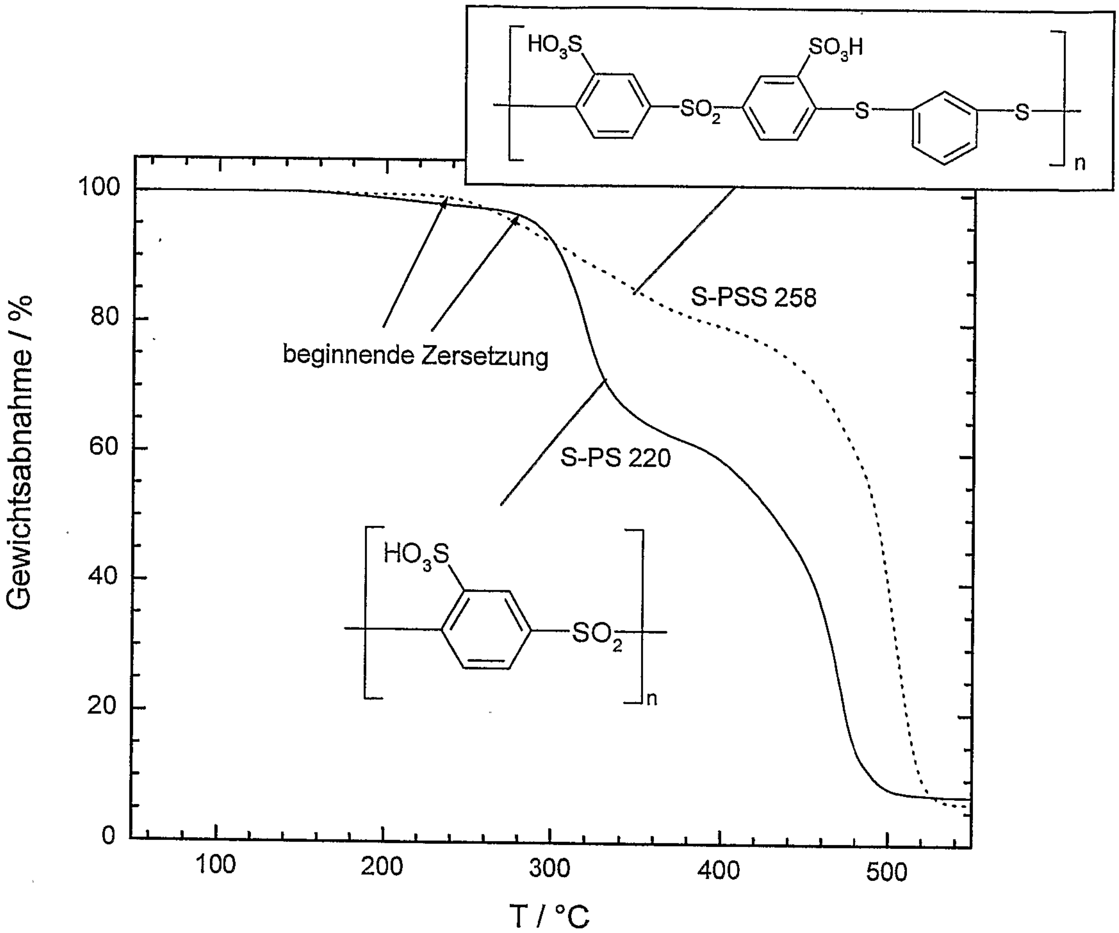
Gewichtsabnahme / %
100
80
60
40
20
0
100
200
300
400
500
T / °C
beginnende Zersetzung
S-PSS 258
S-PS 220

Fig. 4

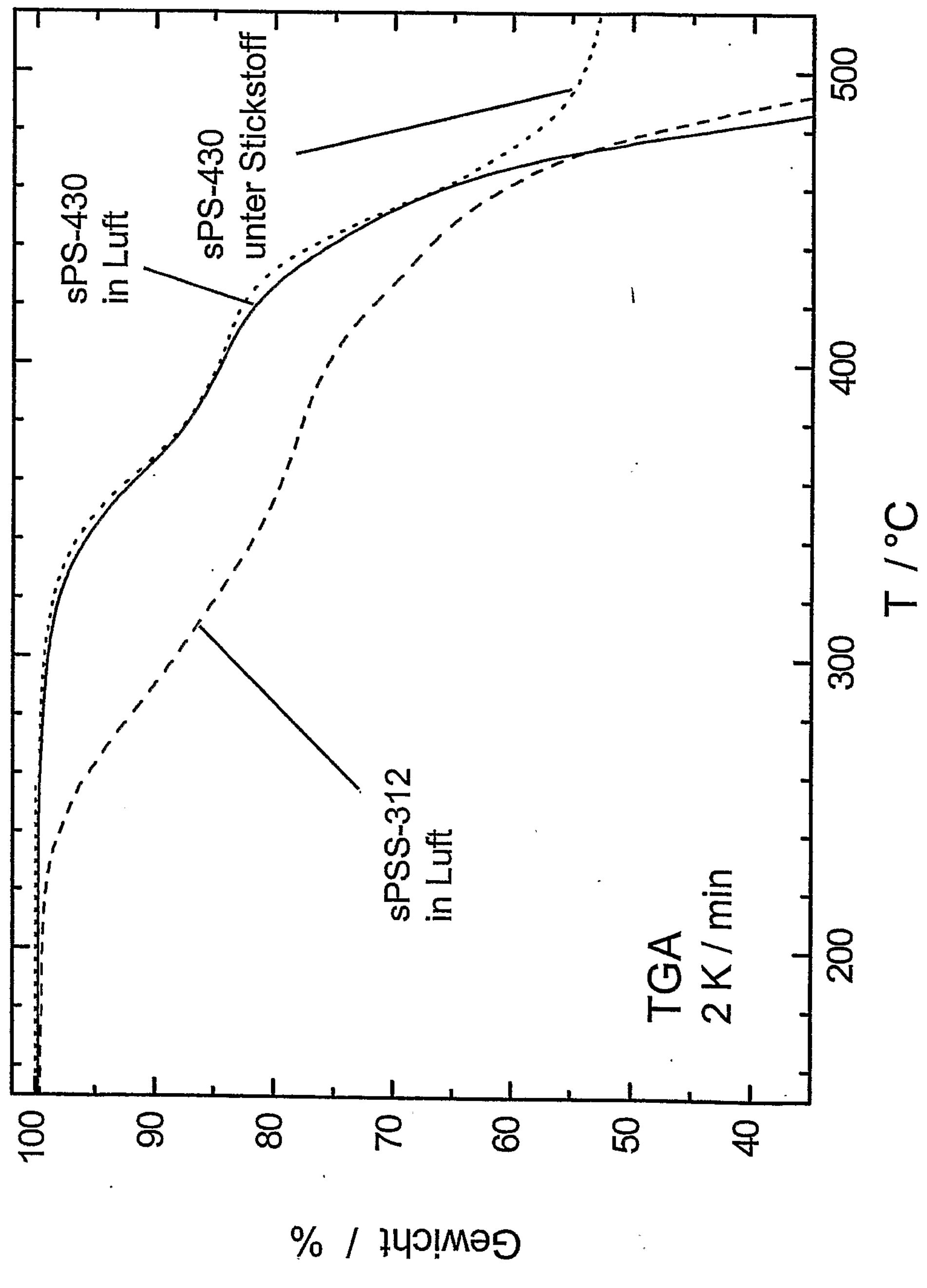
sPS-430
in Luft
sPS-430
unter Stickstoff
sPSS-312
in Luft
TGA
2 K / min
Gewicht / %
100
90
80
70
60
50
40
T / °C
200
300
400
500

Fig. 5A

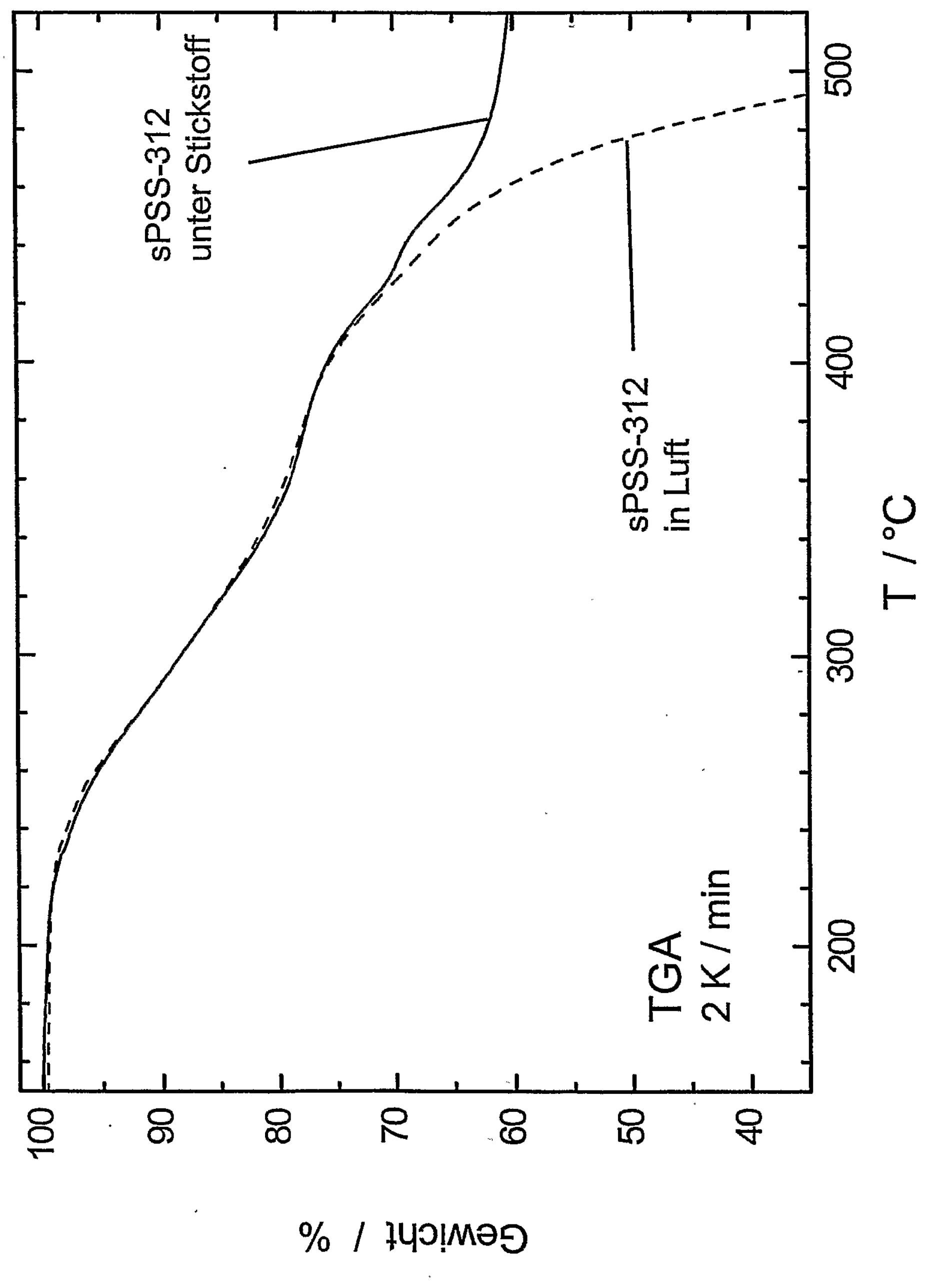

sPSS-312
unter Stickstoff
sPSS-312
in Luft
TGA
2 K / min
Gewicht / %
100
90
80
70
60
50
40
200
300
400
500
T / °C


Fig. 5B

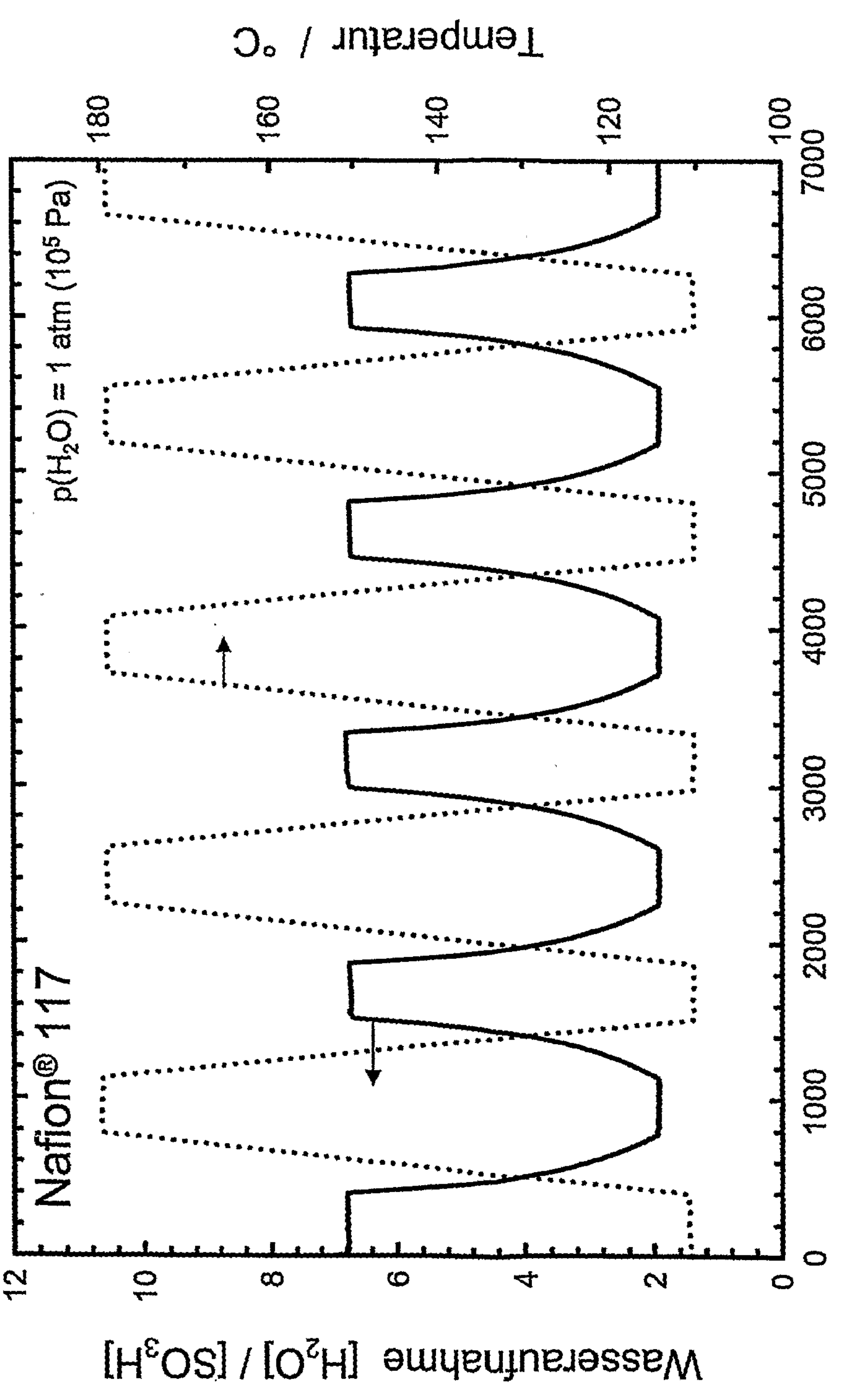


Nafion® 117

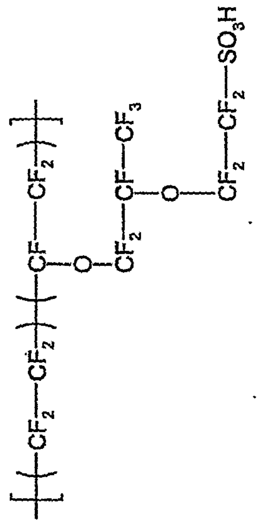

Fig. 6A

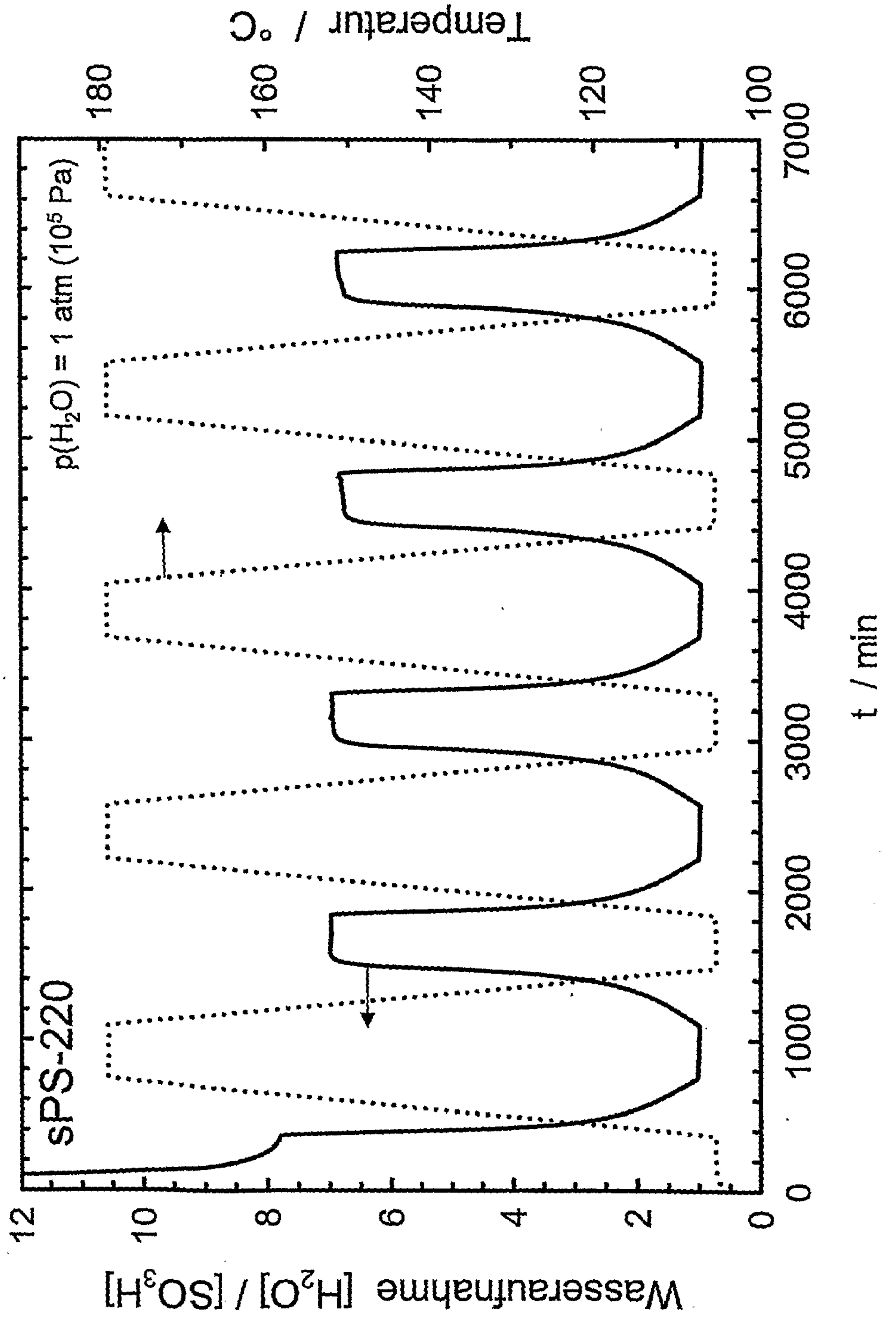
sPS-220
p($H_2O$) = 1 atm ($10^5$ Pa)
Temperatur / °C
180
160
140
120
100
Wasseraufnahme [$H_2O$] / [$SO_3H$]
12
10
8
6
4
2
0
t / min
0
1000
2000
3000
4000
5000
6000
7000

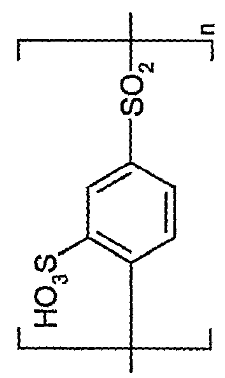

Fig. 6B

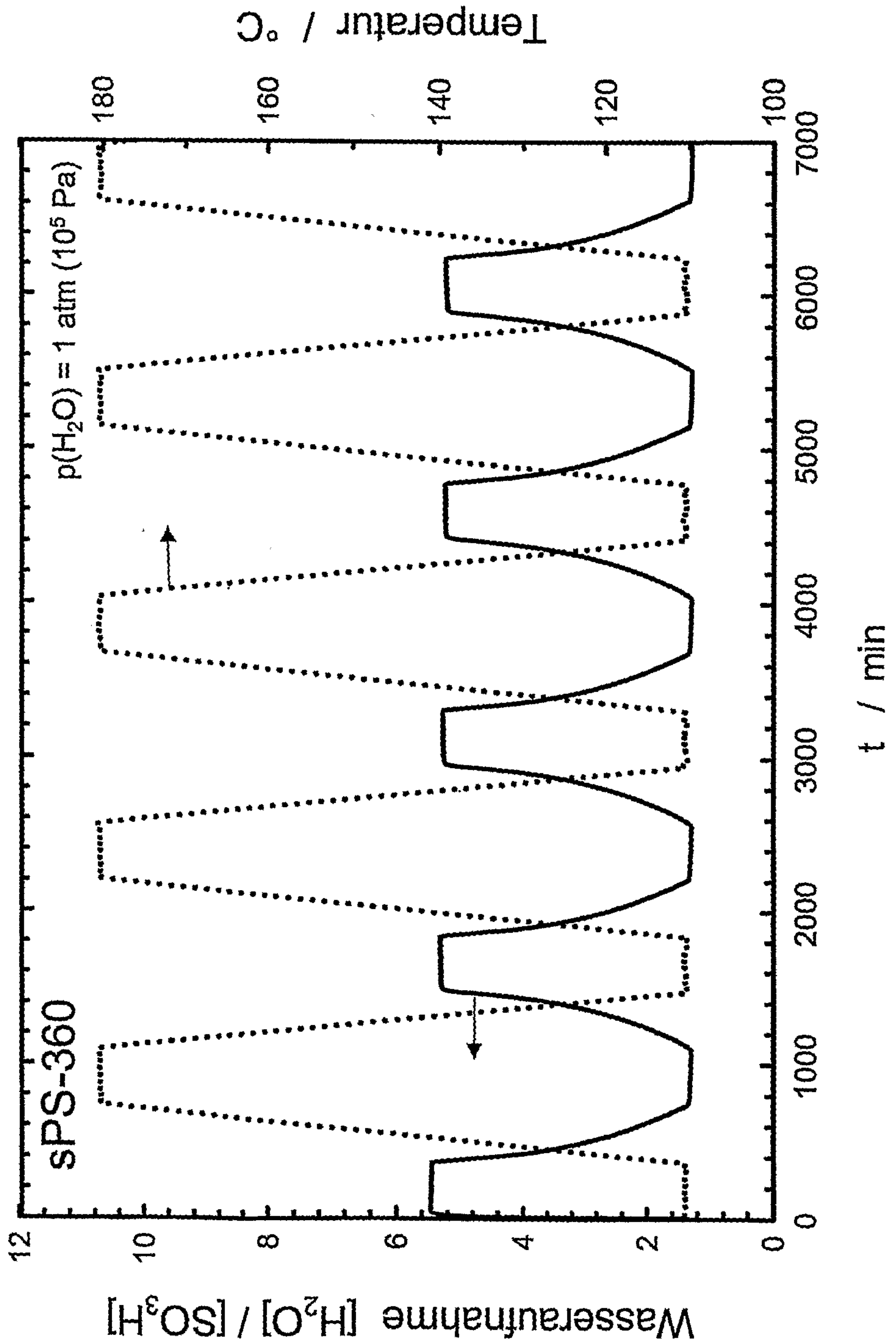
sPS-360
p(H2O) = 1 atm (10^5 Pa)
Temperatur / °C
180
160
140
120
100
t / min
0
1000
2000
3000
4000
5000
6000
7000
Wasseraufnahme [H2O] / [SO3H]
0
2
4
6
8
10
12

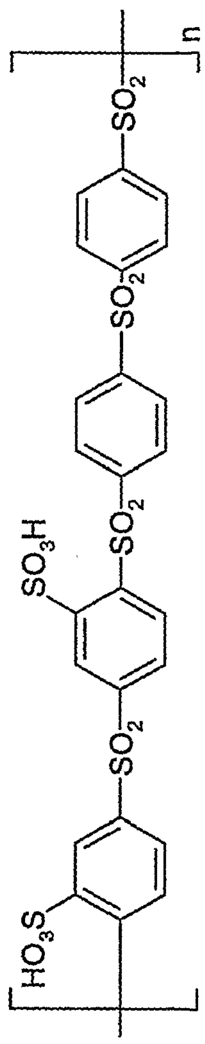

Fig. 6C

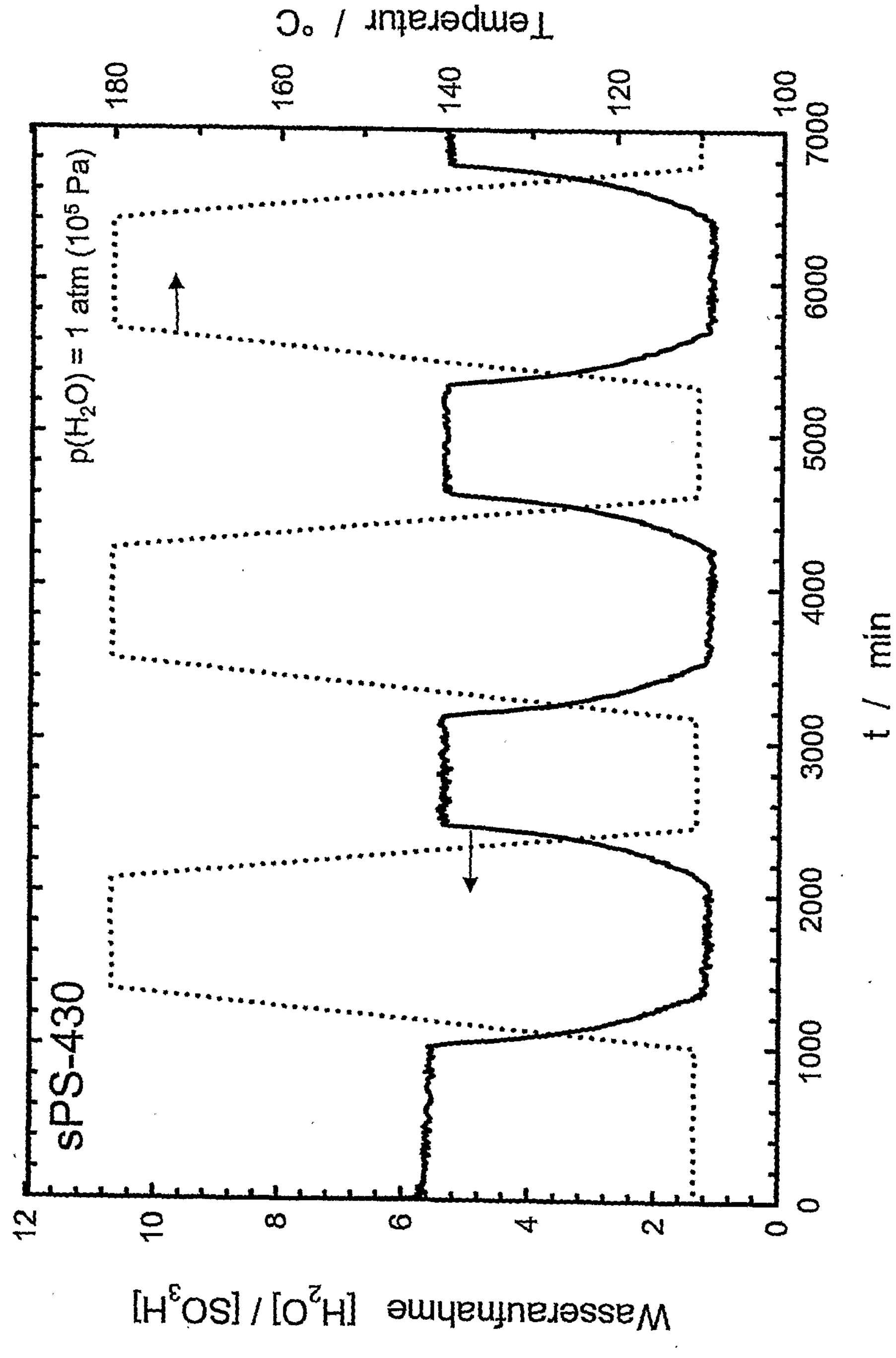
sPS-430
p(H2O) = 1 atm (10^5 Pa)
Temperatur / °C
Wasseraufnahme [H2O] / [SO3H]
t / min
0
1000
2000
3000
4000
5000
6000
7000
0
2
4
6
8
10
12
100
120
140
160
180

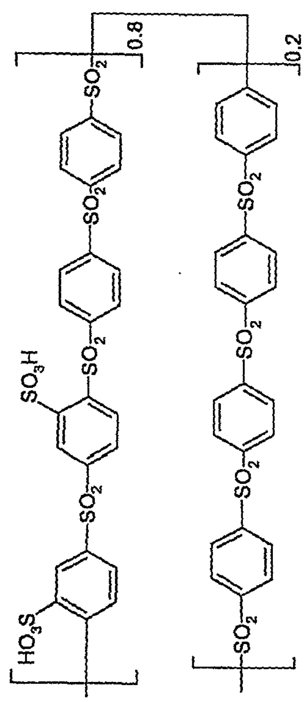

Fig. 6D

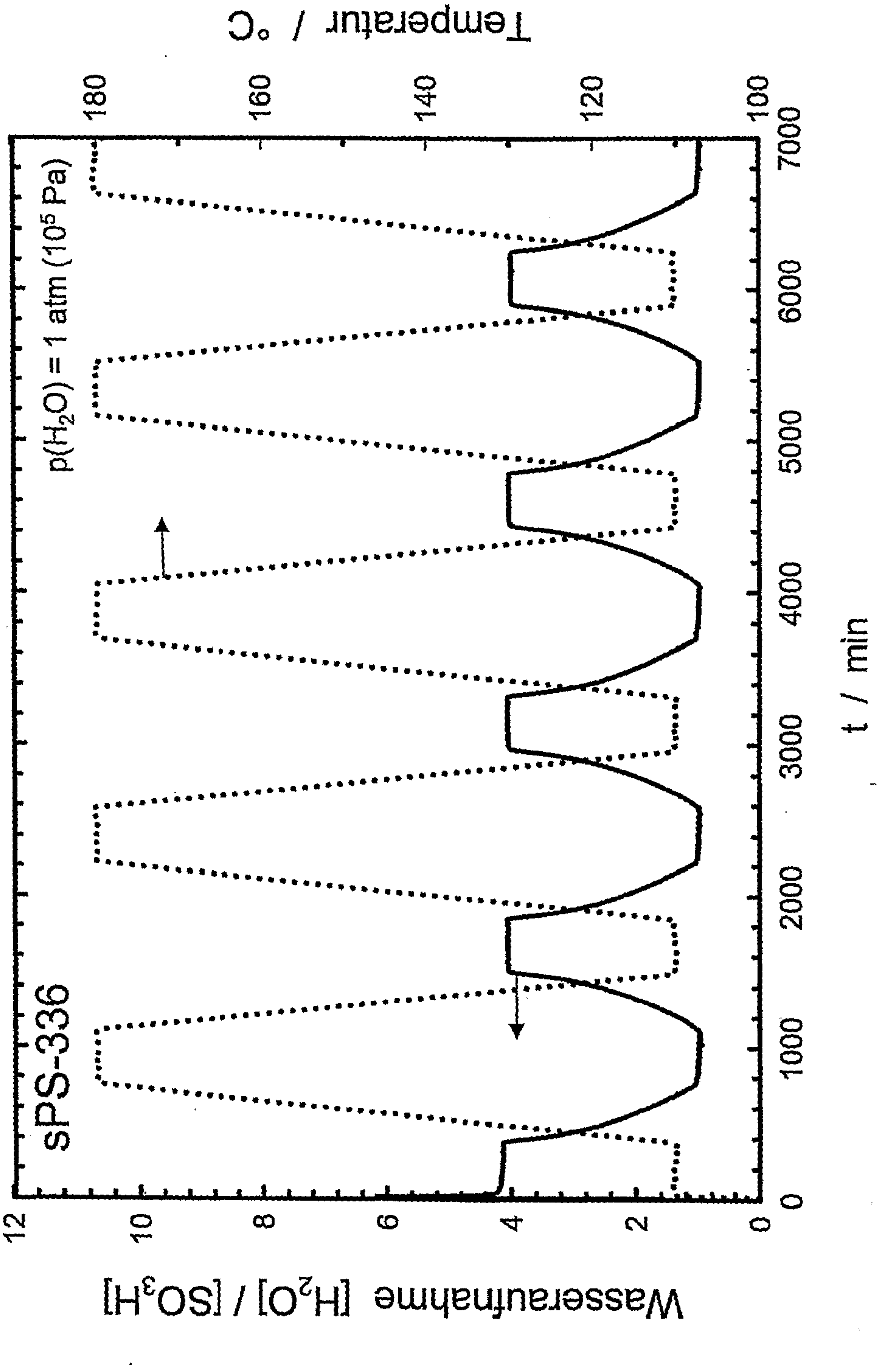
sPS-336
p($H_2O$) = 1 atm ($10^5$ Pa)
Temperatur / °C
180
160
140
120
100
t / min
0
1000
2000
3000
4000
5000
6000
7000
Wasseraufnahme [$H_2O$] / [$SO_3H$]
12
10
8
6
4
2
0

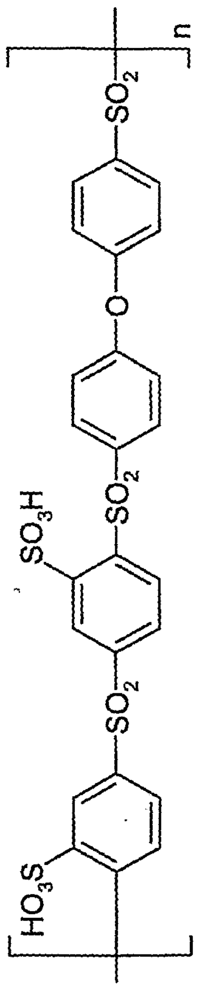

Fig. 6E

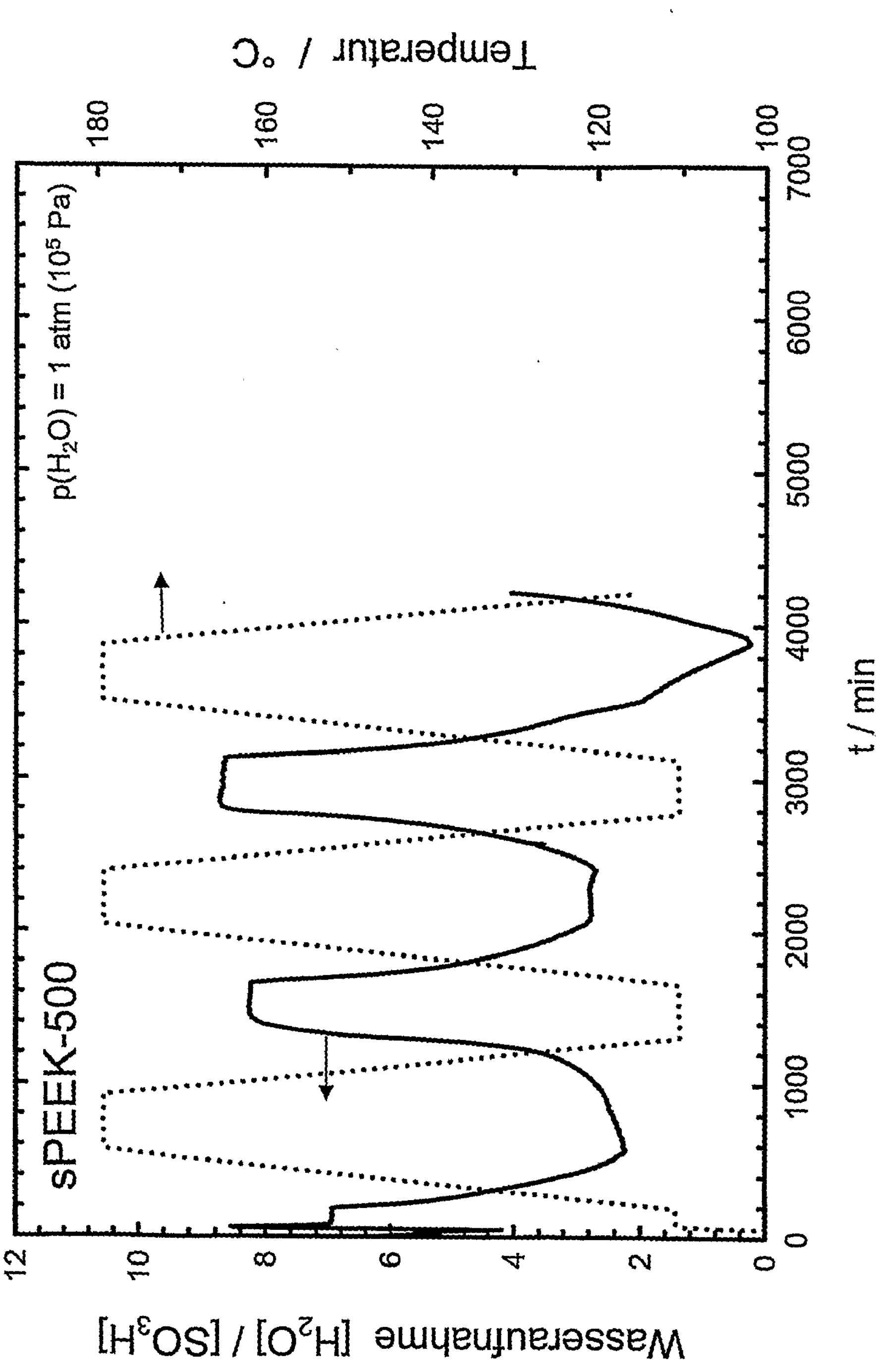


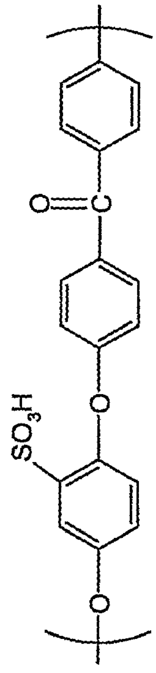

s-PEEK (IEC = 2.0 mmol/g)

Fig. 6F

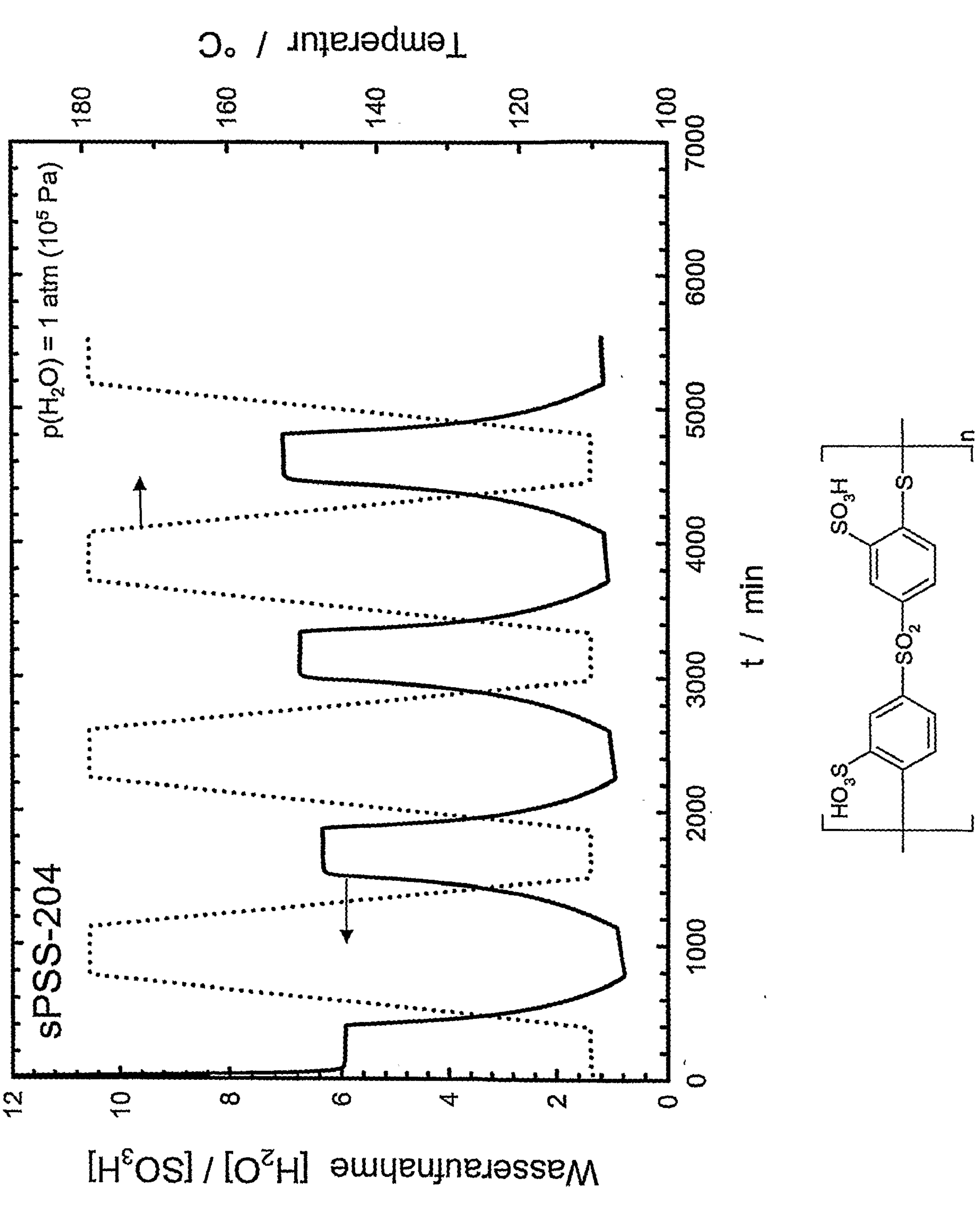
sPSS-204
p($H_2O$) = 1 atm ($10^5$ Pa)
Wasseraufnahme [$H_2O$] / [$SO_3H$]
Temperatur / °C
t / min
0
1000
2000
3000
4000
5000
6000
7000
0
2
4
6
8
10
12
100
120
140
160
180

Fig. 6G

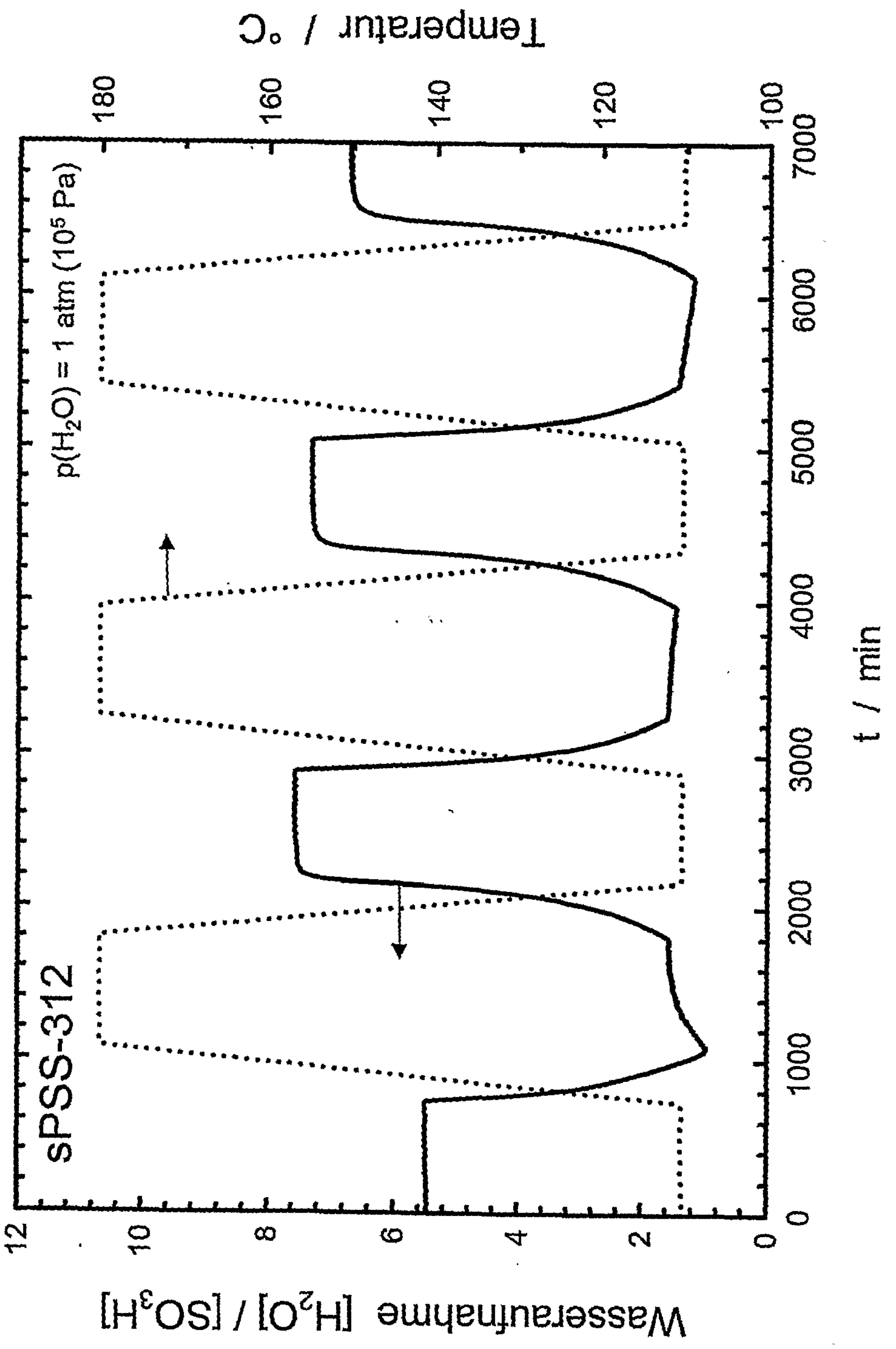
sPSS-312
p(H2O) = 1 atm (10^5 Pa)
Temperatur / °C
180
160
140
120
100
t / min
0
1000
2000
3000
4000
5000
6000
7000
Wasseraufnahme [H2O] / [SO3H]
0
2
4
6
8
10
12

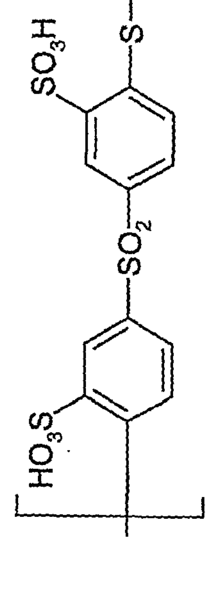

Fig. 6H

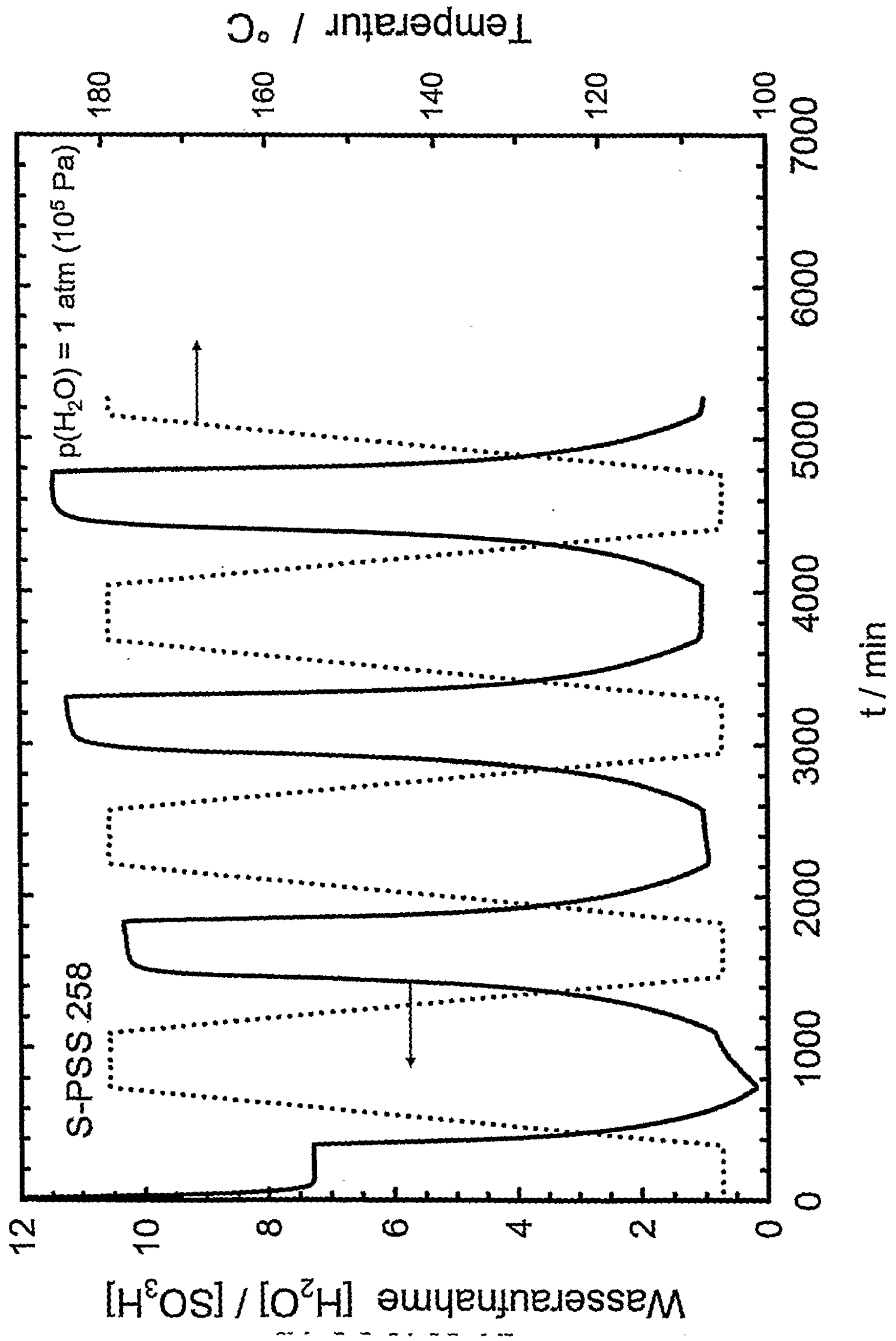
S-PSS 258
p($H_2O$) = 1 atm ($10^5$ Pa)
Wasseraufnahme [$H_2O$] / [$SO_3H$]
Temperatur / °C
t / min
0
2
4
6
8
10
12
0
1000
2000
3000
4000
5000
6000
7000
100
120
140
160
180

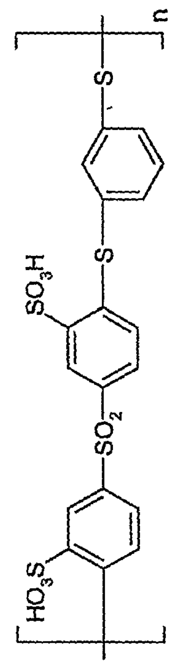

Fig. 6l

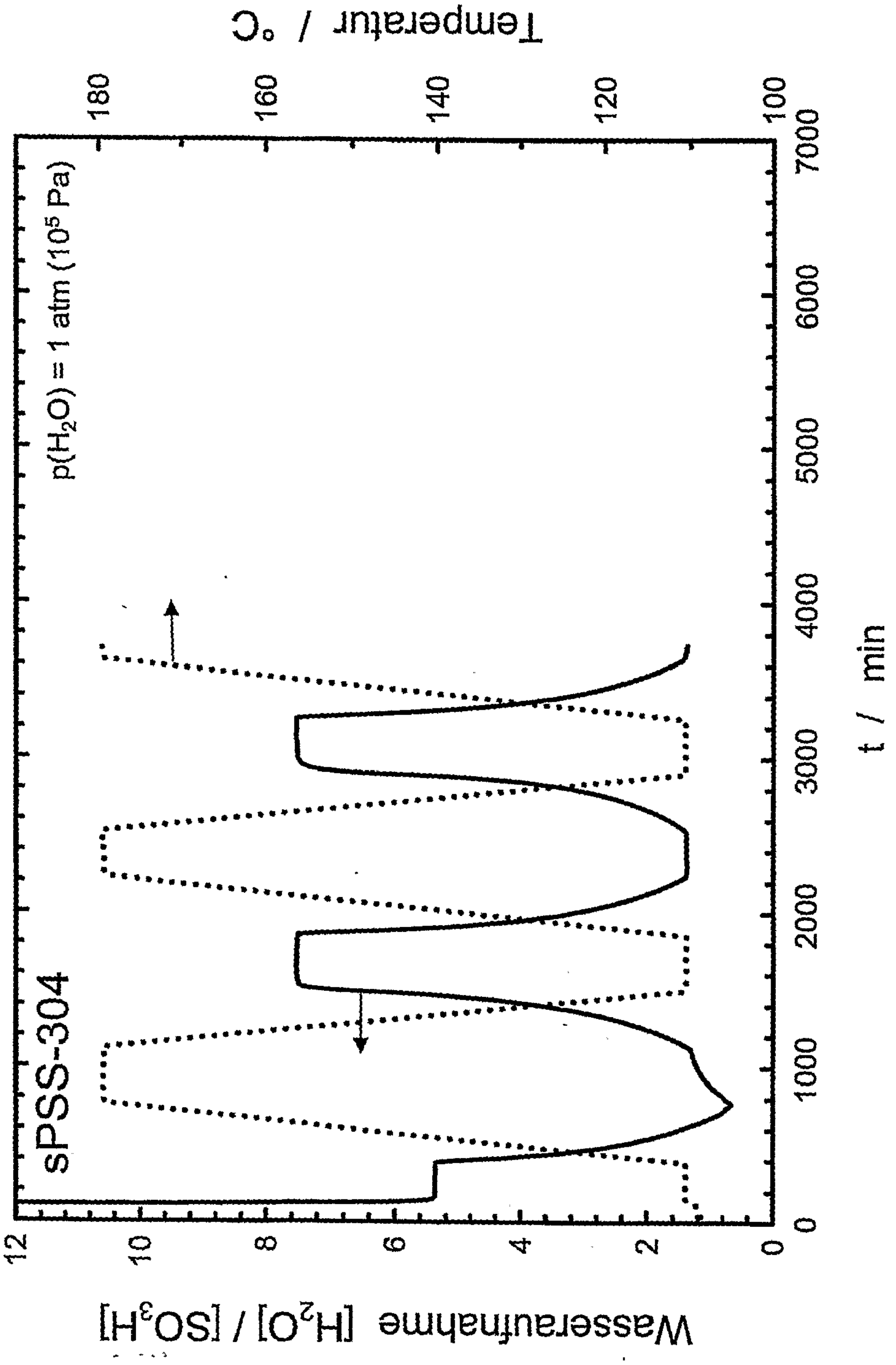
sPSS-304
p(H2O) = 1 atm (10^5 Pa)
Wasseraufnahme [H2O] / [SO3H]
0
2
4
6
8
10
12
t / min
0
1000
2000
3000
4000
5000
6000
7000
Temperatur / °C
100
120
140
160
180

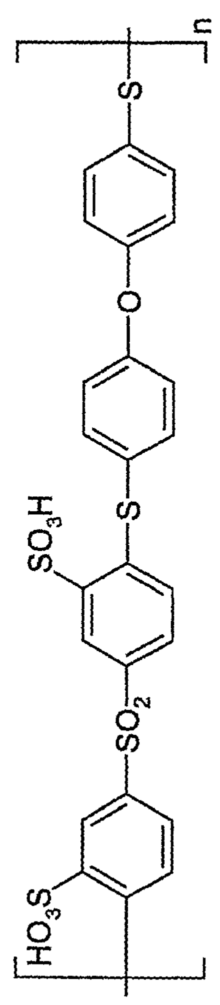

Fig. 6J

TGA unter $H_2O$ Atmosphäre

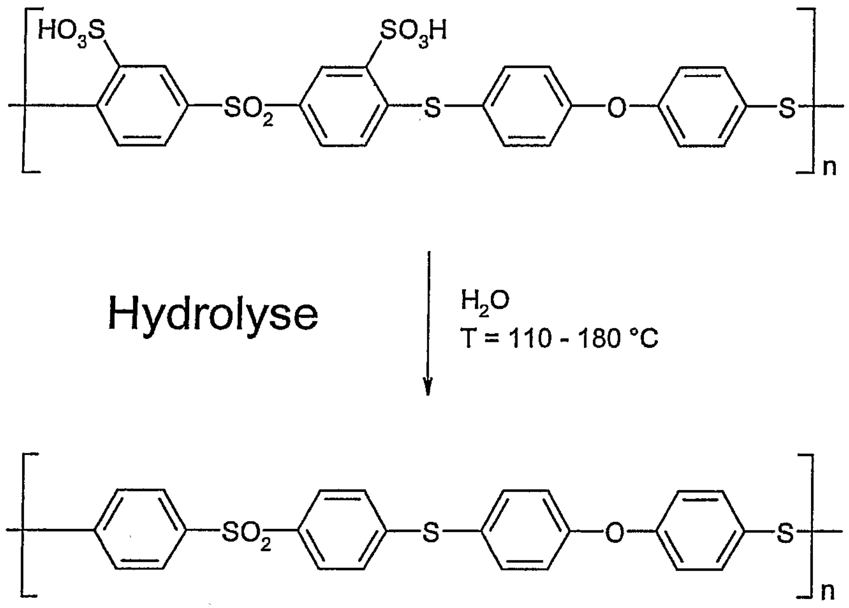


$^{13}C$ NMR Spektrum

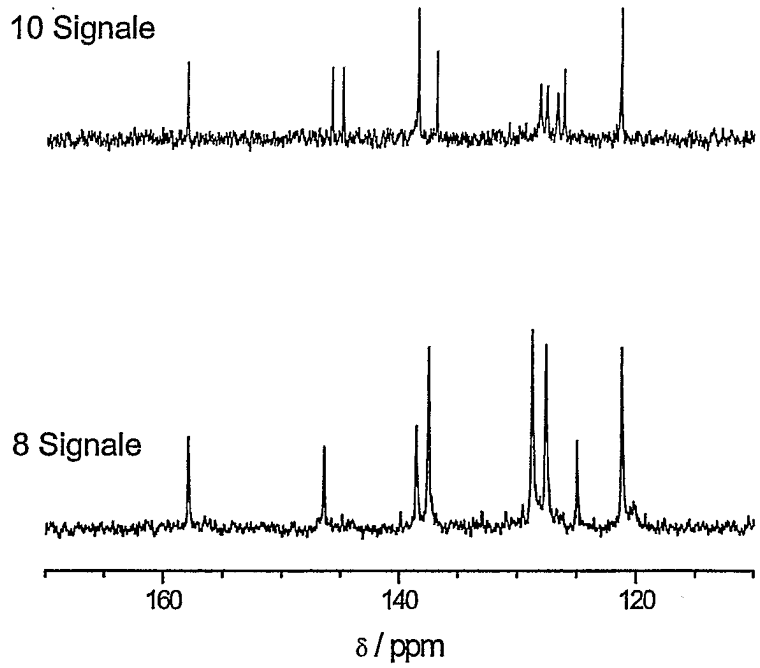


Fig. 7

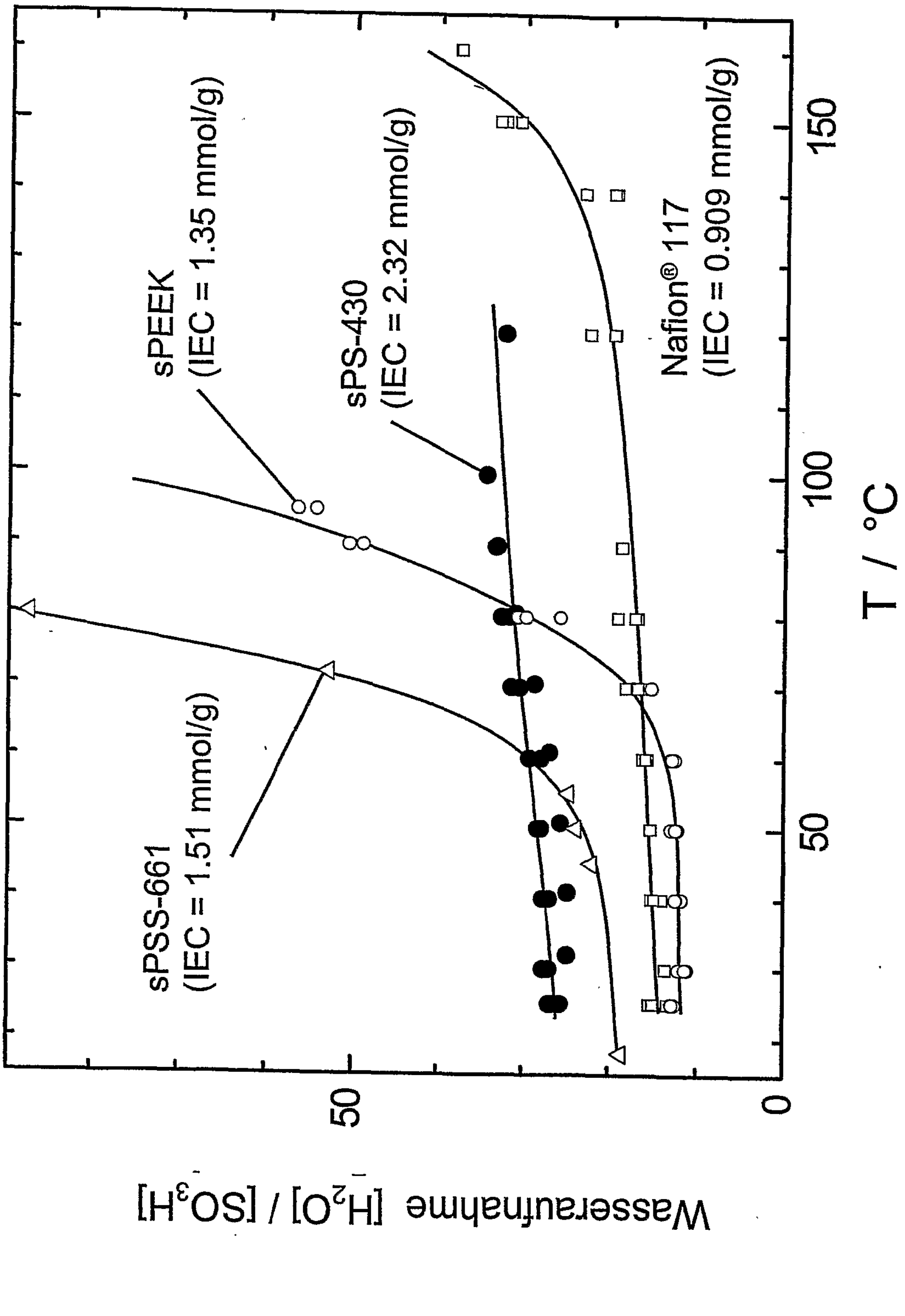
sPEEK
(IEC = 1.35 mmol/g)
sPS-430
(IEC = 2.32 mmol/g)
Nafion® 117
(IEC = 0.909 mmol/g)
sPSS-661
(IEC = 1.51 mmol/g)
50
100
150
T / °C
0
50
Wasseraufnahme [$H_2O$] / [$SO_3H$]

Fig. 8

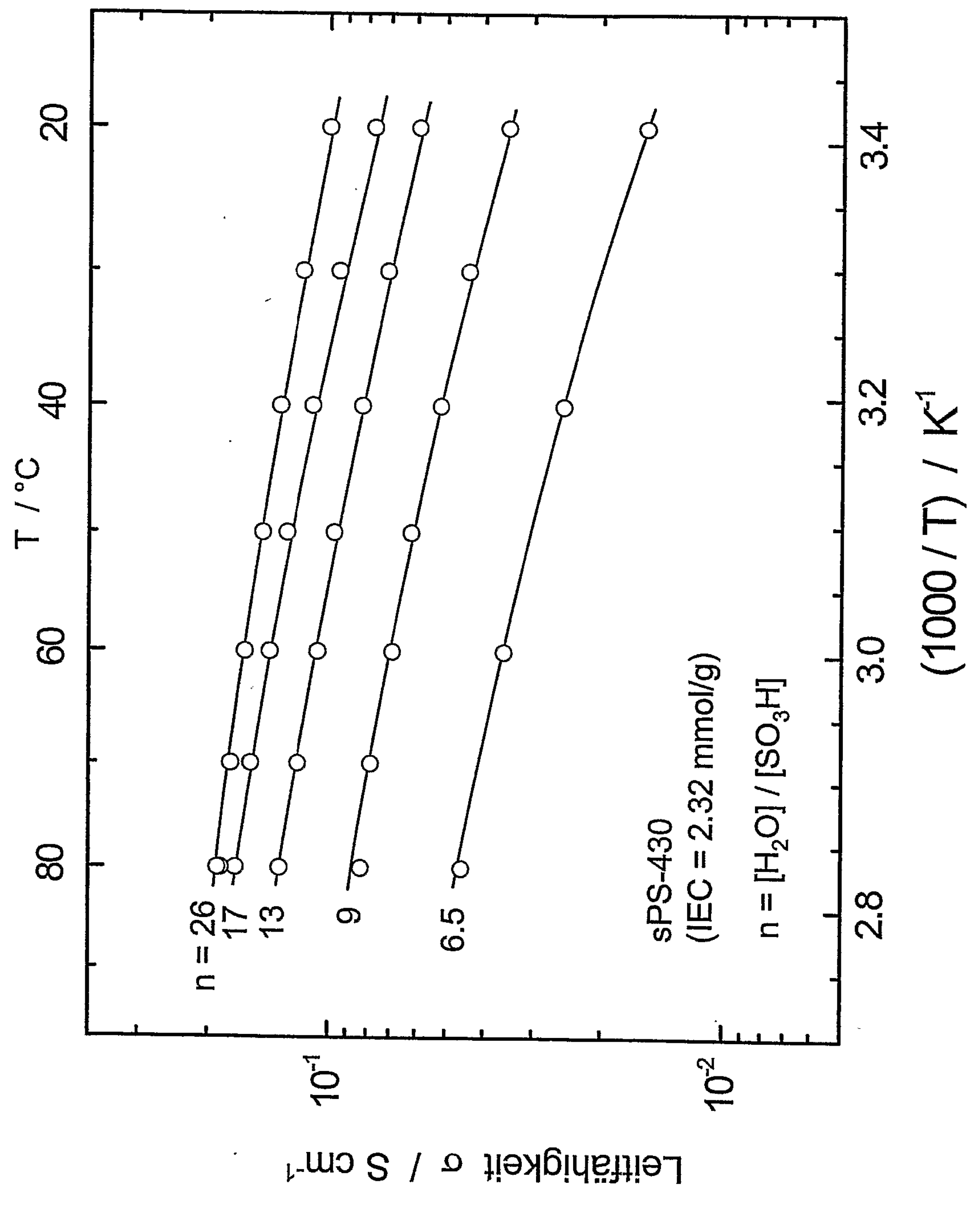
T / °C
20
40
60
80
n = 26
17
13
9
6.5
sPS-430
(IEC = 2.32 mmol/g)
n = [$H_2O$] / [$SO_3H$]
2.8
3.0
3.2
3.4
(1000 / T) / $K^{-1}$
Leitfähigkeit σ / S $cm^{-1}$
$10^{-1}$
$10^{-2}$

Fig. 9

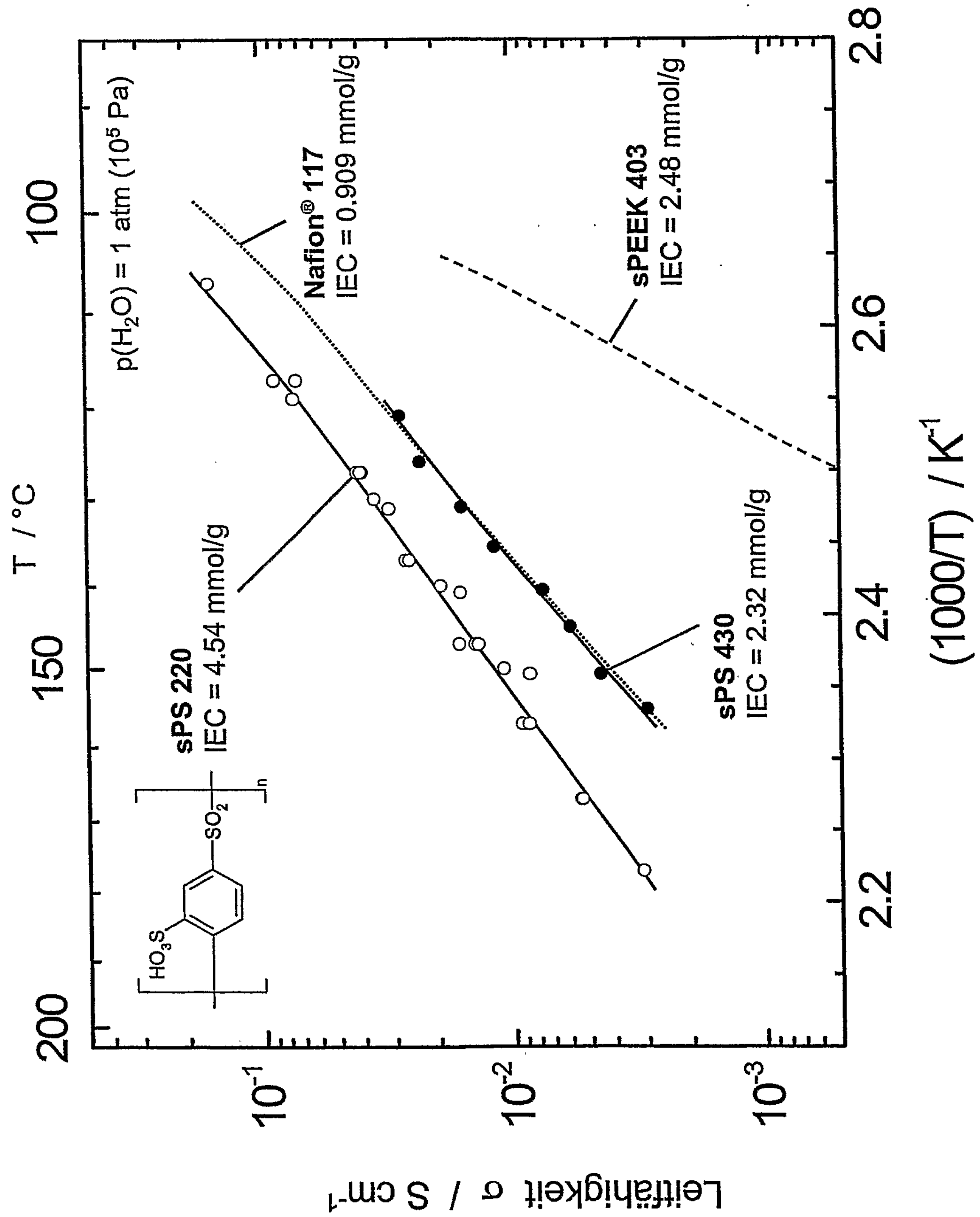
T / °C
200
150
100
p($H_2O$) = 1 atm ($10^5$ Pa)
Nafion® 117
IEC = 0.909 mmol/g
sPEEK 403
IEC = 2.48 mmol/g
sPS 220
IEC = 4.54 mmol/g
sPS 430
IEC = 2.32 mmol/g
$HO_3S$
$SO_2$
n
$10^{-1}$
$10^{-2}$
$10^{-3}$
Leitfähigkeit σ / S $cm^{-1}$
2.2
2.4
2.6
2.8
(1000/T) / $K^{-1}$

Fig. 10

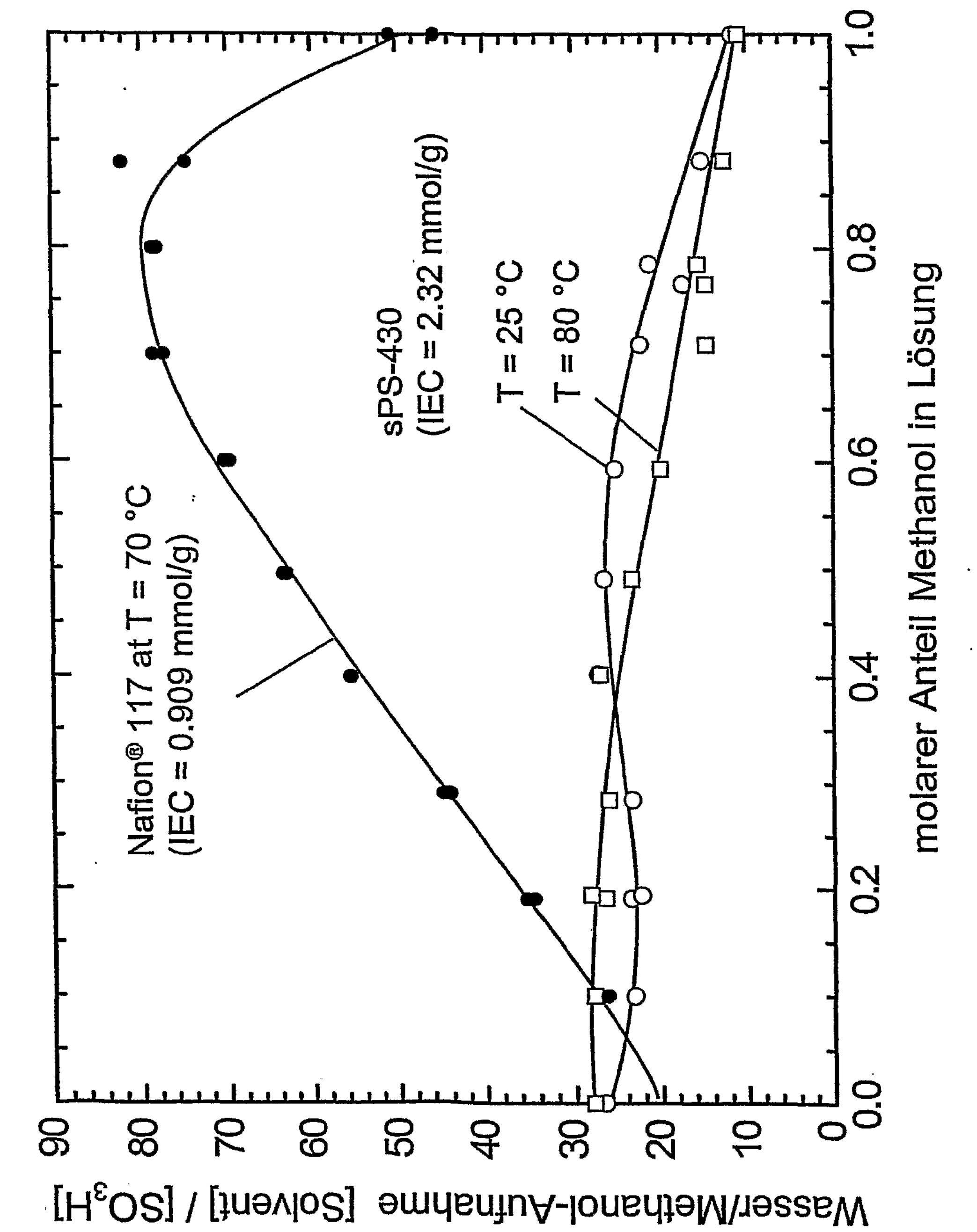
Wasser/Methanol-Aufnahme [Solvent] / [$SO_3H$]
molarer Anteil Methanol in Lösung
Nafion® 117 at T = 70 °C
(IEC = 0.909 mmol/g)
sPS-430
(IEC = 2.32 mmol/g)
T = 25 °C
T = 80 °C
0
10
20
30
40
50
60
70
80
90
0.0
0.2
0.4
0.6
0.8
1.0

Fig. 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1938806 A1
- US 4380598 A, von L.M. Robeson, M. Matzner
- US 6020442 A
- US 6013761 A
- US 5496916 A
- US 5496917 A


### In der Beschreibung aufgeführte Nicht-Patentliteratur


- Handbook of Fuel Cells - Fundamentals, Technology and Applications. John WILEY & Sons, 2003, vol. 3
- **VON Q. LI ; R. HE ; J.O. JENSEN ; N.J. BJERRUM.** *Chem. Mater.,* 2003, vol. 15, 4896
- **VON M.A. HICKNER ; H. GHASSEMI ; Y.S. KIM ; J.E. MCGRATH.** *Chem. Rev.,* 2004, vol. 104, 4587
- **VON K.D. KREUER ; S.J. PADDISON ; E. SPOHR ; M. SCHUSTER.** *Chem. Rev.,* 2004, vol. 104, 4637
- **F. WANG ; M. HICKNER ; Y.S. KIM ; T.A. ZAWODZINSKI ; J.E. MCGRATH.** *J. Membr. Sci.,* 2002, vol. 197, 231
- **T.D. DANG ; Z. BAI ; M.J. DALTON ; E. FOSSUM.** *Polymer Preprints,* 2004, vol. 45, 22
- **Z. BAI ; L.D. WILLIAMS ; M.F. DURSTOCK ; T.D. DANG.** *olymer Preprints,* 2004, vol. 45, 60
- **K.B. WILES ; V.A. BHANU ; F. WANG ; M.A. HICKNER ; J.E. MCGRATH.** *Polymer Preprints,* 2003, vol. 44, 1089
- **F. WANG ; J. MECHAM ; W. HARRISON ; J.E. MCGRATH.** *Polymer Preprints,* 2000, vol. 41, 1401
- **K.B. WILES ; V.A. BHANU ; F. WANG ; J.E. MCGRATH.** *Polymer Preprints,* 2002, vol. 43, 993
- **K.B. WILES ; C.M. DE DIEGO ; J.E. MCGRATH.** *Polymer Preprints,* 2004, vol. 45, 724
- **VON M. UDEA ; H. TOYOTA ; T. OCHI ; J. SUGIYAMA ; K. YONETAKE ; T. MASUKO ; T. TERAMOTO.** *J. Polym. Sci., Polym. Chem.,* 1993, vol. 31, 853
- **F. WANG ; M. HICKNER ; Q. JI ; W. HARRISON ; J. MECHAM ; T.A. ZAWODZINSKI ; J.E. MCGRATH.** *Macromol. Symp.,* 2001, vol. 175, 387
- **W. HARRISON ; F. WANG ; J.B. MECHAM ; V. BHANU ; M. HILL ; Y.S. KIM ; J.E. MCGRATH.** *J. Polym. Sci., Polym. Chem.,* 2003, vol. 41, 2264
- **F. WANG ; J. LI ; T. CHEN ; J. XU.** *Polymer,* 1999, vol. 40, 795
- **F. WANG ; T. CHEN ; J. XU.** *Macromol. Chem. Phys.,* 1998, vol. 199, 1421
- **D.R. ROBELLO ; A. ULMAN ; E. URANKAR.** *Macromol.,* 1993, vol. 26, 6718
- **H.M. COLQUHOUN ; P. ALDRED ; F.H. KOHNKE ; P.L. HERBERTSON ; I. BAXTER ; D.J. WILLIAMS.** *Macromol,* 2002, vol. 35, 1685
- **J. O. MORLEY ; D. W. ROBERTS.** *J. Org. Chem.,* 1997, vol. 62, 7358-7363
- **Z. BAI ; L.D. WILLIAMS ; M.F. DURSTOCK ; T.D. DANG.** *Polymer Preprints,* 2004, vol. 45, 60